# EUROPEAN PATENT SPECIFICATION

(11) **EP 4 118 847 B1**
(45) Date of publication and mention of the grant of the patent: **13.05.2026**
(21) Application number: 21767783.0
(22) Date of filing: 08.03.2021
(51) Int. Cl.: H04W 4/029, H04W 4/80, H04W 12/06, H04W 64/00, H04W 84/12, H04W 88/08

(54) **PASSIVE ASSET TRACKING USING OBSERVATIONS OF PSEUDO WI-FI ACCESS POINTS**
PASSIVE ANLAGENVERFOLGUNG MITHILFE VON BEOBACHTUNGEN VON PSEUDO-WIFI-ZUGANGSPUNKTEN
SUIVI PASSIF DE RESSOURCES À L'AIDE D'OBSERVATIONS DE PSEUDO-POINTS D'ACCÈS WI-FI

(30) Priority: 09.03.2020 US 202016812471; 09.03.2020 US 202016812612; 22.06.2020 US 202016907806; 17.08.2020 WO PCT/US2020/046657; 17.08.2020 WO PCT/US2020/046662; 17.08.2020 WO PCT/US2020/046667; 16.11.2020 US 202017099749; 23.11.2020 US 202017102151; 23.11.2020 US 202017102429
(43) Date of publication of application: 18.01.2023
(73) Proprietor: Troverlo, Inc., Anderson, TX 77830 (US)
(72) Inventor: CATALENA, Cody, College Station, Texas 77845 (US)
(74) Representative: Strachan, Victoria Jane
(86) International application number: PCT/US2021/021391
(87) International publication number: WO 2021/183449

(56) References cited:
- WO-A1-2019/060954
- US-A1- 2014 204 926
- US-A1- 2015 312 404
- US-A1- 2018 069 650
- US-A1- 2019 050 806
- US-A1- 2019 174 289
- US-A1- 2019 327 161
- US-B1- 10 728 709

## Description

### BACKGROUND OF THE INVENTION

Wireless networking refers to the wireless exchange of information between network nodes with electromagnetic signaling. Standards setting organizations, such as the Institute of Electrical and Electronics Engineers ("IEEE"), coordinate, develop, promulgate, and maintain technical standards that facilitate implementation of wireless network standards that ensure compatibility between competing original equipment manufacturers and thereby seek to achieve widespread adoption of their respective technologies. The ubiquitous IEEE 802.11 standard specifies a Wireless Local Area Network ("WLAN") technology, commonly referred to as Wi-Fi, that facilitates wireless communication between devices and often serves as a bridge to a network carrying Internet Protocol traffic. Wi-Fi typically operates at either the 2.4 GHz or 5 GHz frequency bands in the radio portion of the electromagnetic spectrum.

In its first iterations, the IEEE 802.11a/b standards specified transfer rates of up to 11 Mbps at a range of up to 150 feet. The IEEE 802.11g amendment implemented various improvements, including Orthogonal Frequency Division Multiplexing ("OFDM"), to increase transfer rates to up to 54 Mbps while maintaining backward compatibility with IEEE 802.11b. The IEEE 802.11n amendment added Multiple Input Multiple Output ("MIMO") functionality where multiple transmitters and receivers operate simultaneously at one or both ends of the link to facilitate transfer rates of up to 300 Mbps and even higher if additional antennae are used. The IEEE 802.11ac amendment added support for spatial streams and increased channel widths to substantially increase transfer rates from 433 Mbps to several Gbps and works exclusively in the less crowded 5 GHz frequency band and at a range of up to 300 feet or more.

The IEEE 802.11 standard remains an evolving technical standard and future amendments will likely seek to increase transfer rates, improve connectivity in challenging environments, and enhance security. As such, Wi-Fi remains the most widely adopted wireless networking standard in the world.

International Patent Application Publication No. WO2019/060954 describes a wireless electronic device that executes the steps of: (a) receiving, from a plurality of electronic devices, a unique identifier associated with each electronic device; (b) identifying, from the plurality of electronic devices, at least one listening agent device; and (c) sending scan data to the listening agent device. The scan data includes the unique identifiers received from one or more of the plurality of electronic devices other than the listening agent device, and a unique tracking identifier associated with the wireless electronic device. The steps (a) to (c) are performed using a wireless communications protocol, such as Wi-Fi or Bluetooth. For Wi-Fi, the unique identifier is received in a first 802.11 management frame of a probe response; and the scan data is sent in a vendor-specific information element (VSIE) of a second 802.11 management frame of a probe request.
US Patent Application Publication No. US2019/327161 describes a cloud based processing system receives location information and health status information of a plurality of beacon devices. The location information indicates real-time locations of the plurality of beacon devices, and the health status information indicates real-time conditions of the plurality of beacon devices. The processing system tracks movements of at least some of the plurality of beacon devices based on the location information and identifies problematic beacon devices based on the health status information.

### BRIEF SUMMARY OF THE INVENTION

The invention is defined by the independent claims. Further embodiments of the invention are defined by the dependent claims.

### BRIEF DESCRIPTION OF THE DRAWINGS

FIG. **1** shows a conventional Wi-Fi wireless network.
FIG. **2A** shows a passive scanning mode as part of the IEEE 802.11 Wi-Fi wireless network discovery process.
FIG. **2B** shows an active scanning mode as part of the IEEE 802.11 Wi-Fi wireless network discovery process.
FIG. **2C** shows a sequence of IEEE 802.11 management frames typically exchanged between a wireless device and a Wi-Fi access point as part of Wi-Fi wireless network discovery process.
FIG. **3A** shows the subtypes of IEEE 802.11 management frames.
FIG. **3B** shows the structure of a conventional IEEE 802.11 management frame representative of the type of management frames transferred between a wireless device and a Wi-Fi access point.
FIG. **4A** shows various technologies that may be used to determine a location of a wireless device and one or more Wi-Fi access points.
FIG. **4B** shows a diagram of a wireless device reporting observations of one or more Wi-Fi access points it encounters to a Wi-Fi AP Database.
FIG. **5** shows a block diagram of a conventional Wi-Fi access point.
FIG. **6** shows a block diagram of a pseudo Wi-Fi access point in accordance with one or more embodiments of the present invention.
FIG. **7** shows an example of a pseudo, spoofed, or emulated, management frame transmitted by a pseudo Wi-Fi access point in accordance with one or more embodiments of the present invention.
FIG. **8** shows a sequence of management frames exchanged between a wireless device and a pseudo Wi-Fi access point as part of Wi-Fi wireless network discovery in accordance with one or more embodiments of the present invention.
FIG. **9** shows an example of an application of passive asset tracking in accordance with one or more embodiments of the present invention.
FIG. **10A** shows a system for passive asset tracking in accordance with one or more embodiments of the present invention.
FIG. **10B** shows an example of observation data reported by a wireless device based on an encounter with a Wi-Fi access point in accordance with one or more embodiments of the present invention.
FIG. **10C** shows an example of asset data stored or generated by an asset tracking database in accordance with one or more embodiments of the present invention.
FIG. **10D** shows an example of a client portal to an asset tracking database in accordance with one or more embodiments of the present invention.
FIG. **11** shows a computing system in accordance with one or more embodiments of the present invention.

### DETAILED DESCRIPTION OF THE INVENTION

One or more embodiments of the present invention are described in detail with reference to the accompanying figures. For consistency, like elements in the various figures are denoted by like reference numerals. In the following detailed description of the present invention, specific details are described in order to provide a thorough understanding of the present invention. In other instances, aspects that are well-known to one of ordinary skill in the art are not described to avoid obscuring the description of the present invention.

Conventional asset tracking systems use dedicated and complicated hardware and software systems to track physical assets, typically within the confines of a fixed location (*e.g*., within a warehouse) or from portal-to-portal of one or more fixed locations (*e.g*., tracking departures from a warehouse and arrivals at a distributor). Some asset tracking systems use simple printed asset tracking tags configured to be optically read by a reading device, such as, for example, a barcode reader or Quick Response ("QR") reader. Other asset tracking systems use asset tracking tags configured to be read by short-range communication devices in the immediate vicinity of the tag using, for example, Near-Field Communication ("NFC"), Bluetooth Low Energy ("BLE"), Radio-Frequency Identification ("RFID"), or other short-range communication technologies. Still other asset tracking systems use asset tracking tags configured to be read at a distance using Long Range ("LoRa") networks or cellular communications. In some cases, the asset tracking system uses asset tracking tags capable of determining their own location using the Global Positioning System ("GPS") and directly reporting their own location to the asset tracking system over a communication network. However, such systems require substantial power, unobstructed access to satellite signals, and communications capabilities to self-report their location.

These conventional asset tracking systems may be referred to as closed-network systems because dedicated hardware and software systems are purposefully deployed and engaged in the asset tracking task. The asset tags must be directly read by a reader or short-range communication device in the immediate vicinity of the tag or the asset tag must be capable of determining its own location and directly reporting its own location to the asset tracking system. Thus, an inherent limitation in conventional closed-network asset tracking systems is the requirement that the tagging, tracking, hardware, and software systems must be intentionally deployed, span the zone of coverage, and purposefully perform and manage the asset tracking task. This requires extensive investment in expensive hardware and software systems and in hiring and training personnel on its usage. Moreover, in a widespread deployment of assets across many sites, perhaps even around the world, it is exceptionally difficult, if even possible, and cost prohibitive to deploy and manage a conventional closed network asset tracking system.

Accordingly, in one or more embodiments of the present invention, a method and system of passive asset tracking uses observations of one or more pseudo Wi-Fi access points to passively track moveable assets. In certain embodiments, a pseudo Wi-Fi access point may be disposed on, attached to, or integrated with a moveable asset and logically associated in an asset tracking database. The moveable asset may be deployed in the field or otherwise used in a typical manner. In contrast to closed-network asset tracking systems, the moveable asset is passively tracked only when its pseudo Wi-Fi access point (logically associated in the asset tracking database) is encountered by a Wi-Fi enabled wireless device (without requiring an awareness on the part of the user of the wireless device that he or she is participating in the asset tracking task). In certain embodiments, when one or more wireless devices come into Wi-Fi signaling range of a pseudo Wi-Fi access point associated with a moveable asset, a wireless device reports its encounter with the pseudo Wi-Fi access point to a Wi-Fi AP Database, typically used to improve location services. The report includes observation data including at least the unique identifying information of the pseudo Wi-Fi access point encountered and location information that may be used to determine the location of the pseudo Wi-Fi access point. In other embodiments, the asset tracking database may receive observation data directly from one or more direct reporting wireless devices that encounter the pseudo Wi-Fi access point and/or indirectly from a Wi-Fi AP Database that receives observation data from one or more indirect reporting wireless devices that encounter the pseudo Wi-Fi access point and report the observation data to the Wi-Fi AP Database. A wireless device is a direct reporting device if it reports directly to the asset tracking database and is an indirect reporting device if it does not report directly to the asset tracking database. The asset tracking database may determine a location of a moveable asset based, at least in part, on observation data of the associated pseudo Wi-Fi access point. In this way, a moveable asset may be deployed anywhere in the world with a pseudo Wi-Fi access point that is not required to associate with any wireless device or provide any network connectivity of any kind. Every smartphone in the world that merely happens to come into Wi-Fi signaling range of the pseudo Wi-Fi access point, even if only temporarily, may anonymously and without awareness participate in the asset tracking task by reporting observation data of the pseudo Wi-Fi access point that the asset tracking database may receive and use to determine the location of the movable asset.

The method and system of passive asset tracking is open-network because it leverages existing infrastructure inherent in smartphones and smartphone operating systems to report the unique identifying information of pseudo Wi-Fi access points they encounter as well as their location for improving the accuracy of location-based services. Advantageously, the Wi-Fi wireless network discovery protocol as well as the inherent Wi-Fi access point reporting feature of smartphones may be cooperatively used to passively track pseudo Wi-Fi access points associated with moveable assets by one or more wireless devices without requiring that the wireless devices authenticate to, associate with, or establish connectivity with any particular pseudo Wi-Fi access point, using publicly accessibly Wi-Fi signals, and in passive scanning applications, completely anonymously with respect to the asset tracking task. The moveable assets may be disposed in the field with no inherent communication capabilities and in areas where there are no communication capabilities available, relying on the self-reporting feature of one or more wireless devices that merely happen to encounter one or more pseudo Wi-Fi access points.

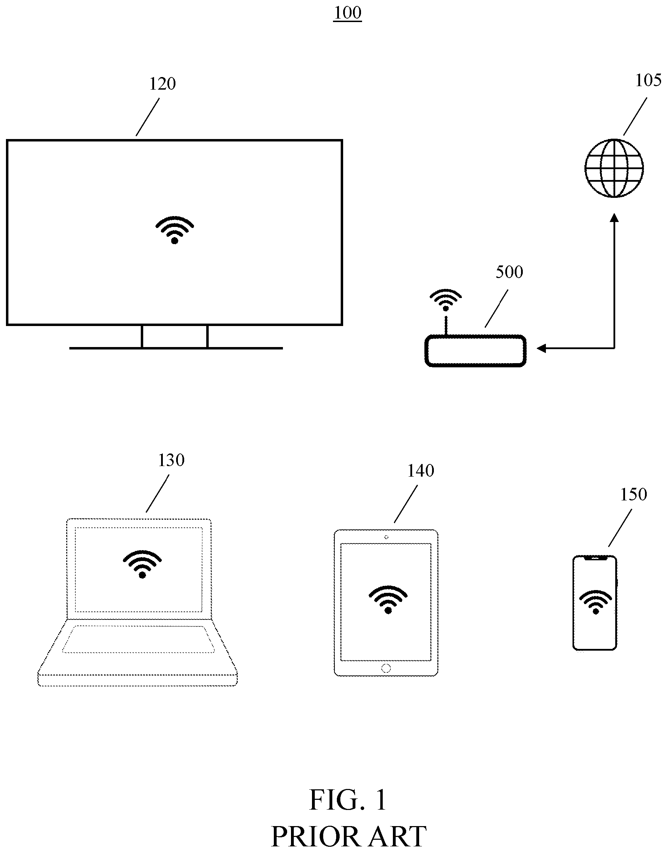

FIG. **1** shows a conventional Wi-Fi wireless network **100.** A Wi-Fi access point **500** facilitates wireless connectivity between one or more of the wireless devices and, in configurations that include an integrated router, may serve as the bridge between the wireless devices (*e.g.,* **120, 130, 140, 150)** and an upstream network connection, such as, for example, the Internet connection provided by broadband modem **105.** In conventional use, a wireless connection may be established between one or more wireless devices (*e.g.,* **120, 130, 140, 150),** including, for example, television **120,** computer **130,** tablet computer **140,** smartphone **150,** or any other wireless device, and a conventional Wi-Fi access point **500,** thereby allowing one or more wireless devices (*e.g.,* **120, 130, 140, 150)** to communicate with one another and/or access the Internet via broadband modem **105.** Wi-Fi access points **500** are commonly found in homes, offices, and public places, where they are often referred to as Wi-Fi hotspots. While the number of Wi-Fi access points **500** has not been definitively counted, there are believed to be in excess of thirteen billion Wi-Fi access points (*e.g.,* **500)** deployed around the world. Efforts to map Wi-Fi signal coverage suggest that most modern cities are blanketed with publicly accessible Wi-Fi signals. Notwithstanding the above, one of ordinary skill in the art will recognize that a conventional Wi-Fi wireless network **100** does not require a broadband modem **105,** Internet connectivity, or any upstream network connectivity and may be used as a purely wireless network to facilitate wireless communications between one or more wireless devices (*e.g.,* **120, 130, 140, 150).**

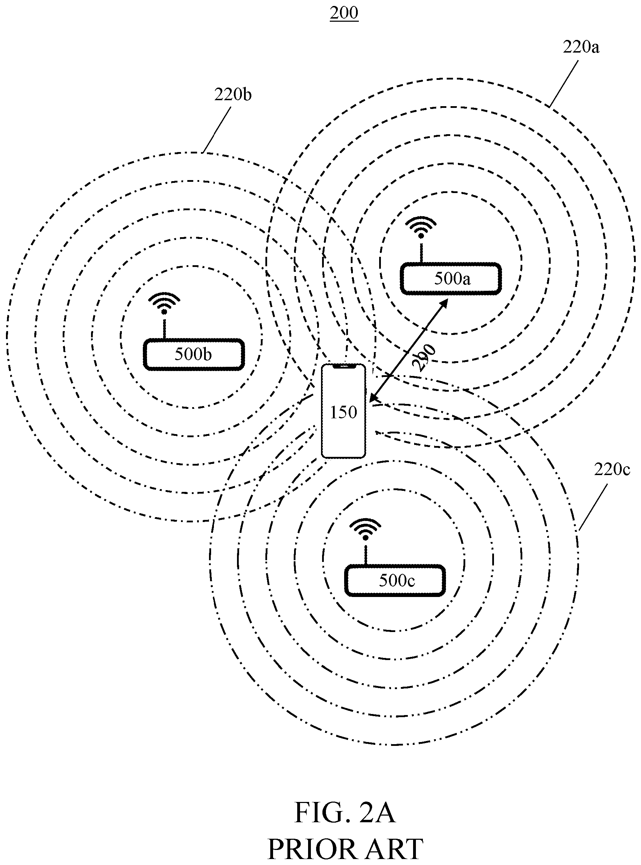

FIG. **2A** shows a passive scanning mode **200** as part of the IEEE 802.11 Wi-Fi wireless network discovery process. Wi-Fi wireless network discovery is the process by which a wireless device identifies a Wi-Fi wireless network and potentially authenticates to, associates with, and establishes data-exchanging connectivity with an in-range Wi-Fi access point (*e.g.,* **500).** In passive scanning mode, one or more wireless devices (*e.g.,* **150)** listen for beacon frames (*e.g.,* **220a, 220b, 220c)** broadcast at periodic intervals by one or more in-range Wi-Fi access points (*e.g.,* **500a, 500b, 500c)** to announce the presence of their respective Wi-Fi wireless networks. A beacon frame (*e.g.,* **220a, 220b, 220c)** is a type of Wi-Fi management frame that includes information regarding the broadcasting Wi-Fi access point (*e.g.,* **500a, 500b, 500c)** to facilitate potential authentication, association, and connectivity. Each beacon frame (*e.g.,* **220)** includes a Service Set Identifier ("SSID"), which is typically a user-given name for the broadcasting Wi-Fi wireless network, and information that uniquely identifies the Wi-Fi access point (*e.g.,* **500a, 500b, 500c)** including, but not limited to, a unique Basic Service Set Identifier ("BSSID") or Media Access Control ("MAC") address of the Wi-Fi access point (*e.g.,* **500a, 500b, 500c)** or a broadcasting band thereof. Multiple Wi-Fi access points (*e.g.,* **500a, 500b, 500c)** may share the same SSID as part of the same wireless network, but each Wi-Fi access point (*e.g.,* **500a, 500b, 500c)** will have unique identifying information including, for example, a unique BSSID. Moreover, dual, or multi-band, Wi-Fi access points (*e.g.,* **500)** that broadcast on multiple frequency bands, may have a unique BSSID for each frequency band that they broadcast on. Manufacturers are typically assigned blocks of BSSIDs from the governing authority that the manufacturer is allowed to use for the equipment they produce. As such, the BSSID of each and every Wi-Fi access point (*e.g.,* **500),** or band thereof, should truly be unique and distinguishable from all others.

In the example depicted in the figure, a wireless device **150** such as, for example, a smartphone, may be located, even if only temporarily, within the broadcast range of one or more Wi-Fi access points **500a, 500b, 500c.** Each Wi-Fi access point **500a, 500b, 500c** may periodically broadcast their respective beacon frames **220a, 220b, 220c** announcing the presence of their respective Wi-Fi wireless networks. Wireless device **150** may listen to, and receive, beacon frames **220a, 220b, 220c** from the in-range Wi-Fi access points **500a, 500b, 500c.** In conventional applications, a user of wireless device **150** wishing to join a Wi-Fi wireless network may optionally select the SSID, sometimes referred to as the network name, of the Wi-Fi wireless network that they wish to join through the operating system of their device. Sometimes, the wireless device **150** may automatically connect to a previously joined Wi-Fi wireless network automatically based on a user preference. Once authenticated, associated, and connectivity is established, wireless device **150** may communicate **290** with Wi-Fi access point **500a,** exchanging data and potentially accessing other networks such as, for example, an upstream Internet connection (*e.g.,* **105** of FIG. **1****)** through the Wi-Fi access point **500a.** It is important to note that, passive scanning **200** is completely anonymous with respect to wireless devices (*e.g.,* **150)** that receive beacon frames (*e.g.,* **220a, 220b, 220c)** of in-range Wi-Fi access points (*e.g.,* **500a, 500b, 500c)** until such time that they choose to authenticate to, and associate with, a particular Wi-Fi access point (*e.g.,* **500a).** Unless and until a user of a wireless device **150** selects a specific Wi-Fi access point (*e.g.,* **500a)** and Wi-Fi wireless network thereof to authenticate to, associate with, and establish data connectivity with, wireless device **150** may passively receive the Wi-Fi signals being publicly broadcast by Wi-Fi access points **500a, 500b, 500c** and any others that it may encounter while remaining completely anonymous. However, wireless devices **150** record information relating to the Wi-Fi access points (*e.g.,* **500)** they encounter, even if they do not join the wireless network, typically without awareness on the part of the user, typically to enhance location services, which may be leveraged for the asset tracking task as discussed in more detail herein.

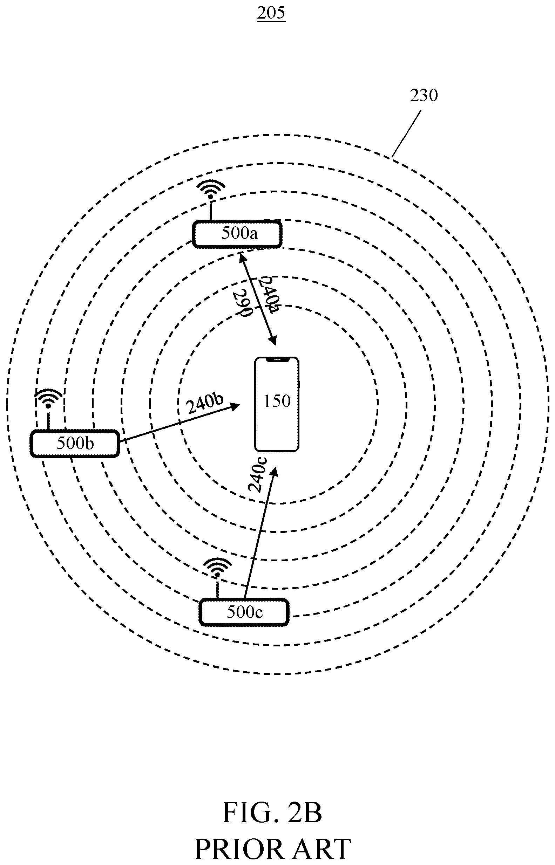

FIG. **2B** shows active scanning mode **205** as part of IEEE 802.11 Wi-Fi wireless network discovery. In contrast to passive scanning mode (*e.g.,* **200** of FIG. **2A****),** active scanning mode **205** is a type of Wi-Fi wireless network discovery process where a wireless device **150** broadcasts a probe request frame **230** to a specific (*e.g.,* **500a)** or all Wi-Fi access points (*e.g.,* **500a, 500b, 500c)** that are within Wi-Fi signaling range. A probe request frame **230** is a type of Wi-Fi management frame that may include information about the specific Wi-Fi access point (*e.g.,* **500a)** that the wireless device **150** wishes to associate with, sometimes referred to as a directed probe request, or may be a probe request for all available Wi-Fi access points (*e.g.,* **500a, 500b, 500c)** within Wi-Fi signaling range, sometimes referred to as a null probe request. Responding in-range Wi-Fi access points **500a, 500b, 500c** transmit a probe response frame **240a, 240b, 240c** that includes information substantially similar to a beacon frame (*e.g.,* **220** of FIG. **2A****)** including their respective SSID and unique BSSID.

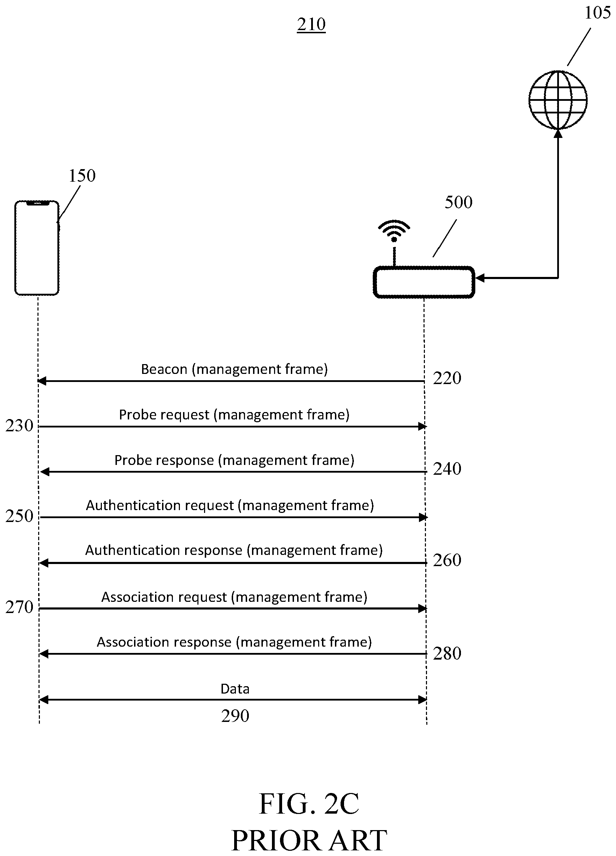

In contrast to passive scanning (*e.g*., **200** of FIG. **2A****)** where each Wi-Fi access point (*e.g.,* **500)** broadcasts its respective beacon frames (*e.g.,* **220** of FIG. **2A****)** on a specific channel, in active scanning mode **205,** wireless device **150** may broadcast probe request frames **230** across all available channels for the associated frequency band. In this way, wireless device **150** may, for example, select a Wi-Fi access point (*e.g.,* **500a)** that provides the strongest received signal strength and quality for the time being. However, even when a particular wireless device **150** is authenticated to, and associated with, a specific Wi-Fi access point (*e.g.,* **500a),** wireless device **150** may go off channel and continue to send probe request frames (*e.g.,* **230)** on other channels. By continuing to actively probe for Wi-Fi access points (*e.g.,* **500a, 500b, 500c),** wireless device **150** may maintain a list of known Wi-Fi access points (*e.g.,* **500a, 500b, 500c)** that may facilitate roaming should the wireless device **150** move out of range of the currently associated Wi-Fi access point (*e.g.,* **500a)** or require a better connection. In contrast to passive scanning mode (*e.g.,* **200** of FIG. **2A****),** active scanning mode **205** only requires a wireless device **150** to send a probe request frame **230** on a specific channel within the designated frequency band and then listen for a comparatively smaller amount of time as compared to passive scanning (*e.g*., **200** of FIG. **2****).** As such, active scanning **205** presents a more direct and targeted approach to Wi-Fi wireless network discovery process as compared to the broadcast nature of passive scanning operations (*e.g*., **200** of FIG. **2A****).**

FIG. **2C** shows a sequence of IEEE 802.11 management frames **210** typically exchanged between a wireless device **150** and a Wi-Fi access point **500** as part of Wi-Fi wireless network discovery process. A wireless device **150** must successfully identify (*e.g.,* **220, 230, 240),** authenticate to (*e.g.,* **250, 260),** and associate with (*e.g.,* **270, 280)** a Wi-Fi access point **500** in order to transmit data frames **290** containing data under the protocol. As previously discussed, Wi-Fi wireless network discovery refers to the process by which a wireless device **150** typically identifies a Wi-Fi wireless network, authenticates to (*e.g.,* **250, 260),** associates with (*e.g.,* **270, 280),** and establishes data connectivity (*e.g*., **290)** with an in-range Wi-Fi access point **500** to enable data transfer with other devices or an upstream network connection, such as, for example, the Internet **105.**

The IEEE 802.11 standard specifies three different types of frames: management frames, data frames, and control frames, each of which serves a specific purpose under the protocol. For example, management frames are used for supervisory functions including Wi-Fi wireless network discovery, data frames are used to transmit data once authenticated and associated, and control frames are used to control the transmission of data. As noted above, the IEEE 802.11 standard specifies two different scenarios by which a wireless device **150** may identify, authenticate to, associate with, and establish data connectivity with a Wi-Fi access point **500** as part of the Wi-Fi wireless network discovery process.

In passive scanning mode, a wireless device **150** listens for beacon frames **220,** a type of management frame, that is broadcast at periodic intervals by in-range Wi-Fi access points **500.** The beacon frame **220** announces the presence of the Wi-Fi wireless network and associated Wi-Fi access point **500** and includes information that facilitates potential authentication to, association with, and ultimately data transmission. The information includes, for example, the BSSID and the SSID of the broadcasting Wi-Fi access point **500.** For example, the user of a wireless device **150,** in this example a smartphone, may open a wireless application on their device, see a list of SSIDs corresponding to in-range Wi-Fi access points (*e.g.,* **500)** that are broadcasting their respective beacon frames (*e.g.,* **220),** and select a particular SSID of the Wi-Fi wireless network and associated Wi-Fi access point **500** they wish to join. When the user selects the SSID of a particular Wi-Fi access point **500,** the wireless device **150** transmits a probe request frame **230,** another type of management frame, to the particular Wi-Fi access point **500** that includes the capabilities of the wireless device **150.** In the active scanning mode, without necessarily having received a beacon frame **220,** the wireless device **150** may transmit a probe request frame **230** that includes the capabilities of the wireless device **150** to a specific Wi-Fi access point **500** or all Wi-Fi access points (*e.g.,* **500)** in range. As such, the Wi-Fi wireless network discovery process may be initiated by a Wi-Fi access point **500** that broadcasts beacon frames **220** or a wireless device **150** that transmits a probe request frame **230.** Regardless of which, the remainder of the authentication and association protocol is substantially the same.

Subsequent to receipt of the probe request frame **230,** if the Wi-Fi access point **500** has compatible parameters, the Wi-Fi access point **500** transmits a probe response frame **240,** another type of management frame, to the wireless device **150.** The probe response frame **240** includes the parameters typically included in the beacon frame **220** including unique identifying information and capabilities of the Wi-Fi access point **500.** It is important to note that, at this stage of the process, the wireless device **150** is unauthenticated to, and unassociated with, the Wi-Fi access point **500,** and is not capable of transmitting data in data frames **290** under the protocol. Subsequent to receipt of the probe response frame **240,** the wireless device **150** transmits an authentication request frame **250,** another type of management frame, to the Wi-Fi access point **500.** The authentication protocol establishes whether the wireless device **150** is authenticated to the Wi-Fi access point **500,** *i.e.,* ensuring permission or access with respect to encryption (open or shared key encryption). Without discussing the details of the authentication protocol, which is unnecessary for the purpose of describing the claimed invention, it is important to note that a wireless device **150** typically cannot proceed to association and data transfer until it is has been successfully authenticated to the Wi-Fi access point **500,** as signified by an authentication response frame **260,** another type of management frame, acknowledging successful authentication.

Once authenticated to Wi-Fi access point **500,** wireless device **150** transmits an association request frame **270,** another type of management frame, to Wi-Fi access point **500.** The association request frame **270** signifies a request by the authenticated, but as yet unassociated wireless device **150** to associate with the Wi-Fi access point **500** and enable data transfer via data frames **290.** The association request **270** includes information including, for example, capabilities of the wireless device **150.** After receipt of the association request **270,** the Wi-Fi access point **500** compares the capabilities set out in the association request **270** with the capabilities of the Wi-Fi access point **500** to determine if they match. If there is a mismatch, the Wi-Fi access point **500** determines whether the differences are an issue that prevents association and data transfer. If the differences are not substantive, the Wi-Fi access point **500** transmits an association response **280,** another type of management frame, acknowledging successful association. Once the association response **280** is received, signifying successful association with Wi-Fi access point **500,** wireless device **150** may exchange data **290** with Wi-Fi access point **500** in data frames under the protocol that are routed over a bridged network connection, typically the Internet **105,** to its final destination. It is important to note that, in order for a wireless device **150** to transmit data with Wi-Fi access point **500,** other than management frames, the wireless device **150** must authenticate to, and associate with, Wi-Fi access point **500,** thereby enabling wireless device **150** to transmit and receive data **290.** And similarly, Wi-Fi access point **500** cannot transfer data in data frames **290** to wireless device **150** until wireless device **150** has authenticated to, and associated with, Wi-Fi access point **500.**

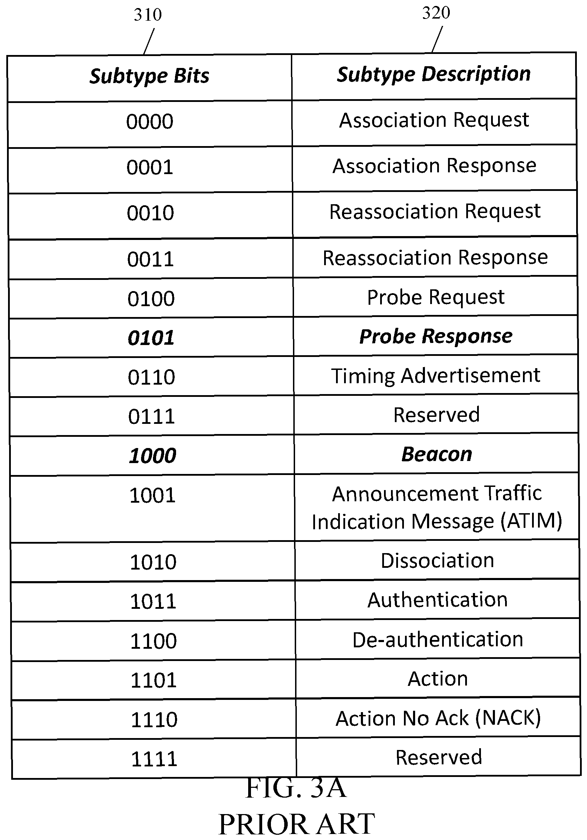

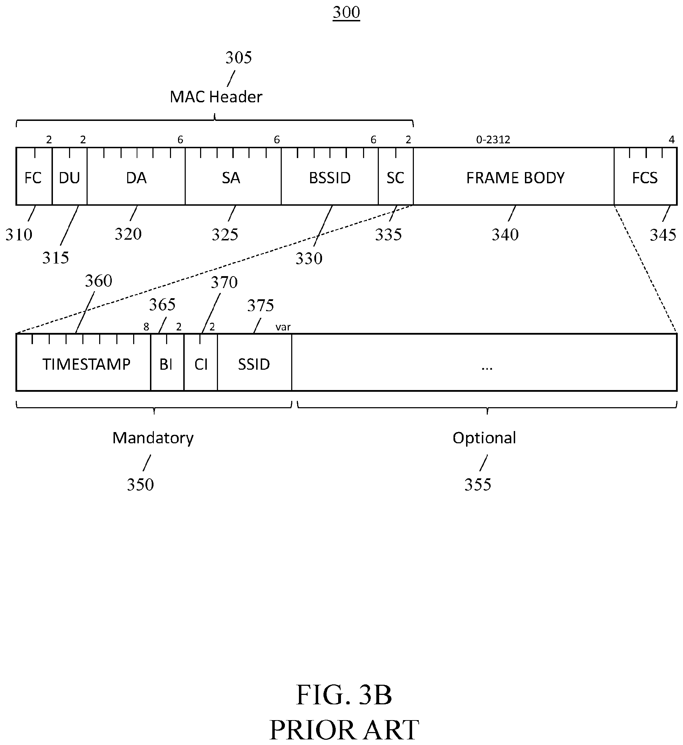

FIG. **3A** shows the subtypes of IEEE 802.11 management frames. In a conventional management frame (*e.g.,* **300** of FIG. **3B****),** the first octet is defined as the Frame Control field (*e.g.,* **310** of FIG. **3B****).** The first three subfields of the Frame Control field (*e.g.,* **310** of FIG. **3B****)** are present in all IEEE 802.11 frames and include the protocol version (not shown), the type of frame, and the subtype of frame. The type of frame subfield indicates whether the frame is a management frame, data frame, or control frame. The subtype of frame subfield indicates the particular subtype of frame within the type. In the figure, the various subtypes of management frames are shown. The subtype bits **310** represent the binary encoded subtype described by the subtype description **320.** For purposes of the discussion that follows, emphasis will be placed on the beacon frame and probe response frame subtypes of management frames. Notwithstanding, as can be seen by the enumerated list of management frames, other management frames may be used in accordance with one or more embodiments of the present invention.

FIG. **3B** shows the structure of a conventional IEEE 802.11 management frame **300** representative of the type of management frames transferred between a wireless device (*e.g.,* **150)** and a Wi-Fi access point (*e.g.,* **500**)*.* The conventional management frame **300** includes a number of predetermined fields that are defined by the specification for their protocol-defined purpose. For example, MAC header **305** of management frame **300,** includes Frame Control ("FC") field **310,** Duration ("DU") field **315,** Destination Address ("DA") field **320,** Source Address ("SA") field **325,** BSSID **330,** and Sequence Control ("SC") field **335.** Management frame **300** further includes the Frame Body field **340** that includes a number of subfields, including some that may vary based on the subtype (*e.g.,* **310** of FIG. **3A****)** of management frame **300.** For example, Frame Body **340** includes mandatory subfields **350** including Timestamp subfield **360,** Beacon Interval ("BI") subfield **365,** Compatibility Information ("CI") subfield **370,** SSID subfield **375,** and potentially Supported Rates subfield (not shown). Frame Body field **340** may also include one or more optional subfields **355** that also may vary based on the subtype (*e.g.,* **310** of FIG. **3A****)** of management frame **300.** The end of management frame **300** includes a Frame Check Sequence ("FCS") field **345** that includes an error-detecting code. During Wi-Fi wireless network discovery, beacon frames, probe response frames, and other management frames are in the form of conventional management frame **300,** for the purpose of furthering identification, authentication to, and association with, a Wi-Fi access point (*e.g.,* **500**)*.*

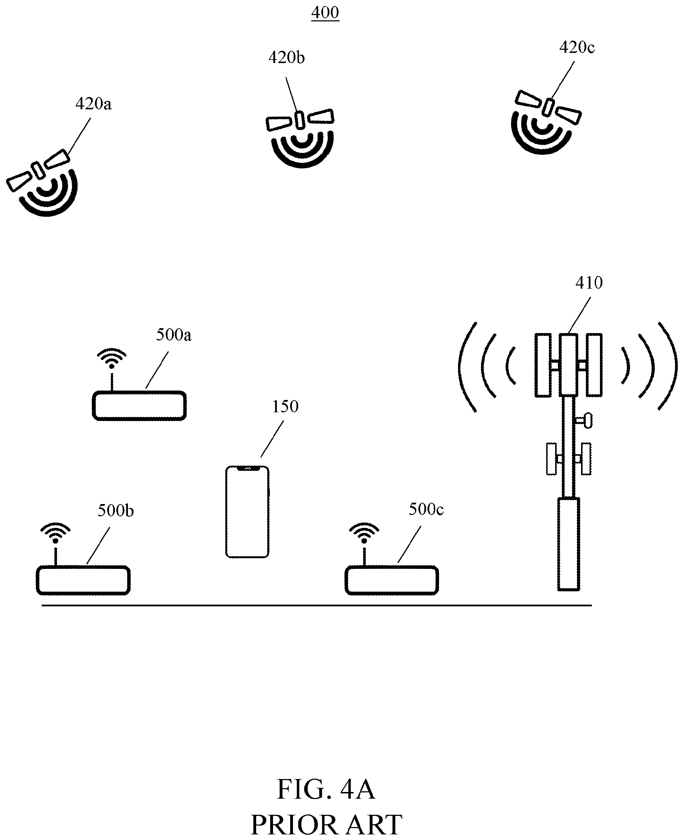

FIG. **4A** shows various technologies that may be used to determine a location of a wireless device (*e.g.,* **150)** and one or more Wi-Fi access points (*e.g.,* **500a, 500b, 500c).** A wireless device **150,** which may be a smartphone as depicted in the example or any other type or kind of wireless device, may establish a cellular connection with one or more cell towers **410** providing cellular network connectivity (if the wireless device it possesses cellular capabilities). An established connection to a particular cell tower **410** may, in some circumstances, be used to establish a location of wireless device **150** within a determinable radius of the particular cellular tower **410.** Further, patterns of connectivity to one or more cell towers **410** may be used to establish a location or potentially even the movement of wireless device **150** within a determinable radius. However, these techniques are rarely used outside of law enforcement. Instead, wireless devices **150** typically rely on GPS signals to determine their own location. Most wireless devices **150** include a GPS receiver (not independently shown) capable of receiving one or more GPS signals (not shown) from one or more GPS satellites (*e.g*., **420a, 420b, 420c)** in Earth orbit. Typically, there are at least four GPS satellites (*e.g*., **420)** visible overhead to a wireless device (*e.g.,* **150)** no matter where it is located, anywhere around the globe. Each GPS satellite **420a, 420b, 420c** transmits a GPS signal (not shown) that includes information about the satellite's current position and the current time at regular intervals. The GPS receiver of wireless device **150** receives one or more of these GPS signals and calculates how far away it is from each satellite **420a, 420b, 420c** based in part on how long it took for each respective GPS signal to arrive. If the wireless device **150** receives the GPS signal from at least three GPS satellites **420a, 420b, 420c,** the location of the wireless device **150** may be determined with a high degree of accuracy by the process referred to as trilateration. The GPS-derived location of wireless device **150** may be determined continuously, periodically, or upon the execution of software that requires location services, such as, for example, navigation software or a web browser used to search nearby places. The accuracy of GPS is within a radius of approximately 16 feet under open skies and good conditions but worsens near structures and obstructions.

In some cases, a wireless device **150** may use one or more in-range Wi-Fi access points **500a, 500b, 500c** to improve the accuracy of the GPS location determination and, in instances when GPS is not available, determine its location based on Wi-Fi positioning alone. As part of the Wi-Fi wireless network discovery process, wireless device **150** typically determines the received signal strength, sometimes referred to as Received Signal Strength Indication ("RSSI"), of the Wi-Fi signals broadcast by the in-range Wi-Fi access points **500a, 500b, 500c.** Assuming, for the purpose of this discussion, that the location of one or more Wi-Fi access points **500a, 500b, 500c** are already known to a certain degree of accuracy, the identified Wi-Fi access points **500a, 500b, 500c** and received signal strengths may be used to refine the accuracy of the GPS location determination and, in instances when GPS is not available, determine the location of the wireless device **150** based on Wi-Fi positioning alone. For example, the known location of a Wi-Fi access point **500a** and/or the received signal strength of the Wi-Fi signal received from it may be used alone or in combination with the known location and/or received signal strength of other Wi-Fi access points **500b, 500c** to refine or determine the location of wireless device **150** by one or more processes such as, for example, RSSI, fingerprinting, angle of arrival, time of flight, or other positioning techniques including trilateration and triangulation. It is important to note that the received signal strength of the Wi-Fi signals received by wireless device **150** from one or more Wi-Fi access points (*e.g.,* **500a, 500b, 500c)** are determined without requiring wireless device **150** to authenticate to, associate with, or otherwise establish connectivity with any particular Wi-Fi access point (*e.g.,* **500a, 500b, 500c).** As such, wireless device **150** may receive publicly broadcast Wi-Fi signals of in-range Wi-Fi access points (*e.g.,* **500a, 500b, 500c)** that it does not use or otherwise associate with in any way.

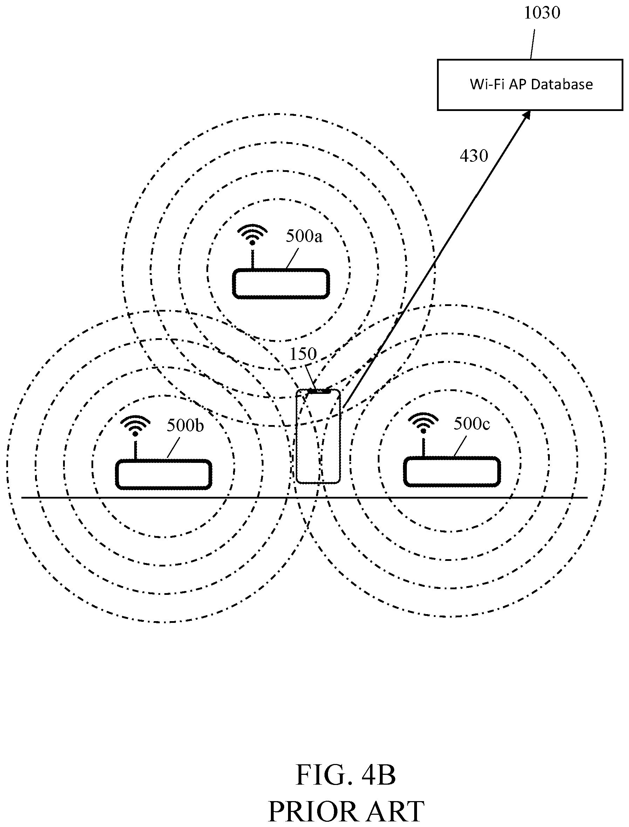

Continuing, FIG. **4B** shows a diagram of a wireless device **150** reporting observations of Wi-Fi access points **500a, 500b, 500c** it encounters to a Wi-Fi AP Database **1030.** In the discussion of FIG. **4A****,** an assumption was made that the location of one or more Wi-Fi access points (*e.g.,* **500a, 500b, 500c)** were known to a certain degree of accuracy. This assumption holds true because wireless devices (*e.g.,* **150)** report in-range Wi-Fi access points (*e.g.,* **500)** they encounter as well as location information to the original equipment manufacturer, operating system developer, and/or third-party software developer who maintain a database, referred to herein as a Wi-Fi AP Database **1030,** of observations of Wi-Fi access points (*e.g.,* **500a, 500b, 500c).** The Wi-Fi AP Database **1030** stores reported observations **430** of Wi-Fi access points (*e.g.,* **500a, 500b, 500c)** that are conventionally used to enhance location services (*e.g*., significant locations, location-based suggestions, location-based alerts, popular near me, and the like) of end users. While this benefits the user of the wireless device **150** in providing improved location services, each wireless device (*e.g.,* **150)** reports information relating to the location of one or more Wi-Fi access points (*e.g.,* **500)** it encounters on an ongoing and continuous basis, typically without awareness on the part of the user. For example, this is commonly performed in the background as part of, for example, Apple^{®} iOS^{®}, Google^{®} Android^{®}, or Microsoft^{®} location-based services and it is typically made available to third-party software developers for commercial use. In addition, many third-party software companies maintain their own Wi-Fi AP Database **1030** of observation data including the unique identifying information and location information of one or more Wi-Fi access points (*e.g.,* **500),** some of which commercially offer access to their database for a fee. For example, Cisco Systems^{®}, Facebook^{®}, WhatsApp^{®}, X-Mode^{®}, Ruckus^{®}, and Skyhook^{®} offer commercial versions of a Wi-Fi AP Database **1030.** It is important to note that the information stored in such databases is typically obtained anonymously through publicly accessible Wi-Fi signals and in accordance with the terms and conditions of use of most smartphones, that typically provide the user with the option of opting-out of participation in such services. Further, the reports of observation data are typically anonymous, and no record of the reporting wireless device **150** is maintained. Thus, every user of a wireless device **150,** such as a smartphone, reports observation data of Wi-Fi access points (*e.g.,* **500)** they encounter to a Wi-Fi AP Database **1030** on an ongoing and continuous basis, often without an awareness on the part of the user they are doing so, however, the user benefits from the enhanced location determination when browsing the web for nearby offerings or using other location services.

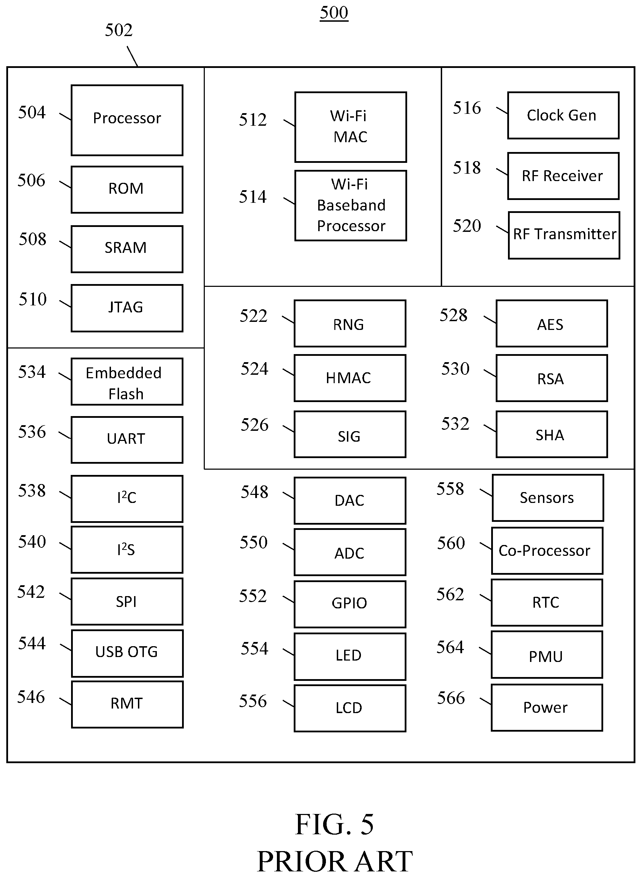

FIG. **5** shows a block diagram of a conventional Wi-Fi access point **500.** A conventional Wi-Fi access point **500** includes one or more rigid Printed Circuit Boards ("PCBs") **502** on which a plurality of components are disposed. Wi-Fi access point **500** typically includes a processor **504** that serves as the primary computational and processing engine of the device, read-only memory ("ROM") **506** that includes software instructions that governs boot up and core functionality of the device, Static Random Access Memory ("SRAM") **508** that stores data and instructions during runtime, and a Joint Test Action Group ("JTAG") **510** interface for debugging the device. Wi-Fi access point **500** includes a Wi-Fi MAC **512** that implements the full IEEE 802.11 Wi-Fi MAC protocol and a Wi-Fi baseband processor **514** that manages radio functionality of the device. Wi-Fi access point **500** includes a radio frequency ("RF") receiver **518** that demodulates RF signals to baseband signals and converts them to the digital domain, a RF transmitter **520** that modulates baseband signals to RF signals and drives the RF signals onto an antenna (not shown), and a clock generator **516** that generates clock signals for the receiver **518** and transmitter **520.** For security and implementation of authentication (*e.g*., **250, 260** of FIG. **2C****)** under the protocol, Wi-Fi access point **500** includes a random number generator ("RNG") **522,** Hash-based Message Authentication Code ("HMAC") **524,** Advanced Encryption Standard ("AES") cryptographic encryption accelerator **528,** Rivest-Shamir-Adleman ("RSA") cryptographic encryption accelerator **530,** and Secure Hash Algorithm ("SHA") **532** cryptographic encryption accelerator, and potentially others. Digital signatures **526,** as well as flash encryption and secure boot signatures **534** may be used to protect the integrity of the software of the device at boot up or during runtime.

Wi-Fi access point **500** typically includes a plurality of peripheral interfaces that are used to flash, program, debug, control, or operate the device including, Universal Asynchronous Receiver-Transmitter ("UART") **536,** I²C **538,** I²S **540,** Serial Peripheral Interface ("SPI") **543,** Universal Serial Bus ("USB") On the Go ("OTG") **544,** and infrared remote control ("RMT") **546.** In addition, Wi-Fi access point **500** includes an Digital-to-Analog Converter ("DAC") **548,** a Analog-to-Digital Converter ("ADC") **550,** a plurality of General Purpose Inputs and Outputs ("GPIOs") **552,** a Light Emitting Diode ("LED") interface **554,** a Liquid Crystal Display ("LCD") interface **556,** and one or more sensors **558.** In addition, Wi-Fi access point **500** includes various housekeeping components, including, for example, a co-processor **560** typically used to wake the device up from a low power state, a real time clock ("RTC") **562** to keep time, a Power Management Unit ("PMU") **564** to control the power state of the device, and a power supply **566** that powers the device. The assembled PCB **502,** and components disposed thereon, are typically disposed within a mechanical case (not shown) that includes one or more external antennae (not shown).

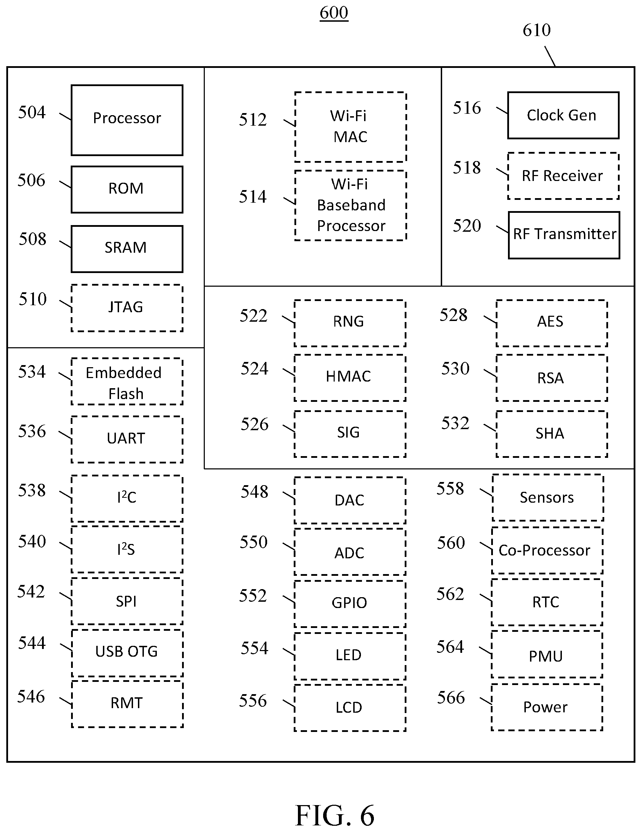

FIG. **6** shows a block diagram of a pseudo Wi-Fi access point **600** in accordance with one or more embodiments of the present invention. In recognition of the fact that the full functionality of a conventional Wi-Fi access point (*e.g.,* **500** of FIG. **5****)** may not be not necessary for the asset tracking task and in further recognition of the fact that many asset tracking applications may benefit from a device having reduced power consumption in a smaller and potentially unique footprint, a pseudo, or dummy, Wi-Fi access point **600** may be used for the asset tracking task in accordance with one or more embodiments of the present invention.

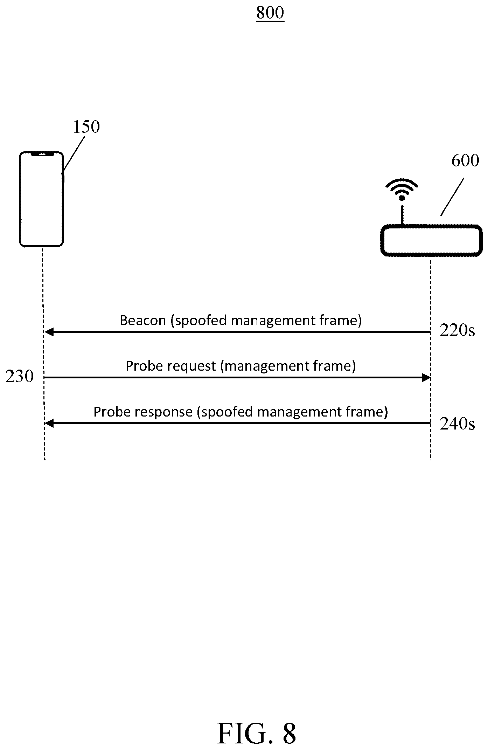

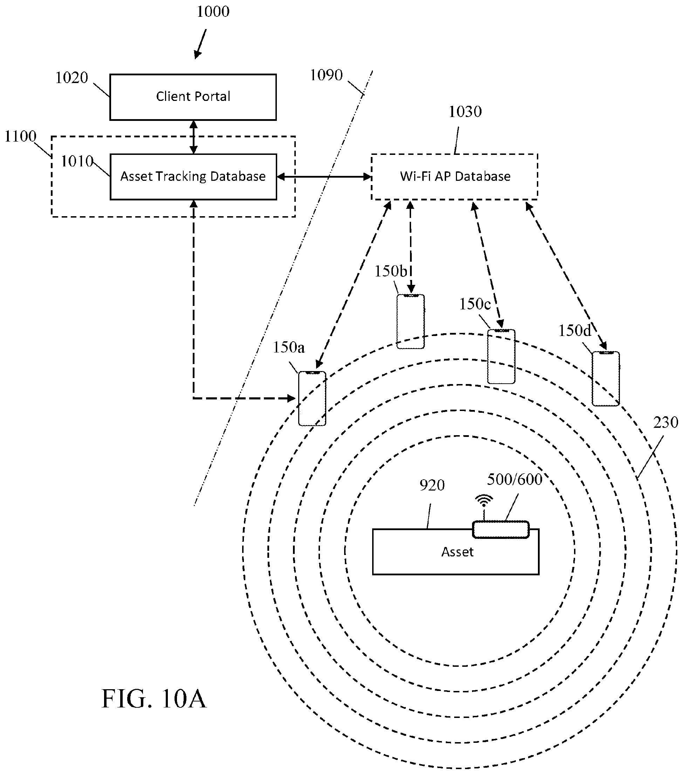

For the purpose of this disclosure, a pseudo Wi-Fi access point **600** is any device that is capable of participating in at least part of the Wi-Fi wireless network discovery process by broadcasting beacon frames (*e.g.,* **220** of FIG. **2C** or **220s** of FIG. **8****),** probe response frames (*e.g.,* **240** of FIG. **2C** or **240s** of FIG. **8****),** or other management frames (not shown) including its unique identifying information, but is not required to participate in authentication (*e.g*., **250, 260** of FIG. **2C****),** association (*e.g.,* **270, 280** of FIG. **2C****),** or data transfer (*e.g.,* **290** of FIG. **2C****)** under the protocol. In essence, a pseudo Wi-Fi access point **600** is only required to participate in a portion of the Wi-Fi wireless network discovery process that enables one or more wireless devices (*e.g.,* **150** of FIG. **10A****)** to observe a pseudo Wi-Fi access point **600** and report the encounter with the pseudo Wi-Fi access point **600** as if it were a bona fide conventional Wi-Fi access point (*e.g.,* **500** of FIG. **5****).** From the perspective of the one or more wireless devices (*e.g.,* **150** of FIG. **10A****)** that encounter a pseudo Wi-Fi access point **600,** it may appear to be a bona fide conventional Wi-Fi access point (*e.g.,* **500** of FIG. **5****),** at least with respect to identification. As such, a pseudo Wi-Fi access point **600** may communicate at least the unique identifying information (*e.g*., BSSID) of the pseudo Wi-Fi access point **600** to one or more wireless devices *(e.g.,* **150** of FIG. **10A****)** in a similar manner to the way a conventional Wi-Fi access point (*e.g.,* **500** of FIG. **5****)** would convey its own unique identifying information (*e.g*., its BSSID) as part of the Wi-Fi wireless network discovery process, thereby enabling the asset tracking task, without requiring more.

In certain embodiments, a pseudo Wi-Fi access point **600** may not require one or more components or features to reduce the size, complexity, and power consumption of the device for use in the asset tracking task. For example, a pseudo Wi-Fi access point **600** may not require various cryptographic encryption accelerators (*e.g.,* **522, 524, 526, 528, 530, 532** of FIG. **5****)** that are used for authentication (*e.g*., **250, 260** of FIG. **2C****),** since pseudo Wi-Fi access point **600** is not required to authenticate any wireless device (*e.g.,* **150** of FIG. **10A****).** In addition, a pseudo Wi-Fi access point **600** may not require one or more interfaces including, for example, embedded flash **534,** UART **536,** I²C **540,** I²S **540,** SPI **542,** USB OTG **544,** RMT **546,** GPIO **552,** LED **554,** LCD **556,** or sensors **558.** In addition, a pseudo Wi-Fi access point **600** may not require one or more co-processors **560,** RTC **562,** PMU **564,** or external power supply **566.** As such, in such embodiments, a pseudo Wi-Fi access point **600** may exclude one or more of the above-noted components or features that are not required for the asset tracking task.

In other embodiments, a pseudo Wi-Fi access point **600** may be implemented by incorporating only those components or features necessary for the asset tracking task in a System On a Chip ("SOC") **610,** Field Programmable Gate Array ("FPGA") (not shown), configurable processor (not shown), or Application Specific Integrated Circuit ("ASIC"), or other highly integrated device. In such embodiments, any one or more of the components or features of a conventional Wi-Fi access point (*e.g.,* **500** of FIG. **5****)** required to enable the asset tracking task may be integrated as part of the SOC **610.** The reduced complexity of a pseudo Wi-Fi access point **600** allows for greater integration and reduced power consumption, enabling new small form factors that may be advantageous to the asset tracking task, including the use of flexible substrates and/or integration with other devices or systems. As such, in such embodiments, a pseudo Wi-Fi access point **600** may exclude one or more of the above-noted components or features that are not required for the asset tracking task.

In still other embodiments, a pseudo Wi-Fi access point **600** may be a modified version of a conventional Wi-Fi access point (*e.g.,* **500** of FIG. **5****)** or SOC (not shown), FPGA (not shown), configurable processor (not shown), or other highly integrated device where any one or more of the above-noted components or features may be disabled or turned off. As such, in such embodiments, a pseudo Wi-Fi access point **600** may disable one or more of the above-noted components or features of a conventional Wi-Fi access point (*e.g.,* **500** of FIG. **5****)** that are not required for the asset tracking task.

One of ordinary skill in the art will recognize that any pseudo Wi-Fi access point **600,** or variation thereof, capable of participating in at least part of the Wi-Fi wireless network discovery protocol as if it were a bona fide conventional Wi-Fi access point (*e.g.,* **500** of FIG. **5****)** may be used in the asset tracking task in accordance with one or more embodiments of the present invention. Further, in certain embodiments, a pseudo Wi-Fi access point **600** may transmit pseudo, spoofed, or emulated, beacon frames (*e.g*., **220s** of FIG. **8****),** probe response frames (*e.g.,* **240s** of FIG. **8****),** or other management frames (not shown) since, in some embodiments, a pseudo Wi-Fi access point **600** is not a bona fide conventional Wi-Fi access point *(e.g.,* **500** of FIG. **5****)** capable of authenticating to, associating with, and performing data transfer under the protocol. In a given application, a combination of one or more conventional Wi-Fi access points (*e.g.,* **500** of FIG. **5****)** and/or one or more pseudo Wi-Fi access points **600** may be used in the asset tracking task. For example, in certain embodiments, only pseudo Wi-Fi access points **600** may be used as part of one or more methods of passive asset tracking. In other embodiments, only conventional Wi-Fi access points (*e.g.,* **500** of FIG. **5****)** may be used as part of one or more methods of passive asset tracking. In still other embodiments, one or more conventional Wi-Fi access points (*e.g.,* **500** of FIG. **5****)** and one or more pseudo Wi-Fi access points **600** may be used as part of one or more methods of passive asset tracking. One of ordinary skill in the art will recognize that the methods of passive asset tracking disclosed herein may be flexibly adapted for a given application or design in accordance with one or more embodiments of the present invention.

One of ordinary skill in the art, having the benefit of this disclosure, will appreciate that one or more wireless devices (*e.g.,* **150** of FIG. **10A****)** that encounter a pseudo Wi-Fi access point (*e.g.,* **600)** will not be able to distinguish it from a conventional Wi-Fi access point (*e.g.,* **500** of FIG. **5****)** for the purposes of the identification portions of the Wi-Fi wireless network discovery process in accordance with one or more embodiments of the present invention. As such, a pseudo Wi-Fi access point (*e.g.,* **600)** will appear, and be reported, as if it is a conventional Wi-Fi access point (*e.g.,* **500** of FIG. **5****)** in reports of observation data.

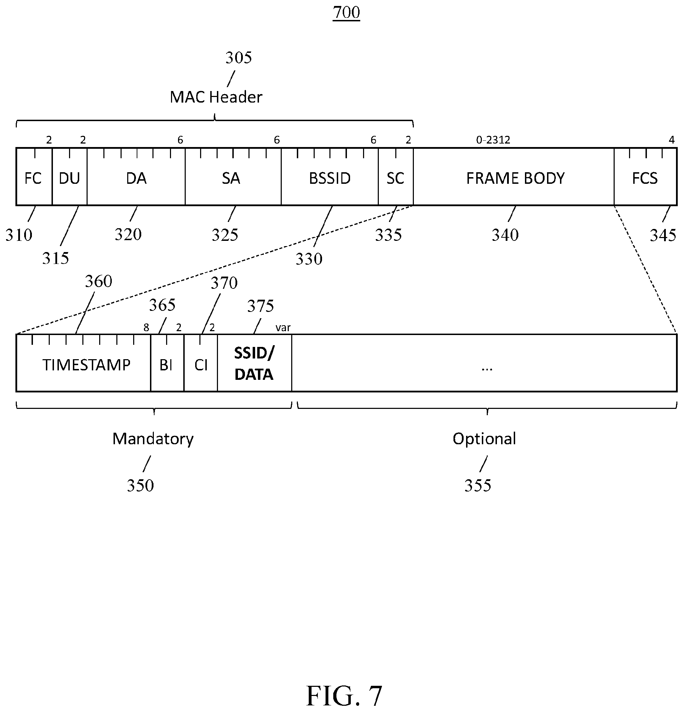

FIG. **7** shows an example of a pseudo, spoofed, or emulated, management frame **700** transmitted by a pseudo Wi-Fi access point (*e.g.,* **600** of FIG. **6****)** in accordance with one or more embodiments of the present invention. Because a pseudo Wi-Fi access point (*e.g.,* **600** of FIG. **6****)** is not required to be a fully functional Wi-Fi access point (*e.g.,* **500** of FIG. **5****),** the pseudo Wi-Fi access point (*e.g.,* **600** of FIG. **6****)** may transmit a pseudo, spoofed, or emulated, beacon frame (*e.g.,* **220s** of FIG. **8****),** probe response frame (*e.g.,* **240s** of FIG. **8****),** or other management frame (not shown) as part of the passive asset tracking task. The pseudo, spoofed, or emulated, beacon frame (*e.g.,* **220s** of FIG. **8****),** probe response frame (*e.g.,* **240s** of FIG. **8****),** or other management frame (not shown) may have the same structure as a conventional management frame (*e.g.,* **300** of FIG. **3B****)** transmitted by a conventional Wi-Fi access point (*e.g.,* **500** of FIG. **5****)** and may also include unique identifying information such as, for example, BSSID **330.** However, since a pseudo Wi-Fi access point (*e.g.,* **600** of FIG. **6****)** is not required to function as a fully functional conventional Wi-Fi access point (*e.g.,* **500** of FIG. **5****)** outside of the identification phase of the Wi-Fi wireless network discovery process, other fields may advantageously be used by the asset tracking task. As such, any such pseudo, spoofed, or emulated beacon frames (*e.g*., **220s** of FIG. **8****),** probe response frames (*e.g.,* **240s** of FIG. **8****),** and/or other management frames (not shown) are substantially similar to their conventional counterparts (*e.g*., **220, 240** of FIG. **2C****),** but may advantageously make use of other fields for the asset tracking task.

For example, in certain embodiments, additional information may be disposed or encoded in one or more fields of a pseudo, spoofed, or emulated beacon frame (*e.g.,* **220s** of FIG. **8****),** probe response frame (*e.g.,* **240s** of FIG. **8****),** or other management frame (not shown). While any field of the pseudo, spoofed, or emulated, management frame **700** may be used, the one or more fields selected to place or encode information may be selected such that they are fields that are reported by a wireless device (*e.g.,* **150** of FIG. **10A****)** as part of a report of an encounter with a Wi-Fi access point, typically as part of the standard reporting feature used by location services. In the example depicted in the figure, BSSID field **330** may be used to uniquely identify the pseudo Wi-Fi access point (*e.g.,* **600** of FIG. **6****).** Additional information may be disposed or otherwise encoded in an appropriate field, in either numeric or alphanumeric form, with or without encoding. In the example depicted in the figure, SSID field **375** may be used to encode additional information, or data. When a wireless device (*e.g.,* **150** of FIG. **10A****)** encounters a pseudo Wi-Fi access point (*e.g.,* **600** of FIG. **6****),** the wireless device (*e.g.,* **150** of FIG. **10A****)** reports the encounter including, at least, BSSID **330** and SSID **375** of the pseudo Wi-Fi access point (*e.g.,* **600** of FIG. **6****)** it encountered. The pseudo, spoofed, or emulated beacon frame (*e.g.,* **220s** of FIG. **8****),** probe response frame (*e.g.,* **240s** of FIG. **8****)** or other management frame (not shown) transmitted by the pseudo Wi-Fi access point (*e.g.,* **600 of** FIG. **6****)** includes additional data in the SSID field **375,** the wireless device (*e.g.,* **150** of FIG. **10A****)** will report the unique identifying information, BSSID **330,** of the pseudo Wi-Fi access point (*e.g.,* **600** of FIG. **6****)** and additional data, such as, for example, SSID **375** to an asset tracking database (*e.g*., **1010** of FIG. **10A****)** and/or a Wi-Fi AP Database (*e.g*., **1030** of FIG. **10A****),** which may then be used as part of the asset tracking task. One of ordinary skill in the art will appreciate that the SSID field **375** is merely exemplary and other fields may be used to store additional data in accordance with one or more embodiments of the present invention.

FIG. **8** shows a sequence of management frames exchanged between a wireless device **150** and a pseudo Wi-Fi access point (*e.g.,* **600** of FIG. **6****)** as part of Wi-Fi wireless network discovery in accordance with one or more embodiments of the present invention. As previously discussed, a pseudo Wi-Fi access point (*e.g.,* **600** of FIG. **6****)** is only required to participate in only a limited manner portion of the Wi-Fi wireless network discovery process. The pseudo Wi-Fi access point (*e.g.,* **600** of FIG. **6****)** may transmit a pseudo, spoofed, or emulated, beacon frame **220s,** probe response frame **240s,** or other management frame (not shown) that appear to be bona fide management frames (*e.g.,* **300** of FIG. **3B****)** to the wireless device **150.** However, a pseudo Wi-Fi access point (*e.g.,* **600** of FIG. **6****)** is not required to allow a wireless device **150** to authenticate to (*e.g.,* **250, 260** of FIG. **2C****),** associate with (*e.g.,* **270, 280** of FIG. **2C****),** or transfer data (*e.g.,* **290** of FIG. **2C****)** under the protocol with the pseudo Wi-Fi access point (*e.g.,* **600** of FIG. **6****).** In addition, a pseudo Wi-Fi access point (*e.g.,* **600** of FIG. **6****)** is not required to provide any upstream network connectivity or any network connectivity of any kind. As such, in certain embodiments, a pseudo Wi-Fi access point (*e.g.,* **600** of FIG. **6****)** does not allow a wireless device **150** to authenticate to (*e.g.,* **250, 260** of FIG. **2C****),** associate with (*e.g.,* **270, 280** of FIG. **2C****),** or transfer data *(e.g.,* **290** of FIG. **2C****)** under the protocol with the pseudo Wi-Fi access point (*e.g.,* **600** of FIG. **6****)** and the pseudo Wi-Fi access point (*e.g.,* **600** of FIG. **6****)** does not provide upstream network connectivity. As such, in such embodiments, a wireless device **150** cannot proceed to authentication or association and, in certain embodiments, will not receive anything from the pseudo Wi-Fi access point (*e.g.,* **600** of FIG. **6****)** other than pseudo beacon frames **220s,** probe response frames **240s,** or other management frames (not shown). One of ordinary skill in the art will recognize that only the portions of the Wi-Fi wireless network discovery process may be required for the asset tracking task in accordance with one or more embodiments of the present invention.

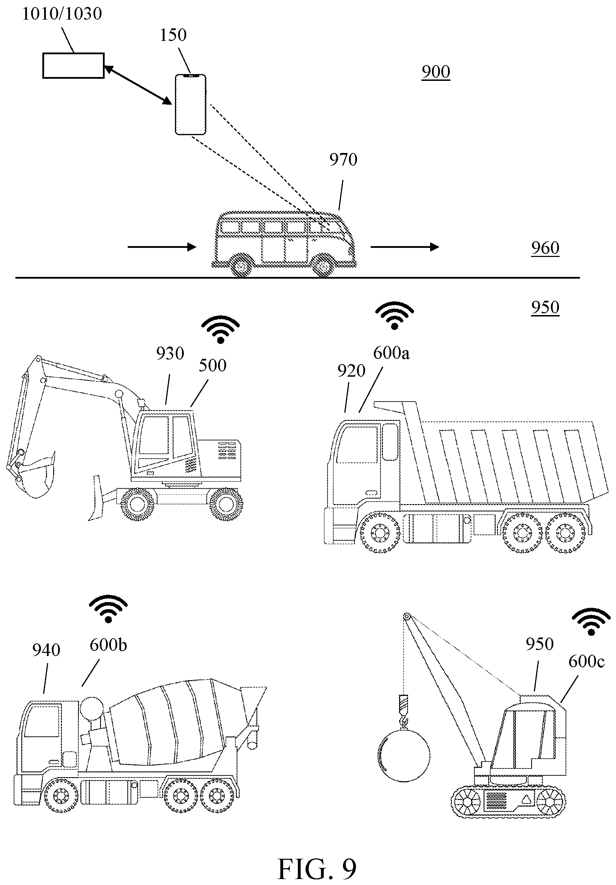

FIG. **9** shows an example of an application of passive asset tracking **900** in accordance with one or more embodiments of the present invention. Specifically, in one or more embodiments of the present invention, one or more conventional Wi-Fi access points (*e.g.,* **500)** and/or pseudo Wi-Fi access points (*e.g.,* **600a, 600b, 600c)** may be disposed on, attached to, or integrated with one or more moveable assets (*e.g.,* **920, 930, 940, 950)** to be passively tracked in accordance with one or more embodiments of the present invention. As previously discussed, in one or more embodiments of the present invention, one or more conventional Wi-Fi access points (*e.g.,* **500** of FIG. **5****)** may be exclusively used, one or more pseudo Wi-Fi access points (*e.g.,* **600** of FIG. **6****)** may be exclusively used, or a mixture of one or more conventional Wi-Fi access points (*e.g.,* **500** of FIG. **5****)** and one or more pseudo Wi-Fi access points (*e.g.,* **600** of FIG. **6****)** may be used. As such, the example showing use of a conventional Wi-Fi access point **500** and a plurality of pseudo Wi-Fi access points **600a, 600b, 600c** is merely for the purpose of illustration and is not limiting. Notwithstanding, one of ordinary skill in the art will appreciate that any combination of one or more conventional Wi-Fi access points (*e.g.,* **500** of FIG. **5****)** and/or one or more pseudo Wi-Fi access points (*e.g.,* **600** of FIG. **6****)** may be used in accordance with one or more embodiments of the present invention. Advantageously, one or more moveable assets (*e.g*., **920, 930, 940, 950)** may be passively tracked by one or more wireless devices **150** that merely happen to come in range, even if only temporarily, of a conventional Wi-Fi access point (*e.g.,* **500)** or a pseudo Wi-Fi access point (*e.g.,* **600a, 600b, 600c)** even though a wireless device **150,** or user thereof, may not even know that they are participating in the asset tracking task.

For example, in the example depicted in the figure, wireless device **150** may be a smartphone carried on a user's person while in a motor vehicle **970** driving down a street **960.** The user's smartphone **150** may, without requiring awareness on the part of the user, report observations of the in-range conventional Wi-Fi access points (*e.g.,* **500)** and/or pseudo Wi-Fi access points (*e.g.,* **600a, 600b, 600c)** it encounters, even if only temporarily, to an asset tracking database (*e.g*., **1010** of FIG. **10A****)** and/or a Wi-Fi AP Database (*e.g*., **1030** of FIG. **10A****),** depending on an application or design. The asset tracking database (*e.g*., **1010** of FIG. **10A****)** may use one or more observations to determine a location of a moveable asset (*e.g.,* **920, 930, 940, 950).** Advantageously, the moveable assets (*e.g*., **920, 930, 940, 950)** and associated conventional Wi-Fi access points (*e.g.,* **500)** or pseudo Wi-Fi access points (*e.g.,* **600a, 600b, 600c)** do not require *any* network connectivity, may be deployed anywhere in the world, and the existing installation/infrastructure of users of smartphones **150** may be used to passively track the locations of the moveable assets (*e.g*., **920, 930, 940, 950)** in an open-network configuration. For the sake of clarity, each asset may include a conventional Wi-Fi access point (*e.g.,* **500** of FIG. **5****)** or a pseudo Wi-Fi access point (*e.g.,* **600** of FIG. **6****)** and in some applications, some assets (*e.g*., **920)** may be deployed with a conventional Wi-Fi access point (*e.g.,* **500)** and other assets (*e.g.,* **600a, 600b, 600c)** may be deployed with a pseudo Wi-Fi access point (*e.g.,* **600** of FIG. **6****).**

As such, for the purpose of this disclosure, passive asset tracking means tracking an asset (*e.g.,* **920, 930, 940, 950)** based on observations of one or more conventional Wi-Fi access points (*e.g.,* **500)** or pseudo Wi-Fi access points (*e.g.,* **600a, 600b, 600c)** without requiring any particular wireless device **150** to authenticate to, associate with, or establish connectivity with any particular conventional Wi-Fi access point (*e.g.,* **500)** or pseudo Wi-Fi access point (*e.g.,* **600a, 600b, 600c).** Moreover, passive asset tracking does not require a conventional Wi-Fi access point (*e.g.,* **500)** or pseudo Wi-Fi access point (*e.g.,* **600a, 600b, 600c)** associated with an asset (*e.g.,* **920, 930, 940, 950)** to provide any network connectivity of any kind at any time.

In certain embodiments, one or more wireless devices **150** may report observation data of an encounter with a conventional Wi-Fi access point (*e.g.,* **500)** and/or a pseudo Wi-Fi access point (*e.g.,* **600a, 600b, 600c)** associated with a moveable asset (*e.g.,* **920, 930, 940, 950)** to a Wi-Fi AP Database (*e.g.,* **1030** of FIG. **10A****).** An asset tracking database (*e.g*., **1010** of FIG. **10A****)** may receive observation data from the Wi-Fi AP Database (*e.g*., **1030** of FIG. **10A****)** comprising unique identifying information and location information that may be used to determine a location of one or more moveable assets (*e.g.*, **920, 930, 940, 950).**

In other embodiments, one or more direct reporting wireless devices **150** may report first observation data of an encounter with a conventional Wi-Fi access point (*e.g.,* **500)** and/or a pseudo Wi-Fi access point (*e.g.,* **600a, 600b, 600c)** associated with a moveable asset (*e.g.,* **920, 930, 940, 950)** to the asset tracking database (*e.g.,* **1010** of FIG. **10A****)** and one or more indirect reporting wireless devices (*e.g.,* **150)** may report second observation data to a Wi-Fi AP Database (*e.g*., **1030** of FIG. **10A****).** The Wi-Fi AP Database (*e.g.,* **1030** of FIG. **10A****)** may receive second observation data from one or more indirect reporting wireless devices (*e.g.,* **150)** that encounter one or more conventional Wi-Fi access points (*e.g.,* **500)** or pseudo Wi-Fi access points (*e.g.,* **600a, 600b, 600c)** associated with one or more assets (*e.g.,* **920, 930, 940, 950).** The asset tracking database (*e.g.,* **1010** of FIG. **10A****)** may obtain second observation data from the Wi-Fi AP Database (*e.g*., **1030** of FIG. **10A****).**

In still other embodiments, one or more wireless devices **150** may report observation data of an encounter with a conventional Wi-Fi access point (*e.g.,* **500)** and/or pseudo Wi-Fi access points (*e.g.,* **600a, 600b, 600c)** associated with an asset (*e.g.,* **920, 930, 940, 950)** to the asset tracking database (*e.g.,* **1010** of FIG. **10A****).** In all such embodiments, the Wi-Fi wireless network discovery process, as well as the reporting of observations of Wi-Fi access points (*e.g.,* **500),** including pseudo Wi-Fi access points (*e.g.,* **600),** encountered, may be advantageously used to passively track one or more assets (*e.g.*, **920, 930, 940, 950)** without requiring that any wireless device **150** authenticate to, associate with, or join any particular Wi-Fi access point (*e.g.,* **500)** or pseudo Wi-Fi access point (*e.g.,* **600),** using publicly accessible Wi-Fi signals, and in passive scanning applications, anonymously with respect to the asset tracking task. In addition, one or more conventional Wi-Fi access points (*e.g.,* **500)** or pseudo Wi-Fi access points (*e.g.,* **600a, 600b, 600c)** associated with one or more assets (*e.g.*, **920, 930, 940, 950)** are not required to provide any network connectivity of any kind at any time.

Returning to the example depicted in the figure, a conventional Wi-Fi access points **500** and a plurality of pseudo Wi-Fi access points **600a, 600b, 600c** may be disposed on, attached to, or integrated with assets **920, 930, 940, 950** that may be deployed in the field **950.** For the purpose of illustration only, capital construction equipment is shown as examples of moveable assets to be tracked. However, one of ordinary skill in the art will recognize that any moveable asset may be tracked in accordance with one or more embodiments of the present invention. It is important to recognize that conventional Wi-Fi access point **500** and pseudo Wi-Fi access points **600a, 600b, 600c** are not required to participate in any particular wireless network or provide any upstream network connectivity or any network connectivity of any kind. Advantageously, the conventional Wi-Fi access point **500** and pseudo Wi-Fi access points **600a, 600b, 600c** are only be required to participate in a portion of the Wi-Fi wireless network discovery process as part of the asset tracking task. Specifically, each conventional Wi-Fi access point **500** disposed on, attached to, or integrated with an asset **930** may broadcast beacon frames (*e.g.,* **220** of FIG. **2C****)** in passive scanning mode (*e.g.,* **200** of FIG. **2A****)** and/or respond to probe request frames (*e.g.,* **240** of FIG. **2C****)** with probe response frames (*e.g.,* **240** of FIG. **2C****)** as part of active scanning mode (*e.g.,* **205** of FIG. **2B****).** Similarly, each pseudo Wi-Fi access point **600a, 600b, 600c** disposed on, attached to, or integrated with assets **920, 940, 950** may broadcast pseudo beacon frames (*e.g*., **220s** of FIG. **8****)** in passive scanning mode *(*e*.g.,* **200** of FIG. **2A****)** and/or respond to probe request frames (*e.g.,* **230** of FIG. **8****)** with pseudo probe response frames (*e.g.,* **240s** of FIG. **8****)** as part of active scanning mode (*e.g.,* **205** of FIG. **2B****).** The beacon frames, conventional or pseudo, (*e.g.,* **220** of FIG. **2C** or **220s** of FIG. **8****)** or probe response frames, conventional or pseudo, (*e.g.,* **240** of FIG. **2C** or **240s** of FIG. **8****)** may include information that uniquely identifies the Wi-Fi access point (*e.g.,* **500, 600a, 600b, 600c),** and by proxy, a particular asset (*e.g.,* **920, 930, 940, 950)** itself. It is important to recognize that each moveable asset (*e.g.,* **920, 930, 940, 950)** to be tracked is not required to have any communications capabilities of any kind whatsoever other than the ability to participate in, at least part of, the Wi-Fi wireless network discovery process. One of ordinary skill in the art will recognize that the beacon frame (*e.g.,* **220** of FIG. **2C** or **220s** of FIG. **8****),** probe response frame (*e.g.,* **240** of FIG. **2C** or **240s** of FIG. **8****),** or other management frame (not shown) may contain other information that may be used as part of the asset tracking task in one or more embodiments of the present invention.

In certain embodiments, in passive scanning mode (*e.g.,* **200** of FIG. **2A****),** the conventional Wi-Fi access point **500** and pseudo Wi-Fi access points **600a, 600b, 600c** may be physically and logically associated with assets **920, 930, 940, 950** respectively and broadcast beacon frames (*e.g.,* **220** of FIG. **2C** or **220s** of FIG. **8****)** at regular intervals, each of which includes information that uniquely identifies the particular conventional Wi-Fi access point (*e.g.,* **500)** or pseudo Wi-Fi access point (*e.g.,* **600a, 600b, 600c)** and, to those who recognize the association, the asset (*e.g.,* **920, 930, 940, 950)** logically associated with it in the asset tracking database (*e.g.*, **1010** of FIG. **10A****).** One or more wireless devices **150** may come in-range of one or more conventional Wi-Fi access points **500** and/or pseudo Wi-Fi access points **600a, 600b, 600c** and receive one or more beacon frames (*e.g.,* **220** of FIG. **2C** or **220s** of FIG. **8****).** As previously discussed, wireless devices **150** report, via a cellular or other connection, observation data. Each report of observation data includes, at least, unique identifying information, such as, for example, the BSSID, of a conventional Wi-Fi access point (*e.g.,* **500)** or pseudo Wi-Fi access point (*e.g.,* **600)** encountered and location information of the Wi-Fi access point (*e.g.,* **500)** or pseudo Wi-Fi access point (*e.g.,* **600)** encountered. The location information may include coordinates such as latitude and longitude or other information that may be used to determine a location. In certain embodiments, the observation data for a given conventional Wi-Fi access point (*e.g.,* **500)** or pseudo Wi-Fi access point (*e.g.,* **600)** may include one or more of the time, date, current location, speed, and direction of travel of the reporting wireless device **150** at or near the time of the encounter, and SSID, received signal strength, or other information pertaining to the conventional Wi-Fi access point (*e.g.,* **500)** or pseudo Wi-Fi access point (*e.g.,* **600)** encountered. In addition, observation data may include any of the above-noted information from other in-range conventional Wi-Fi access points (*e.g.,* **500)** or pseudo Wi-Fi access points (*e.g.,* **600)** encountered at or near the same time that the given conventional Wi-Fi access point (*e.g.,* **500)** or pseudo Wi-Fi access point (*e.g.,* **600)** of interest was encountered. The observation data may be reported to an original equipment manufacturer of the wireless device **150,** an operating system developer of an operating system executing on the wireless device **150,** or third-party software developer that maintain a Wi-Fi AP Database (*e.g*., **1030** of FIG. **10A****),** and/or a dedicated asset tracking database (*e.g*., **1010** of FIG. **10A****)** of the present invention that may be used to track assets.

While the observation reporting aspect of wireless devices **150** is typically used to improve the accuracy of location-based services, here, the observation data provides information that may be used to estimate the location of one or more conventional Wi-Fi access points **500** or pseudo Wi-Fi access points **600a, 600b, 600c** at a particular time and date without requiring the purposeful participation of any particular wireless device **150** in any particular Wi-Fi wireless network. As such, this information may be used to determine the location of one or more conventional Wi-Fi access points **500** or pseudo Wi-Fi access points **600a, 600b, 600c** and, by proxy, one or more moveable assets **920, 930, 940, 950** with substantial accuracy, that may be further refined with well-known location refinement techniques typically used by wireless devices **150** in place of, or to enhance, GPS location determination or location-based services.

In other embodiments, in active scanning mode (*e.g.,* **205** of FIG. **2B****),** one or more wireless devices **150** may transmit a probe request frame (*e.g.,* **230** of FIG. **2C****)** that is not directed to any particular conventional Wi-Fi access point (*e.g.,* **500)** or pseudo Wi-Fi access point (*e.g.,* **600),** requesting that all in-range Wi-Fi access points announce their presence. In response, in-range conventional Wi-Fi access point **500** and pseudo Wi-Fi access points **600a, 600b, 600c** may transmit a probe response frame (*e.g.,* **240** of FIG. **2C** or **240s** of FIG. **8****)** which includes information that uniquely identifies the responding Wi-Fi access point **500** and pseudo Wi-Fi access points **600a, 600b, 600c** and to those who recognize the association, the asset **920, 930, 940, 950** associated with it. As previously discussed, wireless devices **150** report, via a cellular or other connection, observation data including, at least, unique identifying information, such as, for example, the BSSID, of one or more conventional Wi-Fi access points (*e.g.,* **500)** and/or pseudo Wi-Fi access points (e.g., **600)** encountered and location information of the one or more conventional Wi-Fi access points (*e.g.,* **500)** and/or pseudo Wi-Fi access points (*e.g.,* **600)** encountered. The location information may include coordinates such as latitude and longitude or other information that may be used to determine a location. In certain embodiments, the observation data for a given conventional Wi-Fi access point (*e.g.,* **500)** or pseudo Wi-Fi access point (*e.g.,* **600)** may include one or more of the time, date, current location, speed, and direction of travel of the reporting wireless device **150** at or near the time of the encounter, and SSID, received signal strength, or other information pertaining to the conventional Wi-Fi access point (*e.g.,* **500)** or pseudo Wi-Fi access point (*e.g.,* **600)** encountered. In addition, observation data may include any of the above-noted information from other in-range Wi-Fi access points (*e.g.,* **500** or **600)** encountered at or near the same time that the given conventional Wi-Fi access point (*e.g.,* **500)** or pseudo Wi-Fi access point (*e.g.,* **600)** of interest was encountered. The observation data may be reported to an original equipment manufacturer of the wireless device **150,** an operating system developer of an operating system executing on the wireless device **150,** or third-party software developer that maintain a Wi-Fi AP Database (*e.g*., **1030** of FIG. **10A****),** and/or a dedicated asset tracking database (*e.g*., **1010** of FIG. **10A****)** of the present invention that is used to track assets. Mobile operating systems used on smartphones **150** typically include existing infrastructure to report observation data to the operating system developer's Wi-Fi AP Database (*e.g.*, **1030** of FIG. **10A****)** in the background without requiring awareness on the part of the user.

While a single wireless device **150** is depicted in the figure, one of ordinary skill in the art will recognize that any number of wireless devices **150** may come in and out of range of the assets **920, 930, 940, 950** over time, each of which may independently report observation data of in-range conventional Wi-Fi access points (*e.g.,* **500)** and/or pseudo Wi-Fi access points (*e.g.,* **600)** they encounter (and other information that may be useful to the asset tracking task). In fact, the tracking accuracy may improve as a function of the number of observations that take place over time, or potentially provide additional information such as movement of assets **920, 930, 940, 950** throughout the day, or the speeds at which they are moving, or even when they leave a boundary of the job site **950.**

FIG. **10A** shows a system **1000** for passive asset tracking using observations of one or more conventional Wi-Fi access points (*e.g.,* **500)** and/or pseudo Wi-Fi access points (*e.g.,* **600)** in accordance with one or more embodiments of the present invention. The system **1000** may include a software application comprising an asset tracking database **1010** executing on a computing system **1100** and a client portal **1020** that provides asset tracking clients (not shown) access to data stored in asset tracking database **1010.**

In certain embodiments, asset tracking database **1010** may be a database software application comprising a backend that performs housekeeping software functions, a database management system ("DBMS") that provides data processing functions, a data store (the literal database) that contains observation and other data, one or more administrative interfaces, and one or more other interfaces to the data contained in database **1010.** One of ordinary skill in the art will recognize that asset tracking database **1010** may include other software, functions, and features, well known in the art, necessary to deploy a database-type application in accordance with one or more embodiments of the present invention. In certain embodiments, client portal **1020** may be a web-based portal (not independently illustrated) that provides access to data stored in asset tracking database **1010.** In other embodiments, client portal **1020** may be a stand-alone software application (not independently illustrated) that provides access to data stored in asset tracking database **1010.** In still other embodiments, client portal **1020** may be an interface integrated with asset tracking database **1010** to provide frontend access to asset tracking database **1010.** One of ordinary skill in the art will recognize that client portal **1020** may include other software, functions, and features, well known in the art, necessary to access and use data contained in the database in accordance with one or more embodiments of the present invention.

At the outset, it is important to recognize that everything depicted to the right of the symbolic line of demarcation **1090** in the figure (included solely to enhance understanding), with the exception of conventional Wi-Fi access point **500** or pseudo Wi-Fi access point **600** disposed on, attached to, or integrated with asset **920,** represents existing infrastructure representative of the smartphone ecosystem of users and infrastructure. The behavior of the wireless devices (*e.g.,* **150)** that participate in this ecosystem, including their inherent reporting features of Wi-Fi access points encountered, may be leveraged to passively track assets, potentially without awareness, in accordance with one or more embodiments of the present invention. Importantly, wireless devices (*e.g.,* **150)** cannot distinguish between a conventional Wi-Fi access point (*e.g.,* **500)** and a pseudo Wi-Fi access point (*e.g.,* **600)** with respect to the identification of Wi-Fi wireless networks and associated Wi-Fi access points.

In certain embodiments, asset tracking database **1010** may obtain observation data indirectly from a third-party Wi-Fi AP Database **1030** that receives observations from one or more wireless devices (*e.g.,* **150b, 150c, 150d),** typically based on reports of observation data used to improve the accuracy of location services. In such embodiments, Wi-Fi AP Database **1030** may be a database independently established, operated, and maintained separate and apart from asset tracking database **1010** by an original equipment manufacturer of a wireless device (*e.g.,* **150),** an operating system developer of an operating system executing on a wireless device (*e.g.,* **150),** or a third-party software developer. For example, in certain embodiments, Wi-Fi AP Database **1030** may be Apple^{®} iOS^{®}, Google^{®} Android^{®}, or Microsoft^{®} location-based services databases typically used to improve location determination accuracy for their respective end users. In other embodiments, Wi-Fi AP Database **1030** may be a database of observations including the unique identifying information of conventional Wi-Fi access points (*e.g.,* **500)** and/or pseudo Wi-Fi access points (*e.g.,* **600)** and information relating to the location of the Wi-Fi access points (*e.g.,* **500 or 600)** that are commercially offered by third-parties including, for example Cisco Systems^{®}, Facebook^{®}, WhatsApp^{®}, X-Mode^{®}, Ruckus^{®}, and Skyhook^{®}. One or more wireless devices (*e.g.,* **150a)** may report observation data to Wi-Fi AP Database **1030** for storage in their database and asset tracking database **1010** may obtain observation data from Wi-Fi AP Database **1030** for use with the asset tracking task, without requiring an awareness on the part of the Wi-Fi AP Database **1030,** the reporting wireless devices (*e.g.,* **150b, 150c, 150d),** or users thereof, that they are participating in the asset tracking task. The observation data reported to the Wi-Fi AP Database **1030** and the observation data obtained by the asset tracking database **1010** may or may not be the same, but the observation data obtained by asset tracking database **1010** includes at least the unique identifying information and location information of a conventional Wi-Fi access point **500** or pseudo Wi-Fi access point **600** encountered that is associated with an asset **920.** As such, observation data obtained by asset tracking database **1010** may be subset, superset, or different than observation data stored by Wi-Fi AP Database **1030** in accordance with one or more embodiments of the present invention.

In other embodiments, asset tracking database **1010** may obtain observation data directly from one or more direct reporting wireless devices (*e.g.,* **150a)** and may also obtain observation data from Wi-Fi AP Database **1030,** that receives observations from one or more indirect reporting wireless devices (*e.g.,* **150b, 150c, 150d).** In such hybrid embodiments, observation data may be reported directly to asset tracking database **1010** and/or reported indirectly to asset tracking database **1010** by way of Wi-Fi AP Database **1030.** Asset tracking database **1010** may give preference to, or value, observation data reported directly differently from observation data reported indirectly. The preference may be used in the location determination made by asset tracking database **1010.**

In still other embodiments, asset tracking database **1010** may obtain observation data directly from one or more direct reporting wireless devices (*e.g.*, **150a).** In such embodiments, one or more wireless devices (*e.g.,* **150a)** may report observation data directly to asset tracking database **1010** for use in the asset tracking task. The report of observation data may be requested, received, processed, and/or filtered as discussed in more detail herein and stored in asset tracking database **1010,** which may serve as the functional equivalent, and in lieu of, a Wi-Fi AP Database **1030** for such embodiments.

For purposes of illustration, one or more conventional Wi-Fi access points **500** or pseudo Wi-Fi access points **600** may be disposed on, attached to, or integrated with one or more moveable assets **920** that are desired to be tracked. The unique identifying information of a conventional Wi-Fi access point **500** or pseudo Wi-Fi access point **600** may be used to uniquely identify an asset **920** that it is physically and logically associated with the asset **920** in the asset tracking database **1010.** The one or more assets **920** may then be deployed in the field and need not be co-located. Advantageously, the deployed conventional Wi-Fi access point **500** or pseudo Wi-Fi access point **600** do not require any network or communication connectivity of any kind, nor are they required to receive GPS signals, they simply must either broadcast conventional or pseudo beacon frames (*e.g.,* **220** of FIG. **2C** or **220s** of FIG. **8****)** or respond to probe request frames (*e.g.,* **230** of FIG. **2C****)** with conventional or pseudo probe response frames (*e.g.,* **240** of FIG. **2C** **or 240s** of FIG. **8****)** as part of the Wi-Fi wireless network discovery process, each frame of which includes unique identifying information of the conventional Wi-Fi access point **500** or pseudo Wi-Fi access point **600,** depending on a given application.

When one or more wireless devices (*e.g.,* **150)** come into range of one or more conventional Wi-Fi access points **500** or pseudo Wi-Fi access points **600** disposed on, attached to, or integrated with one or more assets **920,** each in-range conventional Wi-Fi access point **500** or pseudo Wi-Fi access point **600** may broadcast, either conventional or pseudo, their respective beacon frame (*e.g.,* **220** of FIG. **2C** or **220s** of FIG. **8****)** or respond to a probe request frame (*e.g.,* **230** of FIG. **2C****)** with a probe response frame (*e.g.,* **240** of FIG. **2C** or **240s** of FIG. **8****),** each of which includes information that may be used by asset tracking database **1010** to uniquely identify the conventional Wi-Fi access point **500** or pseudo Wi-Fi access point **600** and other information that may be useful to the asset tracking task, including custom use of certain information in the beacon frame (*e.g.,* **220** of FIG. **2C** or **220s** of FIG. **8****)** or probe response frame (*e.g.,* **240** of FIG. **2C** or **240s** of FIG. **8****).** The one or more wireless devices **150** may report observation data of the in-range conventional Wi-Fi access points **500** or pseudo Wi-Fi access points **600** encountered directly to the asset tracking database **1010** and/or to the Wi-Fi AP Database **1030** based on an application or design.

As previously discussed, wireless devices **150** report, via a cellular or other connection, observation data. Observation data includes, at least, unique identifying information, such as, for example, the BSSID, of the one or more conventional Wi-Fi access points **500** or pseudo Wi-Fi access points **600** encountered and location information of the one or more conventional Wi-Fi access points **500** or pseudo Wi-Fi access points **600** encountered. The location information may include coordinates such as latitude and longitude or other information that may be used to determine a location of a conventional Wi-Fi access point **500** or pseudo Wi-Fi access points **600** encountered. In certain embodiments, the observation data for a given conventional Wi-Fi access point **500** or pseudo Wi-Fi access point **600** may include one or more of the time, date, current location, speed, and direction of travel of the reporting wireless device **150** at or near the time of the encounter, and SSID, received signal strength, or other information pertaining to the conventional Wi-Fi access point **500** or pseudo Wi-Fi access point **600** encountered. In addition, observation data may include any of the above-noted information from other in-range Wi-Fi access points (*e.g.,* **500** or **600)** encountered at or near the same time that the conventional Wi-Fi access point **500** or pseudo Wi-Fi access point **600** of interest was encountered. In some cases, the current location of the reporting wireless device **150** at or near the time of the encounter may be used, potentially in combination with other information, to establish a location of an encountered conventional Wi-Fi access point **500** or pseudo Wi-Fi access points **600** as of the time and date of the encounter.

The observation data may be reported directly to a Wi-Fi AP Database **1030** maintained by an original equipment manufacturer of the wireless device **150,** an operating system developer of an operating system executing on the wireless device **150,** or third-party software developer and/or a dedicated asset tracking database **1010** of the present invention that is used to track assets. The one or more wireless devices **150** may report their encounter with in-range conventional Wi-Fi access points **500** or pseudo Wi-Fi access points **600** at approximately the time of the encounter or at a later time if a wireless device **150** does not have network capabilities at the time of the encounter. Asset tracking database **1010** may use observation data obtained directly from one or more wireless devices (*e.g.,* **150a)** and/or data obtained from Wi-Fi AP Database **1030** (*e.g*., originating from **150b, 150c, 150d)** to identify and locate one or more assets (*e.g*., **920),** the data of which may be stored in asset tracking database **1010.** Depending on the type of data received, asset tracking database **1010** may manipulate, extrapolate, or generate additional data stored therein based on available relevant information.

While various embodiments of system **1000** have been disclosed, one of ordinary skill in the art will recognize that a subset, superset, or combination of functions or features thereof, may be integrated, distributed, or excluded, in whole or in part, based on an application or design in accordance with one or more embodiments of the present invention and the disclosure is not intended to limit the types, kinds, or arrangements of system **1000** that may be implemented, including those that include, integrate, distribute, separate, or exclude various aspects or features in accordance with one or more embodiments of the present invention.

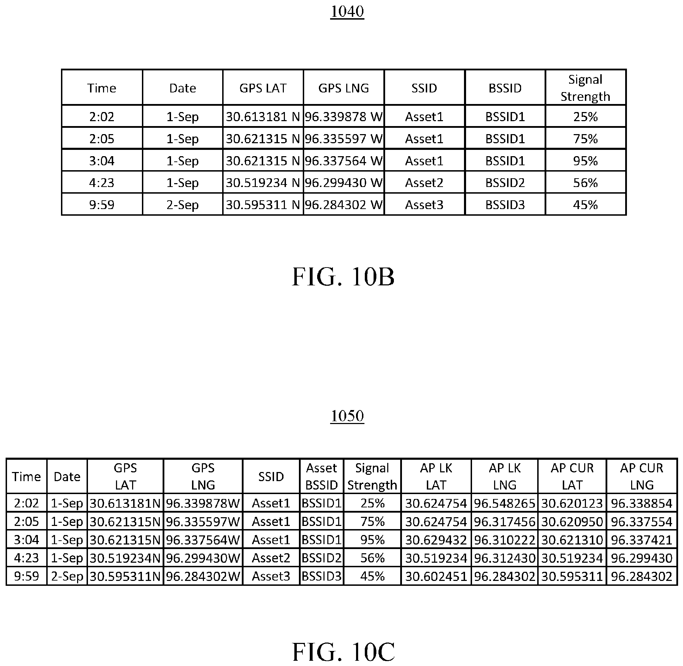

Continuing, FIG. **10B** shows an example of observation data **1040** of one or more conventional Wi-Fi access points (*e.g.,* **500** of FIG. **10A****)** or pseudo Wi-Fi access points (*e.g.,* **600** of FIG. **10A****)** reported by a wireless device (*e.g.,* **150a** of FIG. **10A****)** based on an encounter in accordance with one or more embodiments of the present invention. As previously discussed, wireless devices (*e.g.,* **150a** of FIG. **10A****)** may report, via a cellular or any other network connection, observation data. Each report of observation data may include, at least, unique identifying information, such as, for example, the BSSID, of one or more conventional Wi-Fi access points (*e.g.,* **500** of FIG. **10A****)** or pseudo Wi-Fi access points (*e.g.,* **600** of FIG. **10A****)** encountered and location information of the one or more conventional Wi-Fi access points (*e.g.,* **500** of FIG. **10A****)** or pseudo Wi-Fi access points (*e.g., **600*** of FIG. **10A****)** encountered. In certain embodiments, the observation data for a given conventional Wi-Fi access point (*e.g.,* **500** of FIG. **10A****)** or pseudo Wi-Fi access point (*e.g.,* **600** of FIG. **10A****)** may include one or more of the time, date, current location, speed, and direction of travel of the reporting wireless device **150** at or near the time of the encounter, and SSID, received signal strength, or other information pertaining to the conventional Wi-Fi access point (*e.g.,* **500** of FIG. **10A****)** or pseudo Wi-Fi access point (*e.g.,* **600** of FIG. **10A****)** encountered. In addition, observation data may include any of the above-noted information from other in-range Wi-Fi access points (*e.g.,* **500** or **600)** encountered at or near the same time that the given conventional Wi-Fi access point (*e.g.,* **500)** or pseudo Wi-Fi access point (*e.g.,* **600** of FIG. **10A****)** of interest was encountered. The observation data may be reported directly to the asset tracking database (*e.g*., **1010** of FIG. **10A****)** or to a Wi-Fi AP Database (*e.g*., **1030** of FIG. **10A****).**

The unique identifying information may include any information that may be used to uniquely identify a conventional Wi-Fi access point (*e.g.,* **500** of FIG. **10A****)** or pseudo Wi-Fi access point (*e.g.,* **600** of FIG. **10A****)** encountered including any unique fields of the beacon frames (*e.g.,* **220** of FIG. **2C** or **220s** of FIG. **8****)** or probe response frames (*e.g.,* **240** of FIG. **2C** or **240s** of FIG. **8****)** transmitted therefrom that may be used or repurposed to convey information regarding the Wi-Fi access point (*e.g.,* **500** of FIG. **10A****)** or pseudo Wi-Fi access point (*e.g.,* **600** of FIG. **10A****)** or the asset (*e.g.,* **920** of FIG. **10A****)** associated therewith. For example, due to the unique nature of the BSSID, the BSSID of a conventional Wi-Fi access point (*e.g.,* **500 of** FIG. **10A****)** or pseudo Wi-Fi access point (*e.g.,* **600** of FIG. **10A****)** may be used to uniquely identify the conventional Wi-Fi access point (*e.g.,* **500** of FIG. **10A****)** or pseudo Wi-Fi access point *(e.g.,* **600** of FIG. **10A****)** encountered and an asset (*e.g.,* **920** of FIG. **10A****)** it is physically disposed on, attached or, or integrated with and logically associated with in the asset tracking database (*e.g*., **1010** of FIG. **10A****).** However, the MAC address, SSID, and/or other fields contained within the management frames may be used to further identify a conventional Wi-Fi access point (*e.g.,* **500** of FIG. **10A****)** or pseudo Wi-Fi access point (*e.g.,* **600** of FIG. **10A****)** as an asset tracking type of Wi-Fi access point or otherwise exploited for use in the asset tracking task. One of ordinary skill in the art will recognize any information transmitted from a conventional Wi-Fi access point (*e.g.,* **500** of FIG. **10A****)** or pseudo Wi-Fi access point (*e.g.,* **600** of FIG. **10A****)** as part of a beacon frame (*e.g.,* **220** of FIG. **2C** or **220s** of FIG. **8****)** or probe response frame (*e.g.,* **240** of FIG. **2C** or **240s** of FIG. **8****)** that may be used to uniquely identify the conventional Wi-Fi access point (*e.g.,* **500** of FIG. **10A****)** or pseudo Wi-Fi access point (*e.g.,* **600** of FIG. **10A****)** may be used in accordance with one or more embodiments of the present invention.

The location information may include coordinates representing a location such as latitude and longitude reported for the conventional Wi-Fi access point (*e.g.,* **500** of FIG. **10A****)** or pseudo Wi-Fi access point (*e.g.,* **600** of FIG. **10A****)** or any other information that may be used to determine the location of the conventional Wi-Fi access point (*e.g.,* **500** of FIG. **10A****)** or pseudo Wi-Fi access point (*e.g.,* **600** of FIG. **10A****).** For example, other information that may be used to determine a location of a particular conventional Wi-Fi access point (*e.g.,* **500** of FIG. **10A****)** or pseudo Wi-Fi access point (*e.g.,* **600** of FIG. **10A****)** may include RSSI, fingerprinting, angle of arrival, time of flight, or other data related to the conventional Wi-Fi access point (*e.g.,* **500** of FIG. **10A****)** or pseudo Wi-Fi access point (*e.g.,* **600** of FIG. **10A****)** of interest or any information related to other nearby in-range Wi-Fi access points (*e.g.,* **500 or 600)** that facilitate positioning.

One of ordinary skill in the art will recognize that the type and kind of information reported by a reporting wireless device (*e.g.,* **150** of FIG. **10A****)** based on an encounter with a conventional Wi-Fi access point (*e.g.,* **500** of FIG. **10A****)** or pseudo Wi-Fi access point (*e.g.,* **600** of FIG. **10A****)** may vary based on an application or design in accordance with one or more embodiments of the present invention, but must include at least unique identifying information of the encountered conventional Wi-Fi access point (*e.g.,* **500** of FIG. **10A****)** or pseudo Wi-Fi access point (*e.g.,* **600** of FIG. **10A****)** and location information related thereto.

Continuing, FIG. **10C** shows an example of asset data **1050** stored or generated by asset tracking database (*e.g*., **1010** of FIG. **10A****)** in accordance with one or more embodiments of the present invention. Asset tracking database (*e.g.*, **1010** of FIG. **10A****)** may associate unique identifying information, such as, for example, the BSSID, of a particular conventional Wi-Fi access point (*e.g.,* **500** of FIG. **10A****)** or pseudo Wi-Fi access point (*e.g.,* **600** of FIG. **10A****)** with a particular asset (*e.g.,* **920** of FIG. **10A****)** on which it is disposed, attached to, or integrated with to identify the asset (*e.g.,* **920** of FIG. **10A****)** within the system (*e.g.,* **1000** of FIG. **10A****).** Once associated, asset tracking database (*e.g.*, **1010** of FIG. **10A****)** may use observation data that is reported, directly or indirectly, by one or more wireless devices (*e.g.,* **150** of FIG. **10A****)** that encounter the conventional Wi-Fi access point (*e.g.,* **500** of FIG. **10A****)** or pseudo Wi-Fi access point (*e.g.,* **600** of FIG. **10A****)** to passively track the asset (*e.g.,* **920** of FIG. **10A****),** in many instances without an awareness by wireless devices (*e.g.,* **150** of FIG. **10A****),** or users thereof, that they are participating in the asset tracking task.

Asset tracking database (*e.g.*, **1010** of FIG. **10A****)** may receive and store observation data obtained directly from a direct reporting wireless device (e.g., **150a** of FIG. **10A****)** that reports an encounter with a conventional Wi-Fi access point (*e.g.,* **500** of FIG. **10A****)** or pseudo Wi-Fi access point (*e.g.,* **600** of FIG. **10A****)** or observation data obtained from a Wi-Fi AP Database (*e.g*., **1030** of FIG. **10A****).** The observation data includes, at least, unique identifying information, such as, for example, the BSSID, of one or more conventional Wi-Fi access points (*e.g.,* **500)** or pseudo Wi-Fi access points (*e.g.,* **600** of FIG. **10A****)** encountered and location information of the one or more conventional Wi-Fi access points (*e.g.,* **500)** or pseudo Wi-Fi access points (*e.g.,* **600** of FIG. **10A****)** encountered. Asset tracking database (*e*.*g.*, **1010** of FIG. **10A****)** may also store one or more of a last known location for a conventional Wi-Fi access point (*e.g.,* **500** of FIG. **10A****)** or pseudo Wi-Fi access point (*e.g.,* **600** of FIG. **10A****)** and asset (*e.g.,* **920)** associated therewith, a history of last known locations for the conventional Wi-Fi access point (*e.g.,* **500** of FIG. **10A****)** or pseudo Wi-Fi access point (*e.g.,* **600** of FIG. **10A****)** and asset (*e.g.,* **920)** associated therewith, and a current location for the conventional Wi-Fi access point (*e.g.,* **500** of FIG. **10A****)** or pseudo Wi-Fi access point (*e.g.,* **600** of FIG. **10A****)** and asset (*e.g.,* **920)** associated therewith. Asset tracking database (*e.g.,* **1010** of FIG. **10A****)** may also receive and store one or more of the time, date, current location, speed, and direction of travel of the reporting wireless device (*e.g.,* **150** of FIG. **10A****)** at or near the time of the encounter, and SSID, received signal strength, or other information pertaining to the conventional Wi-Fi access point (*e.g.,* **500)** or pseudo Wi-Fi access point (*e.g.,* **600** of FIG. **10A****)** encountered. In addition, asset tracking database (*e.g.*, **1010** of FIG. **10A****)** may receive and store any of the above-noted information from other in-range Wi-Fi access points (*e.g.,* **500** or 600) encountered at or near the same time that the conventional Wi-Fi access point (*e.g.,* **500** of FIG. **10A****)** or pseudo Wi-Fi access point (*e.g.,* **600** of FIG. **10A****)** of interest was encountered.

In certain embodiments, asset tracking database (*e.g.*, **1010** of FIG. **10A****)** may determine a location for a moveable asset (*e.g.,* **920** of FIG. **10A****)** to be tracked based on the last known reported location of its associated conventional Wi-Fi access point (*e.g.,* **500** of FIG. **10A****)** or pseudo Wi-Fi access point (*e.g.,* **600** of FIG. **10A****).** However, asset tracking database (*e.g.*, **1010** of FIG. **10A****)** may use one or more of historical data about the location of the conventional Wi-Fi access point (*e.g.,* **500** of FIG. **10A****)** or pseudo Wi-Fi access point (*e.g.,* **600** of FIG. **10A****),** the times, dates, last known locations, and received signal strengths to the conventional Wi-Fi access point (*e.g.,* **500** of FIG. **10A****)** or pseudo Wi-Fi access point (*e.g.,* **600** of FIG. **10A****),** and the times, dates, locations, last known locations, and received signal strengths to known Wi-Fi access points (*e.g.,* **500** or **600)** in the vicinity of the conventional Wi-Fi access point (*e.g.,* **500** of FIG. **10A****)** or pseudo Wi-Fi access point (*e.g.,* **600** of FIG. **10A****)** of interest. Depending on the information available, well known GPS, Wi-Fi, location services, trilateration, triangulation, and any other positioning techniques may be used to determine or refine the accuracy of the location determination of the particular conventional Wi-Fi access point (*e.g.,* **500** of FIG. **10A****)** or pseudo Wi-Fi access point (*e.g.,* **600** of FIG. **10A****)** of interest and, by association, the location of the asset (*e.g.,* **920** of FIG. **10A****).** As such, asset tracking database (*e.g.*, **1010** of FIG. **10A****)** may develop a historical trend of location and potentially other information relating to the particular asset (*e.g.,* **920** of FIG. **10A****)** over a period of time. Thus, tracking accuracy may increase based on the number of observations obtained by the asset tracking database (*e.g.*, **1010** of FIG. **10A****).**

For purposes of example, asset tracking database (*e.g*., **1010** of FIG. **10A****)** may include a data structure that includes a time, a date, a GPS or current location, for example, a latitude ("GPS LAT") and a longitude ("GPS LNG"), SSID, BSSID, and a received signal strength of an discovered conventional Wi-Fi access point (*e.g.,* **500** of FIG. **10A****)** or pseudo Wi-Fi access point (*e.g.,* **600** of FIG. **10A****)** as part of each report, received directly or indirectly, from a wireless device (*e.g.,* **150** of FIG. **10A****)** that encounters an in-range conventional Wi-Fi access point (*e.g.,* **500** of FIG. **10A****)** or pseudo Wi-Fi access point (*e.g.,* **600** of FIG. **10A****).** The BSSID of the discovered conventional Wi-Fi access point (*e.g.,* **500** of FIG. **10A****)** or pseudo Wi-Fi access point (*e.g.,* **600** of FIG. **10A****)** may be associated with, or used to reference, a particular asset (*e.g.,* **920)** being tracked within asset tracking database (*e.g.,* **1010** of FIG. **10A****).** Asset tracking database (*e.g*., **1010** of FIG. **10A****)** may receive, calculate, or estimate a last known ("AP LK") position of the discovered conventional Wi-Fi access point (*e.g.,* **500** of FIG. **10A****)** or pseudo Wi-Fi access point (*e.g.,* **600** of FIG. **10A****).** If a last known position of a conventional Wi-Fi access point (*e.g.,* **500** of FIG. **10A****)** or pseudo Wi-Fi access point (*e.g.,* **600** of FIG. **10A****)** is not known, it may be estimated by the GPS or current location of the most recent wireless device (*e.g.,* **150** of FIG. **10A****)** that reported an observation of the conventional Wi-Fi access point (*e.g.,* **500** of FIG. **10A****)** or pseudo Wi-Fi access point (*e.g.,* **600** of FIG. **10A****)** or determined or further refined with well-known positioning techniques. Asset tracking database (*e.g.*, **1010** of FIG. **10A****)** may, based on available information, calculate a current ("AP CUR") location for one or more conventional Wi-Fi access points (*e.g.,* **500** of FIG. **10A****)** or pseudo Wi-Fi access points (*e.g.,* **600** of FIG. **10A****),** and by relation, the associated assets (*e.g.,* **920** of FIG. **10A****)** thereof. One of ordinary skill in the art will appreciate that calculating a location based on the last known location of one or more Wi-Fi access points (*e.g.,* **500 or 600),** if any, the GPS or current locations of one or more wireless devices (*e.g.,* **150** of FIG. **10A****)** reporting the encounter with the conventional Wi-Fi access points (*e.g.,* **500** of FIG. **10A****)** or pseudo Wi-Fi access points (*e.g.,* **600** of FIG. **10A****),** if available, and their relative received signal strengths, and potentially other information relating thereto, may be used to determine and/or refine the location determination of one or more conventional Wi-Fi access points (*e.g.,* **500** of FIG. **10A****)** or pseudo Wi-Fi access points (*e.g.,* **600** of FIG. **10A****),** and assets (*e.g.,* **920** of FIG. **10A****)** associated therewith, using well-known positioning and location refinement techniques. The calculated current location may be stored in asset tracking database (*e.g.*, **1010** of FIG. **10A****)** as the best estimate of where a particular conventional Wi-Fi access point (*e.g.,* **500** of FIG. **10A****)** or pseudo Wi-Fi access point (*e.g.,* **600** of FIG. **10A****),** and by relation, the associated asset (*e.g*., **920** of FIG. **10A****)** may be located. The accuracy of the location determination may be enhanced with more observations by other wireless devices (*e.g.,* **150)** that come into range of the conventional Wi-Fi access point (*e.g.,* **500** of FIG. **10A****)** or pseudo Wi-Fi access point (*e.g.,* **600** of FIG. **10A****)** over time.

One of ordinary skill in the art will recognize that asset tracking database (*e.g*., **1010** of FIG. **10A****)** may receive, generate, or store any other relevant data relating to a conventional Wi-Fi access point (*e.g.,* **500** of FIG. **10A****)** or pseudo Wi-Fi access point (*e.g.,* **600** of FIG. **10A****),** an asset (*e.g.,* **920** of FIG. **10A****)** associated therewith, or any other information relevant to the asset tracking task based on an application or design in accordance with one or more embodiments of the present invention.

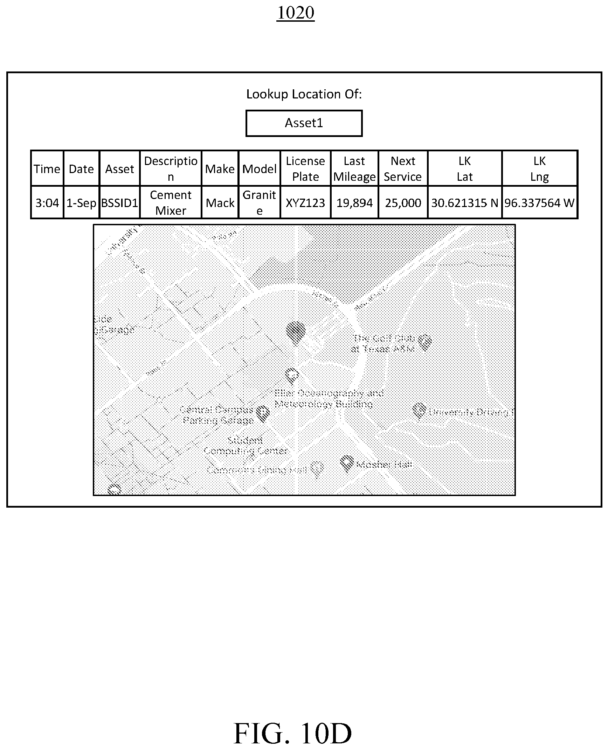

FIG. **10D** shows an example of a client portal **1020** to an asset tracking database (*e.g*., **1010** of FIG. **10A****)** in accordance with one or more embodiments of the present invention. A user (not shown) may access the data contained within asset tracking database (*e.g*., **1010** of FIG. **10A****)** via client portal **1020.** Client portal **1020** may provide the user with the ability to access at least some of the data stored in asset tracking database (*e.g*., **1010** of FIG. **10A****).** For example, a user may inquire as to the location of a specific asset, in the example depicted, *Asset1,* which is a cement mixer truck. Client portal **1020** lodges the query with asset tracking database (*e.g.*, **1010** of FIG. **10A****),** receives the requested data, which in this case, may include the unique identifying information of the asset (*e.g.,* **920** of FIG. **10A****)** as well as its last known location and optionally a map showing the last known location. One of ordinary skill in the art will recognize that the interface, interaction with, and display of, data by client portal **1020** may vary based on an application or design in accordance with one or more embodiments of the present invention.

In one or more embodiments of the present invention, a method of passive asset tracking may only use observations of conventional Wi-Fi access points (*e.g.,* **500** of FIG. **10A****)** or pseudo Wi-Fi access points (*e.g.,* **600** of FIG. **6****)** received from a Wi-Fi AP Database (*e.g.*, **1030** of FIG. **10A****).**

In one or more embodiments of the present invention, Wi-Fi AP Database (*e.g.,* **1030** of FIG. **10A****)** may be a database of observation data including the unique identifying information of one or more conventional Wi-Fi access points (*e.g.,* **500** of FIG. **10A****)** and/or pseudo Wi-Fi access points (*e.g.,* **600** of FIG. **10A****)** and location information of the conventional Wi-Fi access points (*e.g.,* **500** of FIG. **10A****)** and/or pseudo Wi-Fi access points (*e.g.,* **600** of FIG. **10A****)** encountered by one or more reporting wireless devices (*e.g.,* **150b, 150c, 150d** of FIG. **10A****).** A Wi-Fi AP Database (*e.g.*, **1030** of FIG. **10A****)** may be established, operated, and maintained separate and apart from an asset tracking database (*e.g.*, **1010** of FIG. **10A****).** In certain embodiments, a Wi-Fi AP Database (*e.g*., **1030** of FIG. **10A****)** may be a database of observation data maintained by an original equipment manufacturer of a wireless device (*e.g.,* **150** of FIG. **10A****).** In other embodiments, a Wi-Fi AP Database (*e.g*., **1030** of FIG. **10A****)** may be a database of observation data maintained by an operating system developer of an operating system executing on a wireless device (*e.g.,* **150** of FIG. **10A****).** For example, the Wi-Fi AP Database (*e.g.,* **1030** of FIG. **10A****)** may be an Apple^{®} iOS^{®}, Google^{®} Android^{®}, or Microsoft^{®} location services database typically used to improve the location determination accuracy for their respective end users. In still other embodiments, a Wi-Fi AP Database (*e.g.*, **1030** of FIG. **10A****)** may be a database of observation data maintained by a software developer. For example, the Wi-Fi AP Database (*e.g.*, **1030** of FIG. **10A****)** may be a database of observation data commercially offered by Cisco Systems^{®}, Facebook^{®}, WhatsApp^{®}, X-Mode^{®}, Ruckus^{®}, and Skyhook^{®}. In still other embodiments, Wi-Fi AP Database (*e.g.*, **1030** of FIG. **10A****)** may be any other type or kind of database of observation data in accordance with one or more embodiments of the present invention.

For the purpose of this disclosure, a conventional Wi-Fi access point (*e.g.,* **500** of FIG. **10A****)** or a pseudo Wi-Fi access point (*e.g.,* **600** of FIG. **10A****)** point that spoofs, or emulates, at least portions of the Wi-Fi wireless network discovery process may be used. Notwithstanding, one of ordinary skill in the art will recognize that any type or kind of device capable of spoofing, or emulating, at least portions of the Wi-Fi network discovery process by either broadcasting beacon frames (*e.g.*, **220** of FIG. **2C****)** or probe response frames (*e.g.,* **240** of FIG. **2C****)** may be used in accordance with one or more embodiments of the present invention.

The method may include associating unique identifying information of a conventional Wi-Fi access point (*e.g.,* **500** of FIG. **10A****)** or pseudo Wi-Fi access point (*e.g.,* **600** of FIG. **10A****)** with a moveable asset (*e.g.,* **920** of FIG. **10A****)** in an asset tracking database (*e.g.*, **1010** of FIG. **10A****).** The conventional Wi-Fi access point (*e.g.,* **500** of FIG. **10A****)** or pseudo Wi-Fi access point (*e.g.,* 600 of FIG. **10A****)** may be disposed on, attached to, or integrated with the moveable asset (*e.g.,* **920** of FIG. **10A****).** The unique identifying information may be any information that uniquely identifies a conventional Wi-Fi access point (*e.g.,* **500** of FIG. **10A****)** or pseudo Wi-Fi access point (*e.g.,* **600** of FIG. **10A****)** including, for example, the BSSID of the conventional Wi-Fi access point (*e.g.,* **500** of FIG. **10A****)** or pseudo Wi-Fi access point (*e.g.,* **600** of FIG. **10A****).** The unique identifying information may be entered into the asset tracking database (*e.g.*, **1010** of FIG. **10A****)** and logically associated with the moveable asset (*e.g.,* **920** of FIG. **10A****)** on which it is disposed, attached to, or otherwise integrated with for purposes of participating in the asset tracking task. In addition, any other information relating to the conventional Wi-Fi access point (*e.g.,* **500** of FIG. **10A****)** or pseudo Wi-Fi access point (*e.g.,* **600** of FIG. **10A****)** or moveable asset may be stored in the same or a related record of the asset tracking database (*e.g.*, **1010** of FIG. **10A****).**

The method may include receiving, at the asset tracking database (*e.g.*, **1010** of FIG. **10A****),** observation data (*e.g.,* **1040** of FIG. **10B****)** from a Wi-Fi AP Database (*e.g.,* **1030** of FIG. **10A****)** comprising the unique identifying information of the conventional Wi-Fi access point (*e.g.,* **500** of FIG. **10A****)** or pseudo Wi-Fi access point (*e.g.,* **600** of FIG. **10A****)** and location information of the conventional Wi-Fi access point (*e.g.,* **500** of FIG. **10A****)** or pseudo Wi-Fi access point (*e.g.,* **600** of FIG. **10A****).** The Wi-Fi AP Database (*e.g*., **1030** of FIG. **10A****)** may receive observation data from one or more wireless devices (*e.g.,* **150b, 150c,** and **150d** of FIG. **10A****)** that encounter the conventional Wi-Fi access point (*e.g.,* **500** of FIG. **10A****)** or pseudo Wi-Fi access point (*e.g.,* **600** of FIG. **10A****)** and report unique identifying information of the conventional Wi-Fi access point (*e.g.,* **500** of FIG. **10A****)** or pseudo Wi-Fi access point (*e.g.,* **600** of FIG. **10A****)** and location information of the conventional Wi-Fi access point (*e.g.,* **500** of FIG. **10A****)** or pseudo Wi-Fi access point (*e.g.,* **600** of FIG. **10A****)** to the Wi-Fi AP Database (*e.g.,* **1030** of FIG. **10A****).** In certain embodiments, the location information of the conventional Wi-Fi access point (*e.g.,* **500** of FIG. **10A****)** or pseudo Wi-Fi access point (*e.g.,* **600** of FIG. **10A****)** may comprise a latitude and a longitude of the conventional Wi-Fi access point (*e.g.,* **500** of FIG. **10A****)** or pseudo Wi-Fi access point (*e.g.,* **600** of FIG. **10A****).** In other embodiments, the location information of the conventional Wi-Fi access point (*e.g.,* **500** of FIG. **10A****)** or pseudo Wi-Fi access point (*e.g.,* **600** of FIG. **10A****)** may comprise a latitude and a longitude of the reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** of interest. In still other embodiments, the location information of the conventional Wi-Fi access point (*e.g.,* **500** of FIG. **10A****)** or pseudo Wi-Fi access point (*e.g.,* **600** of FIG. **10A****)** may comprise a received signal strength of the conventional Wi-Fi access point (*e.g.,* **500** of FIG. **10A****)** or pseudo Wi-Fi access point (*e.g.,* **600** of FIG. **10A****)** measured by the reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** of interest. In still other embodiments, the location information of the conventional Wi-Fi access point (*e.g.,* **500** of FIG. **10A****)** may comprise a latitude and a longitude of one or more other Wi-Fi access points (*e.g*., other nearby **500** or **600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150b, 150c, 150d** of FIG. **10A****)** encounter with the conventional Wi-Fi access point (*e.g.,* **500** of FIG. **10A****)** or pseudo Wi-Fi access point (*e.g.,* **600** of FIG. **10A****).** In still other embodiments, the location information of the conventional Wi-Fi access point (*e.g.,* **500** of FIG. **10A****)** or pseudo Wi-Fi access point (*e.g.,* **600** of FIG. **10A****)** may comprise a location, a received signal strength, any of the above-noted information, or any other information related to one or more other Wi-Fi access points (*e.g.*, other nearby **500 or 600** not shown in FIG. **10A****)** near the Wi-Fi access point (*e.g.,* **500** of FIG. **10A****)** at or near the time of a reporting wireless device's (*e.g.,* **150b, 150c, 150d** of FIG. **10A****)** encounter with the conventional Wi-Fi access point (*e.g.,* **500** of FIG. **10A****)** or pseudo Wi-Fi access point (*e.g.,* **600** of FIG. **10A****).**

The method may include determining, by the asset tracking database (*e.g.*, **1010** of FIG. **10A****),** a location of the moveable asset (*e.g.,* **920** of FIG. **10A****)** based, at least in part, on observation data of the conventional Wi-Fi access point (*e.g.,* **500** of FIG. **10A****)** or pseudo Wi-Fi access point (*e.g.,* **600** of FIG. **10A****).** In certain embodiments, determining the location of the moveable asset (*e.g.,* **920** of FIG. **10A****)** may include using a latitude and longitude of the conventional Wi-Fi access point (*e.g.,* **500** of FIG. **10A****)** or pseudo Wi-Fi access point (*e.g.,* **600** of FIG. **10A****)** as the location of the moveable asset (*e.g.,* **920** of FIG. **10A****).** In other embodiments, determining the location of the moveable asset (*e.g.,* **920** of FIG. **10A****)** may include using a latitude and longitude of a reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** as the location of the moveable asset (*e.g.,* **920** of FIG. **10A****).** In still other embodiments, determining the location of the moveable asset (*e.g.,* **920** of FIG. **10A****)** may include using a received signal strength of the conventional Wi-Fi access point (*e.g.,* **500** of FIG. **10A****)** or pseudo Wi-Fi access point (*e.g.,* **600** of FIG. **10A****)** measured by a reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** to determine the location of the moveable asset (*e.g.,* **920** of FIG. **10A****).** Using well-known Wi-Fi positioning techniques, the received signal strength may be used to determine or enhance the location determination of the conventional Wi-Fi access point (*e.g.,* **500** of FIG. **10A****)** or pseudo Wi-Fi access point (*e.g.,* **600** of FIG. **10A****).** For example, the received signal strength may be used to determine a radius of a location of a reporting wireless device (*e.g.,* **150b, 150c, 150d** of FIG. **10A****)** which may be used by itself or in combination with other location information to determine or enhance the location determination of the conventional Wi-Fi access point (*e.g.,* **500** of FIG. **10A****)** or pseudo Wi-Fi access point (*e.g.,* **600** of FIG. **10A****).** In still other embodiments, determining the location of the moveable asset (*e.g.,* **920** of FIG. **10A****)** may include using a latitude and longitude of one or more other Wi-Fi access points (*e.g.*, other nearby **500 or 600** not shown in FIG. **10A****)** encountered by a reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** to determine the location of the moveable asset (*e.g.,* **920** of FIG. **10A****).** Using well known Wi-Fi positioning techniques, the locations of nearby Wi-Fi access points (*e.g*., other nearby **500** or **600** not shown in FIG. **10A****)** may be used alone or in combination to determine or enhance the location determination of the conventional Wi-Fi access point (*e.g.,* **500** of FIG. **10A****)** or pseudo Wi-Fi access point (*e.g.,* **600** of FIG. **10A****).** In still other embodiments, determining the location of the moveable asset (*e.g.,* **920** of FIG. **10A****)** may include using a location, a received signal strength, any of the above-noted information, or any other information related to one or more other Wi-Fi access points (*e.g.*, other nearby **500** or **600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150b, 150c, 150d** of FIG. **10A****)** encounter with the conventional Wi-Fi access point (*e.g.,* **500** of FIG. **10A****)** or pseudo Wi-Fi access point (*e.g.,* **600** of FIG. **10A****)** to determine the location of the moveable asset (*e.g.,* **920** of FIG. **10A****).** Using well known Wi-Fi positioning techniques, the received signal strengths of nearby Wi-Fi access points (*e.g*., other nearby **500** or **600** not shown in FIG. **10A****)** may be used alone or in combination to determine or enhance the location determination of the conventional Wi-Fi access point *(e.g.,* **500** of FIG. **10A****)** or pseudo Wi-Fi access point (*e.g.,* **600** of FIG. **10A****).**

One of ordinary skill in the art will recognize that historical location information, reporting wireless device (*e.g.,* **150b, 150c, 150d** of FIG. **10A****)** location information, conventional Wi-Fi access point (*e.g.,* **500** of FIG. **10A****)** or pseudo Wi-Fi access point (*e.g.,* **600** of FIG. **10A****)** location information, other nearby Wi-Fi access point (*e.g.,* other nearby **500 or 600** not shown in FIG. **10A****)** location information, received signal strength of the conventional Wi-Fi access point (*e.g.,* **500** of FIG. **10A****)** or pseudo Wi-Fi access point (*e.g.,* **600** of FIG. **10A****)** location information, received signal strength of other nearby Wi-Fi access point (*e.g.,* other nearby **500** or **600** not shown in FIG. **10A****)** location information, and any other information may be used, alone or in combination, with known positioning techniques, including, but not limited to, smartphone positioning, network-based positioning, hybrid positioning, GPS positioning, cellular positioning, Wi-Fi positioning, triangulation, trilateration, time of arrival, angle of arrival, and any other positioning technique or combination thereof may be used in accordance with one or more embodiments of the present invention. Further, one of ordinary skill in the art will recognize that the positioning technique(s) used may vary based on the type or kind of observation data available at the time of the location determination.

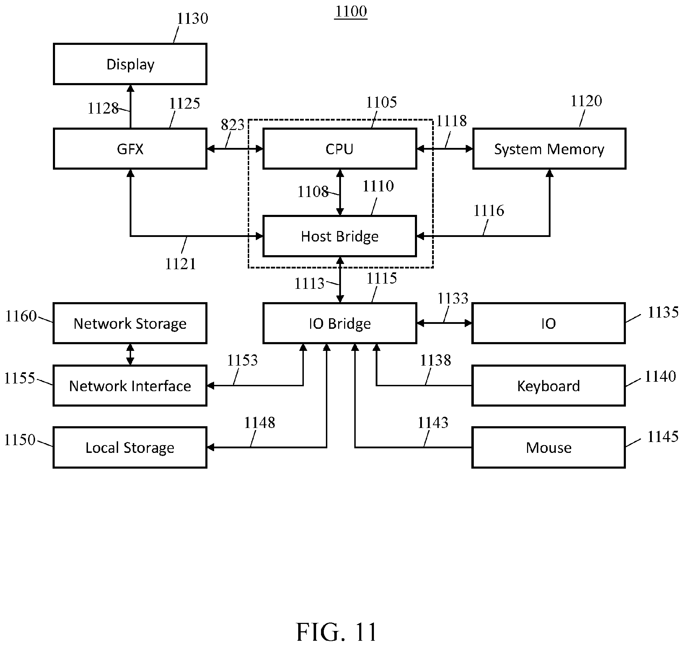

The method may further include storing the location of the moveable asset (*e.g.,* **920** of FIG. **10A****)** in the asset tracking database (*e.g.,* **1010** of FIG. **10A****).** The method may further include providing a user access, via a client portal (*e.g.,* **1020** of FIG. **10A****),** to the location of the moveable asset (*e.g.,* **920** of FIG. **10A****)** stored in the asset tracking database (*e.g*., **1010** of FIG. **10A****).** In certain embodiments, a client portal (*e.g.,* **1020** of FIG. **10A****)** may include a software interface for querying and receiving information from the asset tracking database (*e.g.*, **1010** of FIG. **10A****).** The client portal (*e.g.,* **1020** of FIG. **10A****)** may be part of the same computing system as that of the asset tracking database (*e.g.*, **1010** of FIG. **10A****)** or a separate and distinct computing system (*e.g.,* **1100** of FIG. **11****)** or wireless device (*e.g.,* **150)** that connects to the asset tracking database (*e.g.*, **1010** of FIG. **10A****)** over a network connection. The client portal (*e.g.,* **1020** of FIG. **10A****)** may be a web-based portal to the asset tracking database (*e*.*g*., **1010** of FIG. **10A****)** or a stand-alone software application providing access to the asset tracking database (*e.g.*, **1010** of FIG. **10A****)** via a network connection.

Advantageously, there is no communication between the asset tracking database (*e.g.,* **1010** of FIG. **10A****)** and the one or more wireless devices (*e.g.,* **150b, 150c,** or **150d** of FIG. **10A****)** that report an encounter with the conventional Wi-Fi access point (*e.g.,* **500** of FIG. **10A****)** or pseudo Wi-Fi access point (*e.g.,* **600** of FIG. **10A****),** comprising observation data, to the Wi-Fi AP Database (*e.g*., **1030** of FIG. **10A****),** thereby enabling passive asset tracking in an open network environment where there is no required network connectivity. In this open network configuration, the existing infrastructure represented by the ecosystem of wireless devices (*e.g.*, **150),** such as, for example, smartphones, and the inherent reporting features wireless device operating systems or other software (*e.g.,* **150)** to report observation data of conventional Wi-Fi access points (*e.g.,* **500** of FIG. **10A****)** or pseudo Wi-Fi access points (*e.g.,* **600** of FIG. **10A****)** they encounter may be leveraged to passively track assets (*e.g*., **920** of FIG. **10A****),** without requiring an awareness on the part of the wireless device (*e.g.,* **150),** or user thereof, that they are participating in the asset tracking task. Further, the one or more wireless devices (*e.g.,* **150b, 150c, 150d** of FIG. **10A****),** or users thereof, may not be aware that they are participating in the asset tracking task. The wireless devices (*e.g.,* **150b, 150c, 150d** of FIG. **10A****)** simply report observation data of conventional Wi-Fi access points (*e.g.,* **500** of FIG. **10A****)** or pseudo Wi-Fi access point (*e.g.,* **600** of FIG. **10A****)** they encounter to the Wi-Fi AP Database (*e.g.*, **1030** of FIG. **10A****),** typically as part of their participation in location services.

In one or more embodiments of the present invention, a method of passive asset tracking may use first observation data received directly from one or more direct reporting wireless devices (*e.g.,* **150a** of FIG. **10A****)** and second observation data received from a Wi-Fi AP Database (*e.g.*, **1030** of FIG. **10A****)** that receives observation data from one or more indirect reporting wireless devices (*e.g.,* **150b, 150c, 150d** of FIG. **10A****)** that report observation to the Wi-Fi AP Database (*e.g.*, **1030** of FIG. **10A****).**

In one or more embodiments of the present invention, a Wi-Fi AP Database (*e.g.,* **1030** of FIG. **10A****)** may be a database of observation data including the unique identifying information of conventional Wi-Fi access points (*e.g.,* **500** of FIG. **10A****)** or pseudo Wi-Fi access points *(e.g.,* **600** of FIG. **10A****)** and location information of the conventional Wi-Fi access points (*e.g.,* **500** of FIG. **10A****)** or pseudo Wi-Fi access points (*e.g.,* **600** of FIG. **10A****)** encountered by one or more indirect reporting wireless devices (*e.g.,* **150b, 150c, 150d** of FIG. **10A****).** A Wi-Fi AP Database (*e.g.,* **1030** of FIG. **10A****)** may be established, operated, and maintained separate and apart from an asset tracking database (*e.g*., **1010** of FIG. **10A****).** In certain embodiments, a Wi-Fi AP Database (*e.g.*, **1030** of FIG. **10A****)** may be a database of observation data maintained by an original equipment manufacturer of a wireless device (*e.g.,* **150** of FIG. **10A****).** In other embodiments, a Wi-Fi AP Database (*e.g*., **1030** of FIG. **10A****)** may be a database of observation data maintained by an operating system developer of an operating system executing on a wireless device (*e.g.,* **150** of FIG. **10A****).** For example, the Wi-Fi AP Database (*e.g.,* **1030** of FIG. **10A****)** may be an Apple^{®} iOS^{®}, Google^{®} Android^{®}, or Microsoft^{®} location services database typically used to improve the location determination accuracy for their respective end users. In still other embodiments, a Wi-Fi AP Database (*e.g.*, **1030** of FIG. **10A****)** may be a database of observation data maintained by a software developer. For example, the Wi-Fi AP Database (*e.g.*, **1030** of FIG. **10A****)** may be a database of observation data commercially offered by Cisco Systems^{®}, Facebook^{®}, WhatsApp^{®}, X-Mode^{®}, Ruckus^{®}, and Skyhook^{®}. In still other embodiments, Wi-Fi AP Database (*e.g*., **1030** of FIG. **10A****)** may be any other type or kind of database of observation data in accordance with one or more embodiments of the present invention.

For the purpose of this disclosure, a conventional Wi-Fi access point (*e.g.,* **500** of FIG. **10A****)** or a pseudo Wi-Fi access point (*e.g.,* **600** of FIG. **10A****)** point that spoofs, or emulates, at least portions of the Wi-Fi wireless network discovery process may be used. Notwithstanding, one of ordinary skill in the art will recognize that any type or kind of device capable of spoofing, or emulating, at least portions of the Wi-Fi network discovery process by either broadcasting beacon frames (*e.g.*, **220** of FIG. **2C** or **220s** of FIG. **8****)** or probe response frames (*e.g.,* **240** of FIG. **2C** or **240s** of FIG. **8****)** may be used in accordance with one or more embodiments of the present invention.

The method may include associating unique identifying information of a conventional Wi-Fi access point (*e.g.,* **500** of FIG. **10A****)** or pseudo Wi-Fi access point (*e.g.,* **600** of FIG. **10A****)** with a moveable asset (*e.g.,* **920** of FIG. **10A****)** in an asset tracking database (*e.g.*, **1010** of FIG. **10A****).** The conventional Wi-Fi access point (*e.g.,* **500** of FIG. **10A****)** or pseudo Wi-Fi access point (*e.g.,* **600** of FIG. **10A****)** may be disposed on, attached to, or integrated with the moveable asset (*e.g.,* **920** of FIG. **10A****).** The unique identifying information may be any information that uniquely identifies a conventional Wi-Fi access point (*e.g.,* **500** of FIG. **10A****)** or pseudo Wi-Fi access point (*e.g.,* **600** of FIG. **10A****)** including, for example, the BSSID of the conventional Wi-Fi access point (*e.g.,* **500** of FIG. **10A****)** or pseudo Wi-Fi access point (*e.g.,* **600** of FIG. **10A****).** The unique identifying information may be entered into the asset tracking database (*e.g.*, **1010** of FIG. **10A****)** and logically associated with the moveable asset (*e.g.,* **920** of FIG. **10A****)** on which it is disposed, attached to, or otherwise integrated with for purposes of participating in the asset tracking task. In addition, any other information relating to the conventional Wi-Fi access point (*e.g.,* **500** of FIG. **10A****)** or pseudo Wi-Fi access point (*e.g.,* **600** of FIG. **10A****)** or asset associated therewith may be stored in the same or a related record of the asset tracking database (*e.g.*, **1010** of FIG. **10A****).**

The method may include receiving, at the asset tracking database (*e.g.*, **1010** of FIG. **10A****),** first observation data observation data (*e.g.,* **1040** of FIG. **10B****)** from one or more direct reporting wireless devices (*e.g.,* **150a** of FIG. **10A****)** that encounter the conventional Wi-Fi access point (*e.g.,* **500** of FIG. **10A****)** or pseudo Wi-Fi access point (*e.g.,* **600** of FIG. **10A****)** comprising the unique identifying information of the conventional Wi-Fi access point (*e.g.,* **500** of FIG. **10A****)** or pseudo Wi-Fi access point (*e.g.,* **600** of FIG. **10A****)** and first location information of the conventional Wi-Fi access point (*e.g.,* **500** of FIG. **10A****)** or pseudo Wi-Fi access point (*e.g.,* **600** of FIG. **10A****).**

The method may include receiving, at the asset tracking database (*e.g.*, **1010** of FIG. **10A****),** second observation data (*e.g.,* **1040** of FIG. **10B****)** from a Wi-Fi AP Database (*e.g*., **1030** of FIG. **10A****)** comprising the unique identifying information of the conventional Wi-Fi access point (*e.g.,* **500** of FIG. **10A****)** or pseudo Wi-Fi access point (*e.g.,* **600** of FIG. **10A****)** and location information of the conventional Wi-Fi access point (*e.g.,* **500** of FIG. **10A****)** or pseudo Wi-Fi access point (*e.g.,* **600** of FIG. **10A****).** The Wi-Fi AP Database (*e.g.*, **1030** of FIG. **10A****)** may receive observation data from one or more indirect reporting wireless devices (*e.g.,* **150b, 150c, 150d** of FIG. **10A****)** that encounter the conventional Wi-Fi access point (*e.g.,* **500** of FIG. **10A****)** or pseudo Wi-Fi access point (*e.g.,* **600** of FIG. **10A****)** and report unique identifying information of the conventional Wi-Fi access point (*e.g.,* **500** of FIG. **10A****)** or pseudo Wi-Fi access point (*e.g.,* **600** of FIG. **10A****)** and location information of the conventional Wi-Fi access point (*e.g.,* **500** of FIG. **10A****)** or pseudo Wi-Fi access point (*e.g.,* **600** of FIG. **10A****)** to the Wi-Fi AP Database (*e.g.,* **1030** of FIG. **10A****).**

In certain embodiments, the location information of the conventional Wi-Fi access point (*e.g.,* **500** of FIG. **10A****)** or pseudo Wi-Fi access point (*e.g.,* **600** of FIG. **10A****)** may a latitude and a longitude of the conventional Wi-Fi access point (*e.g.,* **500** of FIG. **10A****)** or pseudo Wi-Fi access point (*e.g.,* **600** of FIG. **10A****).** In other embodiments, the location information of the conventional Wi-Fi access point (*e.g.,* **500** of FIG. **10A****)** or pseudo Wi-Fi access point (*e.g.,* **600** of FIG. **10A****)** may comprise a latitude and a longitude of a reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****).** In still other embodiments, the location information of the conventional Wi-Fi access point (*e.g.,* **500** of FIG. **10A****)** or pseudo Wi-Fi access point (*e.g.,* **600** of FIG. **10A****)** may comprise a received signal strength of the conventional Wi-Fi access point (*e.g.,* **500** of FIG. **10A****)** or pseudo Wi-Fi access point (*e.g.,* **600** of FIG. **10A****)** measured by a reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****).** In still other embodiments, the location information of the conventional Wi-Fi access point (*e.g.,* **500** of FIG. **10A****)** or pseudo Wi-Fi access point (*e.g.,* **600** of FIG. **10A****)** may comprise a latitude and a longitude of one or more other Wi-Fi access points (*e.g.,* other nearby **500** or **600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150b, 150c, 150d** of FIG. **10A****)** encounter with the conventional Wi-Fi access point (*e.g.,* **500** of FIG. **10A****)** or pseudo Wi-Fi access point (*e.g.,* **600** of FIG. **10A****).** In still other embodiments, the location information of the conventional Wi-Fi access point (*e.g.,* **500** of FIG. **10A****)** or pseudo Wi-Fi access point (*e.g.,* **600** of FIG. **10A****)** may comprise a location, a received signal strength, any of the above-noted information, or any other information related to one or more other Wi-Fi access points (*e.g.*, other nearby **500** or **600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150b, 150c, 150d** of FIG. **10A****)** encounter with the conventional Wi-Fi access point (*e.g.,* **500** of FIG. **10A****)** or pseudo Wi-Fi access point (*e.g.,* **600** of FIG. **10A****).**

The method may include determining, by the asset tracking database (*e.g.*, **1010** of FIG. **10A****),** a location of the moveable asset (*e.g.,* **920** of FIG. **10A****)** based, at least in part, on the first and/or the second observation data of the conventional Wi-Fi access point (*e.g.,* **500** of FIG. **10A****)** or pseudo Wi-Fi access point (*e.g., **600*** of FIG. **10A****).** In certain embodiments, determining the location of the moveable asset (*e.g.,* **920** of FIG. **10A****)** may include using a latitude and longitude of the conventional Wi-Fi access point (*e.g.,* **500** of FIG. **10A****)** or pseudo Wi-Fi access point (*e.g.,* **600** of FIG. **10A****)** as the location of the moveable asset (*e.g.,* **920** of FIG. **10A****).** In other embodiments, determining the location of the moveable asset (*e.g.,* **920** of FIG. **10A****)** may include using a latitude and longitude of a reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** as the location of the moveable asset (*e.g.,* **920** of FIG. **10A****).** In still other embodiments, determining the location of the moveable asset (*e.g.,* **920** of FIG. **10A****)** may include using a received signal strength of the conventional Wi-Fi access point (*e.g.,* **500** of FIG. **10A****)** or pseudo Wi-Fi access point (*e.g.,* **600** of FIG. **10A****)** measured by a reporting wireless device (*e.g.,* **150b, 150c,** or **150d** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** to determine the location of the moveable asset (*e.g.,* **920** of FIG. **10A****).** Using well-known Wi-Fi positioning techniques, the received signal strength may be used to determine or enhance the location determination of the conventional Wi-Fi access point (*e.g.,* **500** of FIG. **10A****)** or pseudo Wi-Fi access point (*e.g.,* **600** of FIG. **10A****).** For example, the received signal strength may be used to determine a radius of a location of a reporting wireless device (*e.g.,* **150b, 150c, 150d** of FIG. **10A****)** which may be used by itself or in combination with other location information to determine or enhance the location determination of the conventional Wi-Fi access point (*e.g.,* **500** of FIG. **10A****)** or pseudo Wi-Fi access point (*e.g.,* **600** of FIG. **10A****).** In still other embodiments, determining the location of the moveable asset (*e.g.,* **920** of FIG. **10A****)** may include using a latitude and longitude of one or more other Wi-Fi access points (*e.g*., other nearby **500 or 600** not shown in FIG. **10A****)** encountered by a reporting wireless device (*e.g.,* **150b, 150c, 150d** of FIG. **10A****)** at or near the time of its encounter with the conventional Wi-Fi access point (*e.g.,* **500** of FIG. **10A****)** or pseudo Wi-Fi access point *(e.g.,* **600** of FIG. **10A****)** to determine the location of the moveable asset (*e.g.,* **920** of FIG. **10A****).** Using well known Wi-Fi positioning techniques, the locations of nearby Wi-Fi access points (*e.g*., other nearby **500 or 600** not shown in FIG. **10A****)** may be used by itself or in combination to determine or enhance the location determination of the conventional Wi-Fi access point (*e.g.,* **500** of FIG. **10A****)** or pseudo Wi-Fi access point (*e.g.,* **600** of FIG. **10A****).** In still other embodiments, determining the location of the moveable asset (*e.g.,* **920** of FIG. **10A****)** may include using a location, a received signal strength, any of the above-noted information, or any other information related to one or more other Wi-Fi access points (*e.g.*, other nearby **500 or 600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150b, 150c, 150d** of FIG. **10A****)** encounter with the conventional Wi-Fi access point *(e.g.,* **500** of FIG. **10A****)** or pseudo Wi-Fi access point (*e.g.,* **600** of FIG. **10A****)** to determine the location of the moveable asset (*e.g.,* **920** of FIG. **10A****).** Using well known Wi-Fi positioning techniques, the received signal strengths of nearby Wi-Fi access points (*e.g.*, other nearby **500 or 600** not shown in FIG. **10A****)** may be used by itself or in combination to determine or enhance the location determination of the conventional Wi-Fi access point (*e.g.,* **500** of FIG. **10A****)** or pseudo Wi-Fi access point (*e.g.,* **600** of FIG. **10A****).**

One of ordinary skill in the art will recognize that historical location information, reporting wireless device (*e.g.,* **150b, 150c, 150d** of FIG. **10A****)** location information, conventional Wi-Fi access point (*e.g.,* **500** of FIG. **10A****)** or pseudo Wi-Fi access point (*e.g.,* **600** of FIG. **10A****)** location information, other nearby Wi-Fi access point (*e.g.,* other nearby **500** or **600** not shown in FIG. **10A****)** location information, received signal strength of the conventional Wi-Fi access point (*e.g.,* **500** of FIG. **10A****)** or pseudo Wi-Fi access point (*e.g.,* **600** of FIG. **10A****)** location information, received signal strength of other nearby Wi-Fi access point (*e.g.,* other nearby **500** or **600** not shown in FIG. **10A****)** location information, and any other information relating to the Wi-Fi access point (*e.g.,* **500** of FIG. **10A****)** or pseudo Wi-Fi access point (*e.g.,* **600** of FIG. **10A****)** or nearby Wi-Fi access points (*e.g.,* other nearby **500** or **600** not shown in FIG. **10A****)** may be used, alone or in combination, with known positioning techniques, including, but not limited to, smartphone positioning, network-based positioning, hybrid positioning, GPS positioning, cellular positioning, triangulation, trilateration, time of arrival, angle of arrival, and any other positioning technique or combination of positioning techniques may be used in accordance with one or more embodiments of the present invention. Further, one of ordinary skill in the art will recognize that, the positioning technique or techniques used may vary based on the type or kind of observation data available at the time of the location determination.

The method may further include storing the location of the moveable asset (*e.g.,* **920** of FIG. **10A****)** in the asset tracking database (*e.g.,* **1010** of FIG. **10A****).** The method may further include providing a user access, via a client portal (*e.g.,* **1020** of FIG. **10A****),** to the location of the moveable asset (*e.g.,* **920** of FIG. **10A****)** stored in the asset tracking database (*e*.*g*., **1010** of FIG. **10A****).** In certain embodiments, a client portal (*e.g.,* **1020** of FIG. **10A****)** may include a software interface for querying and receiving information from the asset tracking database (*e*.*g*., **1010** of FIG. **10A****).** The client portal (*e.g.,* **1020** of FIG. **10A****)** may be part of the same computing system as that of the asset tracking database (*e*.*g*., **1010** of FIG. **10A****)** or a separate and distinct computing system (*e.g.,* **1100** of FIG. **11****)** or wireless device (*e.g.,* **150**) that connects to the asset tracking database (*e*.*g*., **1010** of FIG. **10A****)** over a network connection. The client portal (*e.g.,* **1020** of FIG. **10A****)** may be a web-based portal to the asset tracking database (*e*.*g*., **1010** of FIG. **10A****)** or a stand-alone software application providing access to the asset tracking database (*e*.*g*., **1010** of FIG. **10A****)** via a network connection.

Advantageously, there is no communication between the asset tracking database (*e*.*g*., **1010** of FIG. **10A****)** and the one or more indirect reporting wireless devices (*e.g.,* **150b, 150c, 150d** of FIG. **10A****)** that report an encounter with the conventional Wi-Fi access point (*e.g.,* **500** of FIG. **10A****)** or pseudo Wi-Fi access point (*e.g.,* **600** of FIG. **10A****),** comprising observation data, to the Wi-Fi AP Database (*e*.*g*., **1030** of FIG. **10A****),** thereby enabling passive, and potentially anonymous, asset tracking in areas where there is no network connectivity. In this hybrid open-network configuration, the existing infrastructure represented by the ecosystem of wireless devices (*e.g.,* **150),** such as, for example, smartphones, and the inherent reporting features wireless device operating systems or other software (*e.g.,* **150)** to report observation data of conventional Wi-Fi access points (*e.g.,* **500** of FIG. **10A****)** or pseudo Wi-Fi access points (*e.g.,* **600** of FIG. **10A****)** they encounter may be leveraged to passive track assets (*e*.*g*., **920** of FIG. **10A****),** without requiring an awareness on the part of the wireless device (*e.g.,* **150),** or user thereof, that they are participating in the asset tracking task. Further, the one or more wireless devices (*e.g.,* **150b, 150c, 150d** of FIG. **10A****),** or users thereof, may not be aware that they are participating in the asset tracking task. The wireless devices (*e.g.,* **150b, 150c, 150d** of FIG. **10A****)** simply report observation data of conventional Wi-Fi access points (*e.g.,* **500** of FIG. **10A****)** or pseudo Wi-Fi access points (*e.g.,* **600** of FIG. **10A****)** they encounter to the Wi-Fi AP Database (*e*.*g*., **1030** of FIG. **10A****),** typically as part of their participation in location services.

In one or more embodiments of the present invention, a method of passive asset tracking may use observation data received directly from one or more direct reporting wireless devices (*e.g.,* **150a** of FIG. **10A****)** that encounter a conventional Wi-Fi access point (*e.g.,* **500** of FIG. **10A****)** or pseudo Wi-Fi access point (*e.g., **600*** of FIG. **10A****).**

For the purpose of this disclosure, a conventional Wi-Fi access point (*e.g.,* **500** of FIG. **10A****)** or a pseudo Wi-Fi access point (*e.g.,* **600** of FIG. **10A****)** point that spoofs, or emulates, at least portions of the Wi-Fi wireless network discovery process may be used. Notwithstanding, one of ordinary skill in the art will recognize that any type or kind of device capable of spoofing, or emulating, at least portions of the Wi-Fi network discovery process by either broadcasting beacon frames (*e*.*g*., **220** of FIG. **2C** or **220s** of FIG. **8****)** or probe response frames (*e.g.,* **240** of FIG. **2C** or **240s** of FIG. **8****)** may be used in accordance with one or more embodiments of the present invention.

The method may include associating unique identifying information of a conventional Wi-Fi access point (*e.g.,* **500** of FIG. **10A****)** or pseudo Wi-Fi access point (*e.g.,* **600** of FIG. **10A****)** with a moveable asset (*e.g.,* **920** of FIG. **10A****)** in an asset tracking database (*e*.*g*., **1010** of FIG. **10A****).** The conventional Wi-Fi access point (*e.g.,* **500** of FIG. **10A****)** or pseudo Wi-Fi access point (*e.g.,* **600** of FIG. **10A****)** may be disposed on, attached to, or integrated. The unique identifying information may be any information that uniquely identifies a conventional Wi-Fi access point (*e.g.,* **500** of FIG. **10A****)** or pseudo Wi-Fi access point (*e.g.,* **600** of FIG. **10A****)** including, for example, the BSSID of the conventional Wi-Fi access point (*e.g.,* **500** of FIG. **10A****)** or pseudo Wi-Fi access point (*e.g.,* **600** of FIG. **10A****).** The unique identifying information may be entered into the asset tracking database (*e*.*g*., **1010** of FIG. **10A****)** and logically associated with the moveable asset (*e.g.,* **920** of FIG. **10A****)** on which it is disposed, attached to, or otherwise integrated with for purposes of participating in the asset tracking task. In addition, any other information relating to the conventional Wi-Fi access point (*e.g.,* **500** of FIG. **10A****)** or pseudo Wi-Fi access point (*e.g.,* **600** of FIG. **10A****)** or asset may be stored in the same or a related record of the asset tracking database (*e*.*g*., **1010** of FIG. **10A****).**

The method may include receiving, at the asset tracking database (*e*.*g*., **1010** of FIG. **10A****),** observation data (*e.g.,* **1040** of FIG. **10B****)** from one or more direct reporting wireless devices (*e.g.,* **150a** of FIG. **10A****)** that encounter the conventional Wi-Fi access point (*e.g.,* **500** of FIG. **10A****)** or pseudo Wi-Fi access point (*e.g.,* **600** of FIG. **10A****)** comprising the unique identifying information of the conventional Wi-Fi access point (*e.g.,* **500** of FIG. **10A****)** or pseudo Wi-Fi access point (*e.g.,* **600** of FIG. **10A****)** and location information of the conventional Wi-Fi access point (*e.g.,* **500** of FIG. **10A****)** or pseudo Wi-Fi access point (*e.g.,* **600** of FIG. **10A****).**

In certain embodiments, the location information of the conventional Wi-Fi access point (*e.g.,* **500** of FIG. **10A****)** or pseudo Wi-Fi access point (*e.g.,* **600** of FIG. **10A****)** may include a latitude and a longitude of the conventional Wi-Fi access point (*e.g.,* **500** of FIG. **10A****)** or pseudo Wi-Fi access point (*e.g.,* **600** of FIG. **10A****).** In other embodiments, the location information of the conventional Wi-Fi access point (*e.g.,* **500** of FIG. **10A****)** or pseudo Wi-Fi access point (*e.g.,* **600** of FIG. **10A****)** may comprise a latitude and a longitude of a reporting wireless device (*e.g.,* **150a** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****).** In still other embodiments, the location information of the conventional Wi-Fi access point (*e.g.,* **500** of FIG. **10A****)** or pseudo Wi-Fi access point (*e.g.,* **600** of FIG. **10A****)** may comprise a received signal strength of the conventional Wi-Fi access point (*e.g.,* **500** of FIG. **10A****)** or pseudo Wi-Fi access point (*e.g.,* **600** of FIG. **10A****)** measured by a reporting wireless device (*e.g.,* **150a** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****).** In still other embodiments, the location information of the conventional Wi-Fi access point (*e.g.,* **500** of FIG. **10A****)** or pseudo Wi-Fi access point (*e.g.,* **600** of FIG. **10A****)** may comprise a latitude and a longitude of one or more other Wi-Fi access points (*e*.*g*., other nearby **500** or **600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150a** of FIG. **10A****)** encounter with the conventional Wi-Fi access point (*e.g.,* **500** of FIG. **10A****)** or pseudo Wi-Fi access point (*e.g.,* **600** of FIG. **10A****).** In still other embodiments, the location information of the conventional Wi-Fi access point (*e.g.,* **500** of FIG. **10A****)** or pseudo Wi-Fi access point (*e.g.,* **600** of FIG. **10A****)** may comprise a location, a received signal strength, any of the above-noted information, or any other information relating to one or more other Wi-Fi access points (*e*.*g*., other nearby **500** or **600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150a** of FIG. **10A****)** encounter with the conventional Wi-Fi access point (*e.g.,* **500** of FIG. **10A****)** or pseudo Wi-Fi access point (*e.g.,* **600** of FIG. **10A****).**

The method may include determining a location of the moveable asset (*e.g.,* **920 of** **FIG. 10A****)** based, at least in part, on the observation data of the conventional Wi-Fi access point (*e.g.,* **500** of FIG. **10A****)** or pseudo Wi-Fi access point (*e.g.,* **600** of FIG. **10A****).** In certain embodiments, determining the location of the moveable asset (*e.g.,* **920** of FIG. **10A****)** may include using a latitude and longitude of the conventional Wi-Fi access point (*e.g.,* **500** of FIG. **10A****)** or pseudo Wi-Fi access point (*e.g.,* **600** of FIG. **10A****)** as the location of the moveable asset (*e.g.,* **920** of FIG. **10A****).** In other embodiments, determining the location of the moveable asset (*e.g.,* **920** of FIG. **10A****)** may include using a latitude and longitude of a reporting wireless device (*e.g.,* **150a** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** as the location of the moveable asset (*e.g.,* **920** of FIG. **10A****).** In still other embodiments, determining the location of the moveable asset (*e.g.,* **920** of FIG. **10A****)** may include using a received signal strength of the conventional Wi-Fi access point (*e.g.,* **500** of FIG. **10A****)** or pseudo Wi-Fi access point (*e.g.,* **600** of FIG. **10A****)** measured by a reporting wireless device (*e.g.,* **150a** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** to determine the location of the moveable asset (*e.g.,* **920** of FIG. **10A****).** Using well-known Wi-Fi positioning techniques, the received signal strength may be used to determine or enhance the location determination of the conventional Wi-Fi access point (*e.g.,* **500** of FIG. **10A****)** or pseudo Wi-Fi access point (*e.g.,* **600** of FIG. **10A****).** For example, the received signal strength may be used to determine a radius of a location of a reporting wireless device (*e.g.,* **150a** of FIG. **10A****)** which may be used by itself or in combination with other location information to determine or enhance the location determination of the conventional Wi-Fi access point (*e.g.,* **500** of FIG. **10A****)** or pseudo Wi-Fi access point (*e.g.,* **600** of FIG. **10A****).** In still other embodiments, determining the location of the moveable asset (*e.g.,* **920** of FIG. **10A****)** may include using a latitude and longitude of one or more other Wi-Fi access points (*e*.*g*., other nearby **500 or 600** not shown in FIG. **10A****)** encountered by a reporting wireless device (*e.g.,* **150a** of FIG. **10A****)** at or near the time of its encounter with the conventional Wi-Fi access point (*e.g.,* **500** of FIG. **10A****)** or pseudo Wi-Fi access point (*e.g.,* **600** of FIG. **10A****)** to determine the location of the moveable asset (*e.g.,* **920** of FIG. **10A****).** Using well known Wi-Fi positioning techniques, the locations of nearby Wi-Fi access points (*e*.*g*., other nearby **500 or 600** not shown in FIG. **10A****)** may be used by itself or in combination to determine or enhance the location determination of the conventional Wi-Fi access point (*e.g.,* **500** of FIG. **10A****)** or pseudo Wi-Fi access point (*e.g.,* **600** of FIG. **10A****).** In still other embodiments, determining the location of the moveable asset (*e.g.,* **920** of FIG. **10A****)** may include using a location, a received signal strength, any of the above-noted information, or any other information related to one or more other Wi-Fi access points (*e*.*g*., other nearby **500** or **600** not shown in FIG. **10A****)** near the conventional Wi-Fi access point (*e.g.,* **500** of FIG. **10A****)** or pseudo Wi-Fi access point (*e.g.,* **600** of FIG. **10A****)** at or near the time of a reporting wireless device's (*e.g.,* **150a)** encounter with the conventional Wi-Fi access point (*e.g.,* **500** of FIG. 10A) or pseudo Wi-Fi access point (*e.g.,* **600** of FIG. **10A****)** to determine the location of the moveable asset (*e.g.,* **920** of FIG. **10A****).** Using well known Wi-Fi positioning techniques, the received signal strengths of nearby Wi-Fi access points (*e*.*g*., other nearby **500 or 600** not shown in FIG. **10A****)** may be used by itself or in combination to determine or enhance the location determination of the conventional Wi-Fi access point (*e.g.,* **500** of FIG. **10A****)** or pseudo Wi-Fi access point (*e.g.,* **600** of FIG. **10A****).**

One of ordinary skill in the art will recognize that historical location information, reporting wireless device (*e.g.,* **150a** of FIG. **10A****)** location information, conventional Wi-Fi access point (*e.g.,* **500** of FIG. **10A****)** or pseudo Wi-Fi access point (*e.g.,* **600** of FIG. **10A****)** location information, other nearby Wi-Fi access point (*e.g.,* other nearby **500** or **600** not shown in FIG. **10A****)** location information, received signal strength of the conventional Wi-Fi access point (*e.g.,* **500** of FIG. **10A****)** or pseudo Wi-Fi access point (*e.g.,* **600** of FIG. **10A****)** location information, received signal strength of other nearby Wi-Fi access point (*e.g.,* other nearby **500** or **600** not shown in FIG. **10A****)** location information, and any other information relating to the conventional Wi-Fi access point (*e.g.,* **500** of FIG. **10A****)** or pseudo Wi-Fi access point (*e.g.,* **600** of FIG. **10A****)** or nearby Wi-Fi access points (*e.g.,* other nearby **500** or **600** not shown in FIG. **10A****)** may be used, alone or in combination, with known positioning techniques, including, but not limited to, smartphone positioning, network-based positioning, hybrid positioning, GPS positioning, cellular positioning, triangulation, trilateration, time of arrival, angle of arrival, and any other positioning technique or combination of positioning techniques may be used in accordance with one or more embodiments of the present invention. Further, one of ordinary skill in the art will recognize that, the positioning technique or techniques used may vary based on the type or kind of observation data available at the time of the location determination.

The method may further include storing the location of the moveable asset (*e.g.,* **920** of FIG. **10A****)** in the asset tracking database (*e.g.,* **1010** of FIG. **10A****).** The method may further include providing a user access, via the client portal (*e.g.,* **1020** of FIG. **10A****),** to the location of the moveable asset (*e.g.,* **920** of FIG. **10A****)** stored in the asset tracking database (*e*.*g*., **1010** of FIG. **10A****).** In certain embodiments, a client portal (*e.g.,* **1020** of FIG. **10A****)** may include a software interface for querying and receiving information from the asset tracking database (*e*.*g*., **1010** of FIG. **10A****).** The client portal (*e.g.,* **1020** of FIG. **10A****)** may be part of the same computing system as that of the asset tracking database (*e*.*g*., **1010** of FIG. **10A**) or a separate and distinct computing system (*e.g.,* **1100** of FIG. **11****)** or wireless device (*e.g.,* **150**) that connects to the asset tracking database (*e*.*g*., **1010** of FIG. **10A****)** over a network connection. The client portal (*e.g.,* **1020** of FIG. **10A****)** may be a web-based portal to the asset tracking database (*e*.*g*., **1010** of FIG. **10A****)** or a stand-alone software application providing access to the asset tracking database (*e*.*g*., **1010** of FIG. **10A****)** via a network connection.

The method may further include providing one or more wireless devices (*e*.*g*., **150a** of FIG. **10A****),** from the asset tracking database (*e*.*g*., **1010** of FIG. **10A****),** with the unique identifying information of the conventional Wi-Fi access point (*e.g.,* **500** of FIG. **10A****)** or pseudo Wi-Fi access point (*e.g.,* **600** of FIG. **10A****)** to limit observation data reported by the one or more wireless devices (*e.g.,* **150a** of FIG. **10A****)** to data relevant to the conventional Wi-Fi access point (*e.g.,* **500** of FIG. **10A****)** or pseudo Wi-Fi access point (*e.g.,* **600** of FIG. **10A****)** associated with the moveable asset (*e.g.,* **920** of FIG. **10A****)** to be tracked. The one or more wireless devices (*e.g.,* **150a** of FIG. **10A****)** may limit the observation data reported directly to the asset tracking database (*e*.*g*., **1010** of FIG. **10A****)** to observation data relevant to conventional Wi-Fi access point (*e.g.,* **500** of FIG. **10A****)** or pseudo Wi-Fi access point (*e.g.,* **600** of FIG. **10A****)** associated with the moveable asset (*e.g.,* **920** of FIG. **10A****)** to be tracked. The unique identifying information may be provided at any time, including, prior to receiving observation data from the one or more wireless devices (*e.g.,* **150a** of FIG. **10A****)** that encounter the conventional Wi-Fi access point (*e.g.,* **500** of FIG. **10A****)** or pseudo Wi-Fi access point (*e.g.,* **600** of FIG. **10A****).**

The method may further include filtering, at the asset tracking database (*e*.*g*., 1010 of FIG. **10A****),** observation data received from one or more wireless devices (*e.g.,* **150a** of FIG. **10A****)** to data relevant to the conventional Wi-Fi access point (*e.g.,* **500** of FIG. **10A****)** or pseudo Wi-Fi access point (*e.g.,* **600** of FIG. **10A****)** associated with the moveable asset (*e.g.,* **920** of FIG. **10A****)** to be tracked. Filtering may be performed by the asset tracking database (*e*.*g*., **1010** of FIG. **10A****)** at any time, including, after receiving observation data from the one or more wireless devices (*e.g.,* **150a** of FIG. **10A****)** that encounter the conventional Wi-Fi access point (*e.g.,* **500** of FIG. **10A****)** or pseudo Wi-Fi access point (*e.g.,* **600** of FIG. **10A****).**

In this configuration, limiting and/or filtering observation data to data relevant to the conventional Wi-Fi access point (*e.g.,* **500** of FIG. **10A****)** or pseudo Wi-Fi access point (*e.g.,* **600** of FIG. **10A****)** associated with the moveable asset (*e.g.,* **920** of FIG. **10A****)** to be tracked may enhance tracking capabilities and reduce latency in both reporting observation data and querying the asset tracking database (*e*.*g*., **1010** of FIG. **10A****).**

In one or more embodiments of the present invention, a method of passive asset tracking with existing independent infrastructure may include disposing a Wi-Fi access point on, in, or otherwise attaching to, or integrating with, a moveable physical asset to be tracked. The Wi-Fi access point may be a conventional off-the-shelf, industrial, battery-powered, or any other type or kind of Wi-Fi access point. However, because the Wi-Fi access point does not require routing features or true Wi-Fi functionality beyond that of participating in the Wi-Fi wireless network discovery protocol, custom Wi-Fi access points that eliminate features not implemented may be used to reduce the footprint and the power consumption of such a device. In addition, devices configured to spoof the Wi-Fi wireless network discovery protocol may be used specifically for the asset tracking task. Notwithstanding, one of ordinary skill in the art will recognize that any Wi-Fi access point, or related device, capable of participating in Wi-Fi wireless network discovery protocol may be used in accordance with one or more embodiments of the present invention.

The method may further include logically associating unique identifying information of the Wi-Fi access point with the asset in an asset tracking database. The unique identifying information may be any information that uniquely identifies the Wi-Fi access point including, for example, the BSSID of the Wi-Fi access point. The asset tracking database may be any type or kind of database or software application configured to store and potentially manipulate data. The Wi-Fi access point associated with a particular moveable asset may be stored in the same or a related record in the asset tracking database or otherwise related indicating their association, specifically, using the location of the Wi-Fi access point as a proxy for the location of the asset.

The method may further include receiving information relating to a location of the Wi-Fi access point encountered by one or more wireless devices and storing at least part of the information received in the asset tracking database. In certain embodiments, the information relating to the location of the Wi-Fi access point encountered is received directly or indirectly from a Wi-Fi AP Database or third-party provider. In other embodiments, the information relating to the location of the Wi-Fi access point encountered is received directly or indirectly from one or more of the reporting wireless devices. In certain embodiments, the one or more wireless devices, or users thereof, may not be aware that they are participating in the asset tracking task. The wireless devices simply report their location and the unique identifying information of Wi-Fi access points they encounter as part of their participation in location services. In other embodiments, the one or more wireless devices may be used to intentionally participate in the asset tracking task. In all such embodiments, whenever a wireless device comes in-range of a Wi-Fi access point and receives unique identifying information about the Wi-Fi access point, the wireless device reports at least its location and the unique identifying information of the Wi-Fi access point, typically over a cellular connection, directly or indirectly to one or more of an original equipment manufacturer, an operating system developer, a location-based services provider, a Wi-Fi AP Database, or a third-party software application or database, or directly to the asset tracking database itself. The information relating to the location of the wireless device may include, for example, a time, a data, a GPS location of the reporting wireless device, a last known location of the Wi-Fi access point, the unique identifying information of other in-range Wi-Fi access points, and their respective signal strengths. One of ordinary skill in the art will recognize that other information may be used and may vary based on an application or design in accordance with one or more embodiments of the present invention. As such, the information relating to the location of the Wi-Fi access point may be received by the asset tracking database directly or indirectly from one or more wireless devices that report their location as well as the unique identifying information of one or more Wi-Fi access points that they encounter.

The method may further include tracking the location of the Wi-Fi access point, and by relation, the asset itself, in the asset tracking database. The asset tracking database may maintain a record of reports relating to the Wi-Fi access point and receive or calculate an estimated location for the Wi-Fi access point, and by relation, the asset itself. This information may be stored in the asset tracking database as the estimated current location of the asset with any other information suitable for storing in the asset tracking database. As noted above, the asset tracking database may receive information that provides an estimate of a location of the Wi-Fi access point or information that may be used to estimate the location of the Wi-Fi access point using one or more of GPS determined locations, Wi-Fi access point locations and potentially associated received signal strengths, trilateration, or triangulation. The method may further include providing a user access to information stored in the asset tracking database via a client portal. The client portal may include a software interface for querying and receiving information from the asset tracking database. The client portal may be part of the same computing system as that of the asset tracking database or a separate and distinct computing system or wireless device that connects to the asset tracking database over a network connection. In one or more embodiments of the present invention, a non-transitory computer readable medium comprising software instructions, when executed by a processor, may perform any of the above-noted methods.

In one or more embodiments of the present invention, a system for passive asset tracking with existing independent infrastructure may include a computing system having a central processing unit, a system memory, a network interface, and a storage device and a Wi-Fi access point disposed on, in, or otherwise attached to, a moveable asset to be tracked. An asset tracking database executing on the computing system may associate unique identifying information of the Wi-Fi access point with the asset. The asset tracking database may receive information relating to a location of the Wi-Fi access point identified by its unique identifying information transmitted as part of Wi-Fi wireless network discovery. The asset tracking database may track the location of the Wi-Fi access point and, by relation, the associated asset.

In one or more embodiments of the present invention, a non-transitory computer readable medium comprising software instructions, when executed by a processor, may perform any of the above-noted methods in accordance with one or more embodiments of the present invention.

FIG. **11** shows a computing system **1100** in accordance with one or more embodiments of the present invention. One or more of asset tracking database (*e*.*g*., **1010** of Figure **10A****)** and client portal (*e.g.,* **1020** of Figure **10A****)** may be software applications containing software instructions that, when executed by a processor of one or more computing systems **1100,** perform one or more of the methods described herein. One of ordinary skill in the art will recognize that a computing system **1100** disclosed herein is merely exemplary of a computing system that may be used to execute any of the above-noted software methods and other computing systems that are well known in the art may be used in accordance with one or more embodiments of the present invention.

Computing system **1100** may include one or more central processing units, sometimes referred to as processors (hereinafter referred to in the singular as "CPU" or plural as "CPUs") **1105,** host bridge **1110,** input/output ("IO") bridge **1115,** graphics processing units (singular "GPU" or plural "GPUs") **1125,** and/or application-specific integrated circuits (singular "ASIC or plural "ASICs") (not shown) disposed on one or more printed circuit boards (not shown) that perform computational operations. Each of the one or more CPUs **1105,** GPUs **1125,** or ASICs (not shown) may be a single-core (not independently illustrated) device or a multi-core (not independently illustrated) device. Multi-core devices typically include a plurality of cores (not shown) disposed on the same physical die (not shown) or a plurality of cores (not shown) disposed on multiple die (not shown) that are collectively disposed within the same mechanical package (not shown).

CPU **1105** may be a general-purpose computational device typically configured to execute software instructions. CPU **1105** may include an interface **1108** to host bridge **1110,** an interface **FIG** to system memory **1120,** and an interface **1123** to one or more IO devices, such as, for example, one or more GPUs **1125.** GPU **1125** may serve as a specialized computational device typically configured to perform graphics functions related to frame buffer manipulation. However, one of ordinary skill in the art will recognize that GPU **1125** may be used to perform non-graphics related functions that are computationally intensive. In certain embodiments, GPU **1125** may interface **1123** directly with CPU **1105** (and interface **1118** with system memory **1120** through CPU **1105).** In other embodiments, GPU **1125** may interface **1121** with host bridge **1110** (and interface **1116** or **1118** with system memory **1120** through host bridge **1110** or CPU **1105** depending on the application or design). In still other embodiments, GPU **1125** may interface **1133** with IO bridge **1115** (and interface **1116** or **1118** with system memory **1120** through host bridge **1110** or CPU **1105** depending on the application or design). The functionality of GPU **1125** may be integrated, in whole or in part, with CPU **1105.**

Host bridge **1110** may be an interface device that interfaces between the one or more computational devices and IO bridge **1115** and, in some embodiments, system memory **1120.** Host bridge **1110** may include an interface **1108** to CPU **1105,** an interface **1113** to IO bridge **1115,** for embodiments where CPU **1105** does not include an interface **1118** to system memory **1120,** an interface **1116** to system memory **1120,** and for embodiments where CPU **1105** does not include an integrated GPU **1125** or an interface **1123** to GPU **1125,** an interface **1121** to GPU **1125.** The functionality of host bridge **1110** may be integrated, in whole or in part, with CPU **1105.** IO bridge **1115** may be an interface device that interfaces between the one or more computational devices and various IO devices (*e.g.,* **1140, 1145)** and IO expansion, or add-on, devices (not independently illustrated). IO bridge **1115** may include an interface **1113** to host bridge **1110,** one or more interfaces **1133** to one or more IO expansion devices **1135,** an interface **1138** to keyboard **1140,** an interface **1143** to mouse **1145,** an interface **1148** to one or more local storage devices **1150,** and an interface **1153** to one or more network interface devices **1155.** The functionality of IO bridge **1115** may be integrated, in whole or in part, with CPU **1105** and/or host bridge **1110.** Each local storage device **1150,** if any, may be a solid-state memory device, a solid-state memory device array, a hard disk drive, a hard disk drive array, or any other non-transitory computer readable medium. Network interface device **1155** may provide one or more network interfaces including any network protocol suitable to facilitate networked communications.

Computing system **1100** may include one or more network-attached storage devices **1160** in addition to, or instead of, one or more local storage devices **1150.** Each network-attached storage device **1160,** if any, may be a solid-state memory device, a solid-state memory device array, a hard disk drive, a hard disk drive array, or any other non-transitory computer readable medium. Network-attached storage device **1160** may or may not be collocated with computing system **1100** and may be accessible to computing system **1100** via one or more network interfaces provided by one or more network interface devices **1155.**

One of ordinary skill in the art will recognize that computing system **1100** may be a conventional computing system or an application-specific computing system (not shown). In certain embodiments, an application-specific computing system (not shown) may include one or more ASICs (not shown) that perform one or more specialized functions in a more efficient manner. The one or more ASICs (not shown) may interface directly with CPU **1105,** host bridge **1110,** or GPU **1125** or interface through IO bridge **1115.** Alternatively, in other embodiments, an application-specific computing system (not shown) may be reduced to only those components necessary to perform a desired function in an effort to reduce one or more of chip count, printed circuit board footprint, thermal design power, and power consumption. The one or more ASICs (not shown) may be used instead of one or more of CPU **1105,** host bridge **1110,** IO bridge **1115,** or GPU **1125.** In such systems, the one or more ASICs may incorporate sufficient functionality to perform certain network and computational functions in a minimal footprint with substantially fewer component devices.

As such, one of ordinary skill in the art will recognize that CPU **1105,** host bridge **1110,** IO bridge **1115,** GPU **1125,** or ASIC (not shown) or a subset, superset, or combination of functions or features thereof, may be integrated, distributed, or excluded, in whole or in part, based on an application, design, or form factor in accordance with one or more embodiments of the present invention. Thus, the description of computing system **1100** is merely exemplary and not intended to limit the type, kind, or configuration of component devices that constitute a computing system **1100** suitable for executing software methods in accordance with one or more embodiments of the present invention. Notwithstanding the above, one of ordinary skill in the art will recognize that computing system **1100** may be a standalone, laptop, desktop, industrial, server, blade, or rack mountable system and may vary based on an application or design.

Advantages of one or more embodiments of the present invention may include one or more of the following:
In one or more embodiments of the present invention, a method and system for passive asset tracking using observations of one or more pseudo Wi-Fi access points allows for passively tracking moveable assets by one or more potentially unrelated wireless devices that are in-range of assets broadcasting Wi-Fi signals even though the wireless device, or user thereof, may not even know they are participating in the asset tracking task. In this way, every smartphone in the vicinity of an asset that is desired to be tracked may, anonymously, and without awareness, participate in the asset tracking task.

In one or more embodiments of the present invention, a method and system for passive asset tracking using observations of one or more pseudo Wi-Fi access points leverage already existing devices, systems, and networks to passively track the location of assets without requiring the asset itself to have any connectivity to the Internet or other network connection.

In one or more embodiments of the present invention, a method and system for passive asset tracking using observations of one or more pseudo Wi-Fi access points uses one or more pseudo Wi-Fi access points, that do not require connectivity to any particular network, to identify one or more assets in the field using Wi-Fi wireless network discovery and Wi-Fi access point reporting features of modern smartphones and location services to passively identify the location of the one or more assets. The moveable assets may be passively tracked by one or more wireless devices that may be independent and unrelated whenever any one or more of the wireless devices merely come into range of an asset associated with a pseudo Wi-Fi access point broadcasting Wi-Fi signals, without any intent or awareness on the part of the wireless device, or user thereof, that they are participating in the asset tracking task due to the nature of the Wi-Fi wireless network discovery protocol.

In one or more embodiments of the present invention, a method and system for passive asset tracking using observations of one or more pseudo Wi-Fi access points leverages existing infrastructure inherent in smartphones, operating systems, and software applications to report their location as well as the unique identifying information of Wi-Fi access points they encounter for improving the accuracy of location-based services for the asset tracking task without their awareness.

In one or more embodiments of the present invention, a method and system for passive asset tracking using observations of one or more pseudo Wi-Fi access points uses the Wi-Fi wireless network discovery protocol as well as the Wi-Fi access point reporting feature of smartphones to passively track assets associated with pseudo Wi-Fi access points by one or more wireless devices without requiring that the wireless devices associate with any particular pseudo Wi-Fi access point, using publicly accessibly Wi-Fi signals, and in passive scanning applications, completely anonymously with respect to the asset tracking task.

In one or more embodiments of the present invention, a method and system for passive asset tracking using observations of one or more pseudo Wi-Fi access points, a pseudo Wi-Fi access point associated with an asset does not require any connectivity to the Internet or any other network connection and does not require a GPS receiver, relying instead on the one or more wireless devices to report the time, date, and relative location of the in-range pseudo Wi-Fi access point associated with the asset.

In one or more embodiments of the present invention, a method and system for passive asset tracking using observations of one or more pseudo Wi-Fi access points, an asset tracking database receives unique information identifying and information relating to the location of one or more pseudo Wi-Fi access points received directly or indirectly from one or more wireless devices or a Wi-Fi AP Database. The location of the asset may be tracked in the asset tracking database by the location of the pseudo Wi-Fi access point.

In one or more embodiments of the present invention, a method and system for passive asset tracking using observations of one or more pseudo Wi-Fi access points may use a pseudo Wi-Fi access point that allows for the assignment of alternative meanings to various parts of the beacon frame or probe response corresponding to attributes of the pseudo Wi-Fi access point or asset physically and logically associated with it.

In one or more embodiments of the present invention, a method and system for passive asset tracking using observations of one or more pseudo Wi-Fi access points reduces theft by providing a trackable asset without conventional asset tracking hardware or software systems. If the perpetrator of the theft moves a trackable asset within range of any one or more wireless devices, the discovery of the pseudo Wi-Fi access point will be reported, and the asset tracking database will be able to locate the associated asset without the perpetrator knowing that the asset has been tracked.

In one or more embodiments of the present invention, a method and system for passive asset tracking using observations of one or more pseudo Wi-Fi access points substantially reduces the complexity and cost associated with deploying a comprehensive asset tracking system. As opposed to conventional asset tracking systems, one or more wireless devices, which may be completely independent of and unrelated to the asset tracking task, serve as the tracking infrastructure.

While the present invention has been described with respect to the above-noted embodiments, those skilled in the art, having the benefit of this disclosure, will recognize that other embodiments may be devised that are within the scope of the invention as disclosed herein. Accordingly, the scope of the invention should be limited only by the appended claims.

## Claims

1. A method of passive asset tracking comprising:
associating, in an asset tracking database (1010), unique identifying information of a pseudo Wi-Fi access point (600) with a moveable asset (920, 930, 940, 950) to be tracked,
wherein the pseudo Wi-Fi access point (600) is disposed on, attached to, or integrated with the moveable asset (920, 930, 940, 950),
wherein one or more indirect reporting wireless devices (150) that encounter the pseudo Wi-Fi access point (600) report observation data including the unique identifying information of the pseudo Wi-Fi access point (600) and second location information of the pseudo Wi-Fi access point (600) to a Wi-Fi AP Database (1030),
wherein there is no communication between the asset tracking database (1010) and the one or more indirect reporting wireless devices (150) that report encounters with the pseudo Wi-Fi access point (600) to the Wi-Fi AP Database (1030), and
wherein the one or more indirect reporting wireless devices (150) are not required to authenticate to, associate with, or establish connectivity with any particular Wi-Fi access point (600);
receiving, at the asset tracking database (1010), second observation data from the Wi-Fi AP Database (1030) comprising the unique identifying information of the pseudo Wi-Fi access point (600) and the second location information of the pseudo Wi-Fi access point (600);
determining, at the asset tracking database(1010), a location of the moveable asset (150) based, at least in part, on the second observation data of the pseudo Wi-Fi access point (600) received from the Wi-Fi AP Database (1030); and
providing a user of the asset tracking database (1010) the location of the moveable asset (920, 930, 940, 950).

2. A method of passive asset tracking comprising:
associating, at an asset tracking database (1010), unique identifying information of a pseudo Wi-Fi access point (600) with a moveable asset (920, 930, 940, 950) to be tracked;
wherein the pseudo Wi-Fi access point (600) is disposed on, attached to, or integrated with the moveable asset (920, 930, 940, 950),
wherein one or more indirect reporting wireless devices (150) that encounter the pseudo Wi-Fi access point (600) report second observation data including the unique identifying information of the pseudo Wi-Fi access point (600) and second location information of the pseudo Wi-Fi access point (600) to a Wi-Fi AP Database (1030),
wherein there is no communication between the asset tracking database (1010) and the one or more indirect reporting wireless devices (150) that report encounters with the pseudo Wi-Fi access point (600) to the Wi-Fi AP Database (1030);
receiving, at the asset tracking database (1010), first observation data from one or more direct reporting wireless devices(150) that encounter the pseudo Wi-Fi access point (600) comprising the unique identifying Information of the pseudo Wi-Fi access point (600) and first location information of the pseudo Wi-Fi access point (600); wherein the one or more indirect reporting wireless devices (150) and the one or more direct reporting wireless devices (150) are not required to authenticate to, associate with, or establish connectivity with any particular Wi-Fi access point (600);
receiving, at the asset tracking database (1010), second observation data from the Wi-Fi AP Database (130) comprising the unique identifying information of the pseudo Wi-Fi access point (600) and the second location information of the pseudo Wi-Fi access point (600);
determining, at the asset tracking database (1010), a location of the moveable asset (920, 930, 940, 950) based, at least in part, on the first and/or the second observation data of the pseudo Wi-Fi access point (600), and
providing a user of the asset tracking database (1010) the location of the moveable asset (920, 930, 940, 950).

3. The method of claim 1 or claim 2, further comprising:
storing the location of the moveable asset (920, 930, 940, 950)in the asset tracking database (1010).

4. The method of claim 1 or claim 2, wherein the unique identifying information of the pseudo Wi-Fi access point (600) comprises a BSSID of the pseudo Wi-Fi access point (600).

5. The method of claim 1 or claim 2, wherein the location information of the pseudo Wi-Fi access point (600) comprises a latitude and a longitude of the pseudo Wi-Fi access point (600).

6. The method of claim 1 or claim 2, wherein the location information of the pseudo Wi-Fi access point (600) comprises a latitude and a longitude of the reporting wireless device (150) at or near the time of the encounter with the pseudo Wi-Fi access point (600).

7. The method of claim 1 or claim 2, wherein the location information of the pseudo Wi-Fi access point (600) comprises a received signal strength of the pseudo Wi-Fi access point (600) measured by the reporting wireless device (150) at or near the time of the encounter with the pseudo Wi-Fi access point (600).

8. The method of claim 1 or claim 2, wherein the location information of the pseudo Wi-Fi access point (600) comprises a latitude and a longitude of one or more Wi-Fi access points (500) or other pseudo Wi-Fi access points (600) near the pseudo Wi-Fi access point (600) at or near the time of a reporting wireless device's (150) encounter with the pseudo Wi-Fi access point (600).

9. The method of claim 1 or claim 2, wherein the location information of the pseudo Wi-Fi access point (600) comprises a received signal strength of one or more Wi-Fi access points (500) or other pseudo Wi-Fi access points (600) near the pseudo Wi-Fi access point (600) at or near the time of a reporting wireless device's (150) encounter with the pseudo Wi-Fi access point (600).

10. The method of claim 1 or claim 2, wherein determining the location of the moveable asset (920, 930, 940, 950) comprises using a latitude and longitude of the pseudo Wi-Fi access point (600) as the location of the moveable asset (920, 930, 940, 950).

11. The method of claim 1 or claim 2, wherein determining the location of the moveable asset (920, 930, 940, 950) comprises using a latitude and longitude of a reporting wireless device (150) as the location of the moveable asset (920, 930, 940, 950).

12. The method of claim 1 or claim 2, wherein determining the location of the moveable asset comprises using a received signal strength of the pseudo Wi-Fi access point measured by a reporting wireless device at or near the time of its encounter with the pseudo Wi-Fi access point to determine the location of the moveable asset.

13. The method of claim 1 or claim 2, wherein determining the location of the moveable asset (920, 930, 940, 950) comprises using a latitude and longitude of one or more Wi-Fi access points (500) or other pseudo Wi-Fi access points (600) encountered by a reporting wireless device (150) at or near the time of its encounter with the pseudo Wi-Fi access point (600) to determine the location of the moveable asset (920, 930, 940, 950).

14. The method of claim 1 or claim 2, wherein determining the location of the moveable asset (920, 930, 940, 950) comprises using a received signal strength of one or more Wi-Fi access points (500) or other pseudo Wi-Fi access points (600) measured by a reporting wireless device (150) at or near the time of its encounter with the pseudo Wi-Fi access point (600) to determine the location of the moveable asset (920, 930, 940, 950).

## Patentansprüche

1. Verfahren zur passiven Asset-Verfolgung, umfassend:
Zuordnen, in einer Asset-Verfolgungsdatenbank (1010), von eindeutigen Identifizierungsinformationen eines Pseudo-Wi-Fi-Zugangspunkts (600) zu einem zu verfolgenden beweglichen Asset (920, 930, 940, 950),
wobei der Pseudo-Wi-Fi-Zugangspunkt (600) auf dem beweglichen Asset (920, 930, 940, 950) angeordnet, daran befestigt oder in dieses integriert ist,
wobei eine oder mehrere indirekt meldende drahtlose Vorrichtungen (150), die auf den Pseudo-Wi-Fi-Zugangspunkt (600) treffen, Beobachtungsdaten einschließlich der eindeutigen Identifizierungsinformationen des Pseudo-Wi-Fi-Zugangspunkts (600) und zweite Standortinformationen des Pseudo-Wi-Fi-Zugangspunkts (600) an eine Wi-Fi-AP-Datenbank (1030) melden,
wobei es keine Kommunikation zwischen der Asset-Verfolgungsdatenbank (1010) und der einen oder mehreren indirekt meldenden drahtlosen Vorrichtungen (150) gibt, die Begegnungen mit dem Pseudo-Wi-Fi-Zugangspunkt (600) an die Wi-Fi-Zugangsdatenbank (1030) melden, und
wobei eine oder mehrere indirekt meldende drahtlose Vorrichtungen (150) sich nicht bei einem bestimmten Wi-Fi-Zugangspunkt (600) authentifizieren, assoziieren oder eine Verbindung zu diesem herstellen müssen;
Empfangen von zweiten Beobachtungsdaten aus der Wi-Fi-AP-Datenbank (1030) in der Asset-Verfolgungsdatenbank (1010), die die eindeutigen Identifizierungsinformationen des Pseudo-Wi-Fi-Zugangspunkts (600) und Standortinformationen des Pseudo-Wi-Fi-Zugangspunkts (600) umfassen;
Bestimmen, in der Asset-Verfolgungsdatenbank (1010), eines Standorts des beweglichen Assets (150) mindestens teilweise basierend auf den zweiten Beobachtungsdaten des Pseudo-Wi-Fi-Zugangspunkts (600), die von der Wi-Fi-AP-Datenbank (1030) empfangen wurden; und
Bereitstellen des Standorts des beweglichen Assets (920, 930, 940, 950) für einen Benutzer der Asset-Verfolgungsdatenbank (1010).

2. Verfahren zur passiven Asset-Verfolgung, umfassend:
Zuordnen, in einer Asset-Verfolgungsdatenbank (1010), von eindeutigen Identifizierungsinformationen eines Pseudo-Wi-Fi-Zugangspunkts (600) zu einem zu verfolgenden beweglichen Asset (920, 930, 940, 950);
wobei der Pseudo-Wi-Fi-Zugangspunkt (600) auf dem beweglichen Asset (920, 930, 940, 950) angeordnet, daran befestigt oder in dieses integriert ist,
wobei eine oder mehrere indirekt meldende drahtlose Vorrichtungen (150), die auf den Pseudo-Wi-Fi-Zugangspunkt (600) treffen, zweite Beobachtungsdaten einschließlich der eindeutigen Identifizierungsinformationen des Pseudo-Wi-Fi-Zugangspunkts (600) und zweite Standortinformationen des Pseudo-Wi-Fi-Zugangspunkts (600) an eine Wi-Fi-AP-Datenbank (1030) melden,
wobei es keine Kommunikation zwischen der Asset-Verfolgungsdatenbank (1010) und der einen oder mehreren indirekt meldenden drahtlosen Vorrichtungen (150) gibt, die Begegnungen mit dem Pseudo-Wi-Fi-Zugangspunkt (600) an die Wi-Fi AP-Datenbank (1030) melden;
Empfangen von ersten Beobachtungsdaten in der Asset-Verfolgungsdatenbank (1010) von einer oder mehreren direkt meldenden drahtlosen Vorrichtungen (150), die auf den Pseudo-Wi-Fi-Zugangspunkt (600) treffen, die die eindeutigen Identifizierungsinformationen des Pseudo-Wi-Fi-Zugangspunkts (600) und erste Standortinformationen des Pseudo-Wi-Fi-Zugangspunkts (600) umfassen; wobei die eine oder die mehreren indirekt meldenden drahtlosen Vorrichtungen (150) und die eine oder die mehreren direkt meldenden drahtlosen Vorrichtungen (150) nicht verpflichtet sind, sich bei einem bestimmten Wi-Fi-Zugangspunkt (600) zu authentifizieren, sich mit ihm zu verbinden oder eine Verbindung zu ihm herzustellen;
Empfangen von zweiten Beobachtungsdaten aus der Wi-Fi-AP-Datenbank (130) in der Asset-Verfolgungsdatenbank (1010), die die eindeutigen Identifizierungsinformationen des Pseudo-Wi-Fi-Zugangspunkts (600) und die zweiten Standortinformationen des Pseudo-Wi-Fi-Zugangspunkts (600) umfassen;
Bestimmen, in der Asset-Verfolgungsdatenbank (1010), eines Standorts des beweglichen Assets (920, 930, 940, 950), mindestens teilweise basierend auf den ersten und/oder den zweiten Beobachtungsdaten des Pseudo-Wi-Fi-Zugangspunkts (600), und
Bereitstellen des Standorts des beweglichen Assets (920, 930, 940, 950) für einen Benutzer der Asset-Verfolgungsdatenbank (1010).

3. Verfahren nach Anspruch 1 oder 2, ferner umfassend: Speichern des Standorts des beweglichen Assets (920, 930, 940, 950) in der Asset-Verfolgungsdatenbank (1010).

4. Verfahren nach Anspruch 1 oder 2, wobei die eindeutigen Identifizierungsinformationen des Pseudo-Wi-Fi-Zugangspunkts (600) eine BSSID des Pseudo-Wi-Fi-Zugangspunkts (600) umfassen.

5. Verfahren nach Anspruch 1 oder 2, wobei die Standortinformationen des Pseudo-Wi-Fi-Zugangspunkts (600) einen Breitengrad und einen Längengrad des Pseudo-Wi-Fi-Zugangspunkts (600) umfassen.

6. Verfahren nach Anspruch 1 oder 2, wobei die Standortinformationen des Pseudo-Wi-Fi-Zugangspunkts (600) einen Breitengrad und einen Längengrad der meldenden drahtlosen Vorrichtung (150) zum oder in der Nähe des Zeitpunkts der Begegnung mit dem Pseudo-Wi-Fi-Zugangspunkt (600) umfassen.

7. Verfahren nach Anspruch 1 oder 2, wobei die Standortinformationen des Pseudo-Wi-Fi-Zugangspunkts (600) eine empfangene Signalstärke des Pseudo-Wi-Fi-Zugangspunkts (600) umfassen, die von der meldenden drahtlosen Vorrichtung (150) zum oder nahe dem Zeitpunkt der Begegnung mit dem Pseudo-Wi-Fi-Zugangspunkt (600) gemessen wurde.

8. Verfahren nach Anspruch 1 oder 2, wobei die Standortinformationen des Pseudo-Wi-Fi-Zugangspunkts (600) einen Breitengrad und einen Längengrad eines oder mehrerer Wi-Fi-Zugangspunkte (500) oder anderer Pseudo-Wi-Fi-Zugangspunkte (600) in der Nähe des Pseudo-Wi-Fi-Zugangspunkts (600) zum Zeitpunkt oder in der Nähe der Begegnung einer meldenden drahtlosen Vorrichtung (150) mit dem Pseudo-Wi-Fi-Zugangspunkt (600) umfassen.

9. Verfahren nach Anspruch 1 oder 2, wobei die Standortinformationen des Pseudo-Wi-Fi-Zugangspunkts (600) eine empfangene Signalstärke eines oder mehrerer Wi-Fi-Zugangspunkte (500) oder anderer Pseudo-Wi-Fi-Zugangspunkte (600) in der Nähe des Pseudo-Wi-Fi-Zugangspunkts (600) zum Zeitpunkt oder in der Nähe der Begegnung einer meldenden drahtlosen Vorrichtung (150) mit dem Pseudo-Wi-Fi-Zugangspunkt (600) umfassen.

10. Verfahren nach Anspruch 1 oder 2, wobei das Bestimmen des Standorts des beweglichen Assets (920, 930, 940, 950) die Verwendung eines Breitengrads und Längengrads des Pseudo-Wi-Fi-Zugangspunkts (600) als Standort des beweglichen Assets (920, 930, 940, 950) umfasst.

11. Verfahren nach Anspruch 1 oder 2, wobei das Bestimmen des Standorts des beweglichen Assets (920, 930, 940, 950) die Verwendung eines Breitengrads und Längengrads einer meldenden drahtlosen Vorrichtung (150) als Standort des beweglichen Assets (920, 930, 940, 950) umfasst.

12. Verfahren nach Anspruch 1 oder 2, wobei das Bestimmen des Standorts des beweglichen Assets die Verwendung einer empfangenen Signalstärke des Pseudo-Wi-Fi-Zugangspunkts umfasst, die von einer meldenden drahtlosen Vorrichtung zu oder nahe dem Zeitpunkt ihrer Begegnung mit dem Pseudo-Wi-Fi-Zugangspunkt gemessen wurde, um den Standort des beweglichen Assets zu bestimmen.

13. Verfahren nach Anspruch 1 oder 2, wobei das Bestimmen des Standorts des beweglichen Assets (920, 930, 940, 950) die Verwendung eines Breitengrads und eines Längengrads eines oder mehrerer Wi-Fi-Zugangspunkte (500) oder anderer Pseudo-Wi-Fi-Zugangspunkte (600) umfasst, die von einer meldenden drahtlosen Vorrichtung (150) zum Zeitpunkt oder in der Nähe ihres Zusammentreffens mit dem Pseudo-Wi-Fi-Zugangspunkt (600) angetroffen wurden, um den Standort des beweglichen Assets (920, 930, 940, 950) zu bestimmen.

14. Verfahren nach Anspruch 1 oder 2, wobei das Bestimmen des Standorts des beweglichen Assets (920, 930, 940, 950) die Verwendung einer empfangenen Signalstärke eines oder mehrerer Wi-Fi-Zugangspunkte (500) oder anderer Pseudo-Wi-Fi-Zugangspunkte (600) umfasst, die von einer meldenden drahtlosen Vorrichtung (150) zum oder nahe dem Zeitpunkt ihrer Begegnung mit dem Pseudo-Wi-Fi-Zugangspunkt (600) gemessen wurde, um den Standort des beweglichen Assets (920, 930, 940, 950) zu bestimmen.

## Revendications

1. Procédé de suivi passif des actifs comprenant :
l'association, dans une base de données de suivi des actifs (1010), des informations d'identification uniques d'un pseudo-point d'accès Wi-Fi (600) à un actif mobile (920, 930, 940, 950) à suivre,
dans lequel le pseudo-point d'accès Wi-Fi (600) est disposé sur, fixé à ou intégré à l'actif mobile (920, 930, 940, 950),
dans lequel un ou plusieurs dispositifs sans fil de signalement indirect (150) qui rencontrent le pseudo-point d'accès Wi-Fi (600) signalent des données d'observation comportant les informations d'identification uniques du pseudo-point d'accès Wi-Fi (600) et les secondes informations de localisation du pseudo-point d'accès Wi-Fi (600) à une base de données de points d'accès Wi-Fi (1030),
dans lequel aucune communication n'existe entre la base de données de suivi des actifs (1010) et le ou les dispositifs sans fil de signalement indirect (150) qui signalent les rencontres avec le pseudo-point d'accès Wi-Fi (600) à la base de données de points d'accès Wi-Fi (1030), et dans lequel un ou plusieurs dispositifs sans fil de signalement indirect (150) ne sont pas tenus de s'authentifier auprès d'un point d'accès Wi-Fi particulier (600), de s'y associer ou d'établir une connexion avec celui-ci ;
la réception, au niveau de la base de données de suivi des actifs (1010), de secondes données d'observation provenant de la base de données de points d'accès Wi-Fi (1030) comprenant les informations d'identification uniques du pseudo-point d'accès Wi-Fi (600) et les informations de localisation du pseudo-point d'accès Wi-Fi (600) ;
la détermination, au niveau de la base de données de suivi des actifs (1010), d'une localisation de l'actif mobile (150) sur la base, au moins en partie, des secondes données d'observation du pseudo-point d'accès Wi-Fi (600) reçues de la base de données de points d'accès Wi-Fi (1030) ; et
la fourniture à un utilisateur de la base de données de suivi des actifs (1010) de la localisation de l'actif mobile (920, 930, 940, 950).

2. Procédé de suivi passif des actifs comprenant :
l'association, au niveau d'une base de données de suivi des actifs (1010), des informations d'identification uniques d'un pseudo-point d'accès Wi-Fi (600) à un actif mobile (920, 930, 940, 950) à suivre ;
dans lequel le pseudo-point d'accès Wi-Fi (600) est disposé sur, fixé à ou intégré à l'actif mobile (920, 930, 940, 950),
dans lequel un ou plusieurs dispositifs sans fil de signalement indirect (150) qui rencontrent le pseudo-point d'accès Wi-Fi (600) signalent des secondes données d'observation comportant les informations d'identification uniques du pseudo-point d'accès Wi-Fi (600) et les secondes informations de localisation du pseudo-point d'accès Wi-Fi (600) à une base de données de points d'accès Wi-Fi (1030),
dans lequel aucune communication n'existe entre la base de données de suivi des actifs (1010) et le ou les dispositifs sans fil de signalement indirect (150) qui signalent les rencontres avec le pseudo-point d'accès Wi-Fi (600) à la base de données de points d'accès Wi-Fi (1030) ;
la réception, au niveau de la base de données de suivi des actifs (1010), de premières données d'observation provenant d'un ou plusieurs dispositifs sans fil de signalement direct (150) qui rencontrent le pseudo-point d'accès Wi-Fi (600) comprenant les informations d'identification uniques du pseudo-point d'accès Wi-Fi (600) et les premières informations de localisation du pseudo-point d'accès Wi-Fi (600) ; dans lequel le ou les dispositifs sans fil de signalement indirect (150) et le ou les dispositifs sans fil de signalement direct (150) ne sont pas tenus de s'authentifier auprès d'un point d'accès Wi-Fi particulier (600), de s'y associer ou d'établir une connectivité avec celui-ci ;
la réception, au niveau de la base de données de suivi des actifs (1010), de secondes données d'observation provenant de la base de données de points d'accès Wi-Fi (130) comprenant les informations d'identification uniques du pseudo-point d'accès Wi-Fi (600) et les secondes informations de localisation du pseudo-point d'accès Wi-Fi (600) ;
la détermination, au niveau de la base de données de suivi des actifs (1010), d'une localisation de l'actif mobile (920, 930, 940, 950) sur la base, au moins en partie, des premières et/ou des secondes données d'observation du pseudo-point d'accès Wi-Fi (600), et
la fourniture à un utilisateur de la base de données de suivi des actifs (1010) de la localisation de l'actif mobile (920, 930, 940, 950).

3. Procédé selon la revendication 1 ou la revendication 2, comprenant en outre :
le stockage de la localisation de l'actif mobile (920, 930, 940, 950) dans la base de données de suivi des actifs (1010).

4. Procédé selon la revendication 1 ou la revendication 2, dans lequel les informations d'identification uniques du pseudo-point d'accès Wi-Fi (600) comprennent un BSSID du pseudo-point d'accès Wi-Fi (600).

5. Procédé selon la revendication 1 ou la revendication 2, dans lequel les informations de localisation du pseudo-point d'accès Wi-Fi (600) comprennent une latitude et une longitude du pseudo-point d'accès Wi-Fi (600).

6. Procédé selon la revendication 1 ou la revendication 2, dans lequel les informations de localisation du pseudo-point d'accès Wi-Fi (600) comprennent une latitude et une longitude du dispositif sans fil de signalement (150) au moment ou à proximité du moment de la rencontre avec le pseudo-point d'accès Wi-Fi (600).

7. Procédé selon la revendication 1 ou la revendication 2, dans lequel les informations de localisation du pseudo-point d'accès Wi-Fi (600) comprennent une intensité de signal reçu du pseudo-point d'accès Wi-Fi (600) mesurée par le dispositif sans fil de signalement (150) au moment ou à proximité du moment de la rencontre avec le pseudo-point d'accès Wi-Fi (600).

8. Procédé selon la revendication 1 ou la revendication 2, dans lequel les informations de localisation du pseudo-point d'accès Wi-Fi (600) comprennent une latitude et une longitude d'un ou plusieurs points d'accès Wi-Fi (500) ou d'autres pseudo-points d'accès Wi-Fi (600) à proximité du pseudo-point d'accès Wi-Fi (600) au moment ou à proximité du moment d'une rencontre d'un dispositif sans fil de signalement (150) avec le pseudo-point d'accès Wi-Fi (600).

9. Procédé selon la revendication 1 ou la revendication 2, dans lequel les informations de localisation du pseudo-point d'accès Wi-Fi (600) comprennent une intensité de signal reçu d'un ou plusieurs points d'accès Wi-Fi (500) ou d'autres pseudo-points d'accès Wi-Fi (600) à proximité du pseudo-point d'accès Wi-Fi (600) au moment ou à proximité du moment d'une rencontre d'un dispositif sans fil de signalement (150) avec le pseudo-point d'accès Wi-Fi (600).

10. Procédé selon la revendication 1 ou la revendication 2, dans lequel la détermination de la localisation de l'actif mobile (920, 930, 940, 950) comprend l'utilisation d'une latitude et d'une longitude du pseudo-point d'accès Wi-Fi (600) comme localisation de l'actif mobile (920, 930, 940, 950).

11. Procédé selon la revendication 1 ou la revendication 2, dans lequel la détermination de la localisation de l'actif mobile (920, 930, 940, 950) comprend l'utilisation d'une latitude et d'une longitude d'un dispositif sans fil de signalement (150) comme localisation de l'actif mobile (920, 930, 940, 950).

12. Procédé selon la revendication 1 ou la revendication 2, dans lequel la détermination de la localisation de l'actif mobile comprend l'utilisation d'une intensité de signal reçu du pseudo-point d'accès Wi-Fi mesurée par un dispositif sans fil de signalement au moment ou à proximité du moment de sa rencontre avec le pseudo-point d'accès Wi-Fi pour déterminer la localisation de l'actif mobile.

13. Procédé selon la revendication 1 ou la revendication 2, dans lequel la détermination de la localisation de l'actif mobile (920, 930, 940, 950) comprend l'utilisation d'une latitude et d'une longitude d'un ou plusieurs points d'accès Wi-Fi (500) ou d'autres pseudo-points d'accès Wi-Fi (600) rencontrés par un dispositif sans fil de signalement (150) au moment ou à proximité du moment de sa rencontre avec le pseudo-point d'accès Wi-Fi (600) pour déterminer la localisation de l'actif mobile (920, 930, 940, 950).

14. Procédé selon la revendication 1 ou la revendication 2, dans lequel la détermination de la localisation de l'actif mobile (920, 930, 940, 950) comprend l'utilisation d'une intensité de signal reçu d'un ou plusieurs points d'accès Wi-Fi (500) ou d'autres pseudo-points d'accès Wi-Fi (600) mesurée par un dispositif sans fil de signalement (150) au moment ou à proximité du moment de sa rencontre avec le pseudo-point d'accès Wi-Fi (600) pour déterminer la localisation de l'actif mobile (920, 930, 940, 950).
